# EUROPEAN PATENT APPLICATION

(11) **EP 3 343 396 A1**
(43) Date of publication of application: **04.07.2018**
(21) Application number: 16838935.1
(22) Date of filing: 07.07.2016
(51) Int. Cl.: G06F 17/30

(54) **DATABASE MANAGEMENT DEVICE AND METHOD THEREFOR**

(30) Priority: 26.08.2015 JP 2015166698; 26.04.2016 JP 2016087849
(71) Applicant: Katayama, Shigemasa, Adachi-ku, Tokyo 120-0002 (JP)
(72) Inventor: Katayama, Shigemasa, Adachi-ku, Tokyo 120-0002 (JP)
(74) Representative: Witte, Weller & Partner Patentanwälte mbB
(86) International application number: PCT/JP2016/070089
(87) International publication number: WO 2017/033588

(57) **Abstract**

[Problem to be Solved]

To obtain data in which a plurality of pieces of knowledge is linked with a simple data structure.

[Solution]

Plural element group data linking data 58 have a plural element group uppermost element data ID of plural element group data 50 in a field 42, an element-associated data ID in a field 43, and a focus attribute ID in a field 44. When a search request specifying a master element data ID is given, element data including the master element data are extracted, the plural element group data linking data 58 including the extracted data ID are extracted, the plural element group data 50 specified by the extracted plural element group data linking data are extracted, and element data linked to the plural element group data 50 are extracted.

## Description

### Technical Field

This invention relates to a database management system, and, more particularly, to a database management system having a novel data structure.

### Background Art

In a conventional knowledge database, the type of data is determined according to the grammar and subjected to data processing. For example, 1) the word "eat" is a verb and takes an object, and 2) the word "apple" is a noun and has attributes including color, size and production area. The types of data are organized into a table to form a data structure of a relational database having items for each word.

Patent Literature 1 (JP Hei 08-077013 A) discloses a database employing object orientation for use in place of such a relational database.

### Summary of Invention

### Technical Problem

However, in a relational database, the column structure of the table changes depending on the word used. In addition, in order to specify all the attributes of nouns, the number of columns in the table must be increased. These problems make it troublesome to add new knowledge.

In addition, even the method of Patent Literature 1 after all requires creation of classes, for example, in each time.

It is, therefore, an object of this invention to provide a database management system that can overcome the above problems and enables a knowledge database to grow easily.

### Solution to Problem

1) A database management system according to the present invention is a database management system having
   A) a table which comprises at least the following four fields a1) to a4) and in which each piece of element data comprises one record:
      a1) an element data ID field in which an element data ID of given element data is stored,
      a2) an upper element data field in which an upper element data ID which is an ID of upper element data located superior to the given element data is stored,
      a3) a link attribute element data field in which a link attribute element data ID which is an ID of link attribute element data representing a link attribute between the given element data and the upper element data is stored, and
      a4) a content element data field in which a content element data ID specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having an element data ID of the slave element data in the content element data field, an element data ID of the master element data in the upper element data field, and an element data ID representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having an element data ID of the given element data in the element data ID field and the content element data field,
         b22) the source element data having the element data ID of the master element data in the content element data field, an element data ID of the uppermost element data in the upper element data field, and an element data ID that means a source case in the link attribute element data field,
         b23) the goal element data having the element data ID of the slave element data in the content element data field, the element data ID of the uppermost element data in the upper element data field, and an element data ID that means a goal case in the link attribute element data field,
         b24) the path element data having an element data ID representing predication relationship information of the master element data to the slave element data in the content element data field, the element data ID of the uppermost element data in the upper element data field, and an element data ID that means a path case in the link attribute element data field,
      b3) the plural element group data linking data have a plural element group uppermost element data ID of the plural element group data in the content element data field, the element data ID of the element-associated data in the upper element data field, and a link attribute ID of a focus attribute representing that the plural element group uppermost element data are linked to the element-associated data in the link attribute element data field,
   the database management system comprising:
   C) extracting means which, when a search request specifying a master element data ID in the upper element data field is given, extracts element-associated data including the master element data, extracts plural element group data linking data including the element data ID of the extracted element-associated data, extracts plural element group data specified by the extracted plural element group data linking data to extract linked element data.

   It is, therefore, possible to provide a database management system in which various data are linked in a table with a common format including the element data ID field, the upper element data field, the link attribute element data field and the content element data field.
2) A database management system according to the present invention is a database management system having
   A) a table which comprises at least the following four fields a1) to a4) and in which each piece of element data comprises one record:
      a1) an element data ID field in which an element data ID of given element data is stored,
      a2) an upper element data field in which an upper element data ID which is an ID of upper element data located superior to the given element data is stored,
      a3) a link attribute element data field in which a link attribute element data ID which is an ID of link attribute element data representing a link attribute between the given element data and the upper element data is stored, and
      a4) a content element data field in which a content element data ID specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having an element data ID of the slave element data in the content element data field, an element data ID of the master element data in the upper element data field, and an element data ID representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having an element data ID of the given element data in the element data ID field and the content element data field,
         b22) the source element data having the element data ID of the master element data in the content element data field, an element data ID of the uppermost element data in the upper element data field, and an element data ID that means a source case in the link attribute element data field,
         b23) the goal element data having the element data ID of the slave element data in the content element data field, the element data ID of the uppermost element data in the upper element data field, and an element data ID that means a goal case in the link attribute element data field,
         b24) the path element data having an element data ID representing predication relationship information of the master element data to the slave element data in the content element data field, the element data ID of the uppermost element data in the upper element data field, and an element data ID that means a path case in the link attribute element data field,
         b3) the plural element group data linking data have a plural element group uppermost element data ID of the plural element group data in the content element data field, the element data ID of the element-associated data in the upper element data field, and a link attribute ID of a focus attribute representing that the plural element group uppermost element data are linked to the element-associated data in the link attribute element data field,
   the database management system comprising:
   C) writing means which, when source element data, goal element data and path element data are given as new plural element group data, performs the following steps:
      c1) a plural element group data generating step of generating plural element group uppermost element data of the source element data, the goal element data and the path element data and writing the plural element group uppermost element data together with the given source element data, goal element data and path element data in the table as plural element group data,
      c2) an element-associated data generating step of generating element-associated data having the element data ID in the content element data field of the source element data in the upper element data field, the element data ID in the content element data field of the goal element data in the content element data field, and an element data ID in an inverse relationship with the element data ID in the content element data field of the path element data in the link attribute element data field, and writing the element-associated data in the table, and
      c3) a plural element group data linking data generating step of generating plural element group data linking data having the element data ID of the generated plural element group uppermost element data in the content element data field, the element data ID of the generated element-associated data in the upper element data field, and the element data ID of the link attribute of the focus attribute in the link attribute element data field, and writing the plural element group data linking data in the table.

   It is, therefore, possible to provide a database management system in which various types of data are linked in a table with a common format including the element data ID field, the upper element data field, the link attribute element data field and the content element data field.
3) A database management system according to the present invention is a database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having element data specifying information of the given element data in the element data specifying information field and the content element data field,
         b22) the source element data having the element data specifying information of the master element data in the content element data field, element data specifying information of the uppermost element data in the upper element data field, and element data specifying information that means a source case in the link attribute element data field,
         b23) the goal element data having the element data specifying information of the slave element data in the content element data field, the element data specifying information of the uppermost element data in the upper element data field, and element data specifying information that means a goal case in the link attribute element data field,
         b24) the path element data having element data specifying information representing predication relationship information of the master element data to the slave element data in the content element data field, the element data specifying information of the uppermost element data in the upper element data field, and element data specifying information that means a path case in the link attribute element data field,
      b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
   the database management system comprising:
   C) extracting means which, when a search request specifying first element data specifying information in the content element data field is given, extracts element-associated data including the first element data, extracts plural element group data and plural element group data linking data associated with the extracted element-associated data to extract linked element data.
      It is, therefore, possible to provide a database management system in which various types of data are linked in a table with a common format including the element data specifying information field, the upper element data field, the link attribute element data field and the content element data field.
4) A database management system according to the present invention is a database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having element data specifying information of the given element data in the element data specifying information field and the content element data field,
         b22) the source element data having the element data specifying information of the master element data in the content element data field, element data specifying information of the uppermost element data in the upper element data field, and element data specifying information that means a source case in the link attribute element data field,
         b23) the goal element data having the element data specifying information of the slave element data in the content element data field, the element data specifying information of the uppermost element data in the upper element data field, and element data specifying information that means a goal case in the link attribute element data field,
         b24) the path element data having element data specifying information representing predication relationship information of the master element data to the slave element data in the content element data field, the element data specifying information of the uppermost element data in the upper element data field, and element data specifying information that means a path case in the link attribute element data field,
      b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
   the database management system comprising:
   C) writing means which, when source element data, goal element data and path element data are given as new plural element group data, generates plural element group uppermost element data and writes the plural element group uppermost element data as plural element group data, and generates and writes element-associated data and plural element group data linking data.

   It is, therefore, possible to provide a database management system in which various types of data are linked in a table with a common format including the element data specifying information field, the upper element data field, the link attribute element data field and the content element data field.
5) In the database management system according to the present invention,
   element-associated data and plural element group data linking data about the slave element data are further stored in the table,
   b1) the element-associated data about the slave element data having element data specifying information of the master element data in the content element data field, element data specifying information of the slave element data in the upper element data field, and element data specifying information representing predication relationship information which is predication relationship information of the master element data to the slave element data in the link attribute element data field,
   b2) the plural element group data linking data having the plural element group uppermost element data specifying information in the content element data field, element data specifying information of element-associated data about the slave element data in the upper element data field, and link attribute specifying information of a focus attribute representing that the given plural element group uppermost element data are linked to the given element-associated data in the link attribute element data field.

   Thus, the slave element data can be also managed in a table with a common format including the element data specifying information field, the upper element data field, the link attribute element data field and the content element data field.
6) In the database management system according to the present invention,
   the writing means stores, as weight assigning candidate element data for element data specifying information specifying each piece of the generated element-associated data and plural element group data linking data, element data specifying information of the given weight assigning candidate element data in the upper element data field, element data specifying information representing a weight in the link attribute element data field, and element data specifying information representing the degree of weight in the content element data field. Thus, element data to which weights have been added can be managed.
7) In the database management system according to the present invention,
   when the same element-associated data as the generated element-associated data have been already stored in the table, the writing means increases the degree of weight of element data specifying information in the content element data field of element-associated data associated with the stored element-associated data and having element data specifying information representing a weight in the link attribute element data field,
   the database management system further comprising extracting means which, when a search request specifying the first element data specifying information in the content element data field is given, extracts element-associated data including the first element data, and extracts plural element group data and plural element group data linking data associated with the element-associated data thereby extracting linked element data,
   wherein the extracting means extracts element-associated data with a heavier associated weight out of targets of the search request. Thus, element-associated data with a high writing frequency can be extracted.
8) In a data extraction method of a database management system according to the present invention, the database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having element data specifying information of the given element data in the element data specifying information field and the content element data field,
         b22) the source element data having the element data specifying information of the master element data in the content element data field, element data specifying information of the uppermost element data in the upper element data field, and element data specifying information that means a source case in the link attribute element data field,
         b23) the goal element data having the element data specifying information of the slave element data in the content element data field, the element data specifying information of the uppermost element data in the upper element data field, and element data specifying information that means a goal case in the link attribute element data field,
         b24) the path element data having element data specifying information representing predication relationship information of the master element data to the slave element data in the content element data field, the element data specifying information of the uppermost element data in the upper element data field, and element data specifying information that means a path case in the link attribute element data field,
      b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
   C) the database management system comprising extracting, when a search request specifying first element data specifying information in the content element data field is given, element-associated data including the first element data and extracting plural element group data and plural element group data linking data associated therewith thereby extracting linked element data.

   Thus, extraction can be made in a database management system in which various types of data are linked in a table with a common format including the element data specifying information field, the upper element data field, the link attribute element data field and the content element data field.
9) The data extraction method in a database management system according to the present invention further comprises, in addition to the extracting element-associated data including the first element data, extracting plural element group data and plural element group data linking data associated with the element-associated data. This allows for linkage extraction of even linked plural element group data.
10) A data writing method in a database management system according to the present invention is a data writing method, the database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
      wherein
      b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
      b2) the plural element group data have at least source element data, goal element data and path element data, and plural element group uppermost element data linking the source element data, the goal element data and the path element data,
         b21) the plural element group uppermost element data having element data specifying information of the given element data in the element data specifying information field and the content element data field,
         b22) the source element data having the element data specifying information of the master element data in the content element data field, element data specifying information of the uppermost element data in the upper element data field, and element data specifying information that means a source case in the link attribute element data field,
         b23) the goal element data having the element data specifying information of the slave element data in the content element data field, the element data specifying information of the uppermost element data in the upper element data field, and element data specifying information that means a goal case in the link attribute element data field,
         b24) the path element data having element data specifying information representing predication relationship information of the master element data to the slave element data in the content element data field, the element data specifying information of the uppermost element data in the upper element data field, and element data specifying information that means a path case in the link attribute element data field,
      b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
   C) the database management system comprising generating plural element group uppermost element data and writing the plural element group uppermost element data as plural element group data, and generating and writing element-associated data and plural element group data linking data when source element data, goal element data and path element data are given as new plural element group data.

   Thus, data can be written in a database management system in which various types of data are linked in a table with a common format including the element data specifying information field, the upper element data field, the link attribute element data field and the content element data field.
11) A database management system according to the present invention is a database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least an element-associated data storing part in which element-associated data are stored,
      wherein the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
      wherein
   C) when a search request specifying first element data specifying information in the content element data field is given, the database management system extracts element-associated data including the first element data to extract linked element data.

   Thus, data can be read from a database management system in which various types of data are linked in a table with a common format including the element data specifying information field, the upper element data field, the link attribute element data field and the content element data field.
12) A database management system according to the present invention is a database management system having
   A) a table which comprises at least the following four fields a1) to a4) and in which each piece of element data comprises one record:
      a1) an element data specifying information field in which element data specifying information specifying given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) a content element data field in which content element data specifying information specifying content element data representing a content of the link attribute is stored,
   B) the table having at least an element-associated data storing part in which element-associated data are stored,
      wherein the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
   the database management system comprising:
   C) writing means which, when plural element group data specifying source element data, goal element data and path element data are given, generates and writes the element-associated data.

   Thus, data can be written in a database management system in which various types of data are linked in a table with a common format including the element data specifying information field, the upper element data field, the link attribute element data field and the content element data field.
13) A database management system according to the present invention is a database management system comprising:
   A) storage means including a table which comprises at least the following five fields a1) to a5) and in which each piece of element data comprises one record:
      a1) an element data ID field in which an element data ID of given element data is stored,
      a2) an upper element data field in which an upper element data ID which is an ID of upper element data located superior to the given element data is stored,
      a3) a link attribute element data field in which a link attribute element data ID which is an ID of link attribute element data representing a link attribute between the given element data and the upper element data is stored,
      a4) an attribute value data field in which an attribute value specifying ID specifying an attribute value representing a value of the link attribute is stored, and
      a5) a referential element data field in which represented data represented by the attribute value specifying ID in the attribute value data field or an element data ID of a referential destination are/is stored,
   B) associating means which positions a record having an ID in the element data ID field of a certain record in the upper element data field as a lower record having the certain record as an upper record and associates the upper record with the lower record by defining a link attribute represented by link attribute element data in the link attribute element data field of the lower record as having an attribute value in the attribute value data field of the lower record, and
   C) reading means which reads link knowledge data in which a plurality of lower records are linked to the upper record by causing the associating means to repeat the associating,
      wherein
   D) when nothing is in the attribute value data field of the lower record, the associating means specifies a record referenced by the ID in the referential element data field, and associates the data in the referential element data field of the specified record as a label of the record having nothing in the meaning field. This allows for data management using labels.
14) In the database management system according to the present invention, the record referenced by the ID in the referential element data field has the same ID in the attribute value data field and the element data ID field and a text in the referential element data field. Thus, the text in the referential element data field can be employed as label data.
15) A database management system according to the present invention is a database management system comprising:
   A) a storage means in which a plurality of pieces of individual element data defined by at least the following four pieces of data a1) to a4):
      a1) an element data ID of given element data,
      a2) an upper element data ID, which is the ID of upper element data located superior to the given element data,
      a3) a link attribute element data ID, which is the ID of link attribute element data representing a link attribute between the given element data and the upper element data, and
      a4) an attribute value specifying ID specifying an attribute value representing a value of the link attribute,
   B) associating means which positions, for each piece of individual element data in the storage means, individual element data specified by a certain element data ID as upper individual element data and individual element data having an upper element data ID which is the same as the element data ID of the individual element data as lower individual element data, and associates the upper individual element data with the lower individual element data by defining an attribute represented by link attribute element data in the link attribute element data field of the lower individual element data as having an attribute value in the attribute value data field of the lower individual element data, and
   C) reading means which reads link knowledge data in which a plurality of pieces of lower individual element data are linked to the upper individual element data by repeating the associating, wherein
   D) the individual element data can further store represented data represented by the attribute value specifying ID or an element data ID of individual element data of the referential destination, and
      wherein
   E) when the lower individual element data do not have attribute value data and have an element data ID of individual element data referenced by the element data ID of the individual element data of the referential destination, the associating means specifies the individual element data specified by the element data ID and associates represented data of the specified individual element data as a label of the individual element data. Thus, represented data of the individual element data can be associated as a label for the individual element data.
16) In the database management system according to the present invention, the link knowledge data comprises a plurality of pieces of link knowledge data, and at least two or more pieces of individual element data among the plurality of pieces of link knowledge data stored in the storage means fulfil the following conditions:
   at least one piece of lower individual element data among a plurality of pieces of lower individual element data associated with upper individual element data of first link knowledge data do not have the attribute value data and individual element data referenced by the element data ID of individual element data of the referential destination are associated therewith; and
   at least one piece of lower individual element data among a plurality of pieces of lower individual element data associated with upper individual element data of second link knowledge data do not have the attribute value data and individual element data referenced by the element data ID of the individual element data of the referential destination are associated therewith; and the individual element data referenced are the same individual element data.

   Thus, there can be provided a knowledge database in which one label corresponds to a plurality of pieces of individual element data.
17) In the database management system according to the present invention, at least two or more pieces of individual element data among the plurality of pieces of link knowledge data stored in the storage means fulfil the following conditions:
   first and second lower individual element data among a plurality of pieces of lower individual element data associated with upper individual element data of first link knowledge data do not have the attribute value data and individual element data of the referential destinations referenced by the element data IDs of the individual element data of the referential destinations are associated therewith; and the individual element data of the referential destinations are different individual element data.
   Thus, there can be provided a knowledge database in which a plurality of labels corresponds to one pieces of individual element data.
18) In the database management system according to the present invention, at least two or more pieces of individual element data among the plurality of pieces of link knowledge data stored in the storage means fulfil the following conditions:
   first and second lower individual element data among a plurality of pieces of lower individual element data associated with upper individual element data of first link knowledge data do not have the attribute value data; individual element data of referential destinations referenced by the element data IDs of individual element data of the referential destination are associated therewith; the first and second lower individual element data are associated with individual element data of different referential destinations; and
   at least two pieces of lower individual element data among a plurality of pieces of lower individual element data associated with upper individual element data of second link knowledge data do not have the attribute value data, and one of the two pieces of lower individual element data are associated with individual element data of the referential destination with which the first lower individual element data are associated.

   Thus, there can be provided a knowledge database in which a plurality of labels corresponds to a plurality of pieces of individual element data.
19) In the database management system according to the present invention,
   individual element data of another-referential destination different from the individual element data of the referential destination are further stored, and
   the lower individual element data different from the one of the two pieces of lower individual element data among a plurality of pieces of lower individual element data associated with upper individual element data of the second link knowledge data are associated with the individual element data of another-referential destination. Thus, there can be provided a knowledge database in which the another-referential destination individual element data are referenced.
20) In the database management system according to the present invention, the lower individual element data are associated with narrative clause data in which a link attribute with individual element data further linked thereto and a value of the link attribute are defined, and the narrative clause data comprise inverse predication relationship information which is predication relationship information of the lower individual element data to the upper individual element data, and
   the associating means also extracts each pieces of narrative clause data.
   Thus, there can be provided a knowledge database in which the narrative clause data are associated with the lower individual element data.
21) The database management system according to the present invention, further comprises weight assigning means which, when an upper element ID of a reading target element, and link attribute element data in a link attribute with the upper element and an attribute value thereof are given, generates and stores a record having the element data ID of the writing target in the upper element data field, an element data ID representing a weight in the link attribute element data field and an element data ID representing the degree of weight in the attribute value data field when writing the upper element ID in the upper element data field, the link attribute element data in the link attribute element data field and the attribute value thereof in the attribute value data field. Thus, element data to which weights have been added can be managed.
22) In database management system according to the present invention, when the lower record has nothing in the attribute value data field, the weight assigning means generates and stores a record having the element data ID of the specified record in the upper element data field, an element data ID representing a weight in the link attribute element data field and an element data ID representing the degree of weight in the attribute value data field. Thus, element-associated data with a high writing frequency can be extracted.
23) A database management system according to the present invention is a database management system comprising:
   A) storage means including a table which comprises at least the following five fields a1) to a5) and in which each piece of element data comprises one record:
      a1) an element data ID field in which an element data ID of given element data is stored,
      a2) an upper element data field in which an upper element data ID which is an ID of upper element data located superior to the given element data is stored,
      a3) a link attribute element data field in which a link attribute element data ID which is an ID of link attribute element data representing a link attribute between the given element data and the upper element data is stored,
      a4) an attribute value data field in which an attribute value specifying ID specifying an attribute value representing a value of the link attribute is stored, and
      a5) a referential element data field in which represented data represented by the attribute value specifying ID in the attribute value data field or an element data ID of a referential destination are/is stored, and
   B) writing means which, when an upper element ID of a writing target element, and link attribute element data in a link attribute with the upper element and an attribute value thereof are given, writes the upper element ID in the upper element data field, the link attribute element data in the link attribute element data field and the attribute value thereof in the attribute value data field, wherein
   C) when an upper element ID of a writing target element, and link attribute element data in a link attribute with the upper element and an element data ID of a referential destination are given, the writing means writes the upper element ID in the upper element data field, the link attribute element data in the link attribute element data field, and the element data ID of the referential destination in the referential element data field. This allows for data management using labels.
24) A database management system according to the present invention is a database management system comprising:
   A) storage means including a table which comprises at least the following five fields a1) to a5) and in which each piece of element data comprises one record:
      a1) an element data specifying information field in which element data specifying information of given element data is stored,
      a2) an upper element data field in which an upper element data specifying information specifying upper element data located superior to the given element data is stored,
      a3) a link attribute element data field in which link attribute element data specifying information which is specifying link attribute element data representing a link attribute between the given element data and the upper element data is stored, and
      a4) an attribute value data field in which attribute value specifying information specifying an attribute value representing a value of the link attribute is stored, and
      a5) a referential element data field in which represented data represented by the attribute value specifying information in the attribute value data field or element data specifying information of a referential destination is stored, and
   B) writing means which, when upper element specifying information of a writing target element, and link attribute element data in a link attribute with the upper element and an attribute value thereof are given, writes the upper element specifying information in the upper element data field, the link attribute element data in the link attribute element data field and the attribute value thereof in the attribute value data field,
      wherein
   C) when upper element specifying information of a writing target element, and link attribute element data in a link attribute with the upper element and element data specifying information of a referential destination are given, the writing means writes the upper element specifying information in the upper element data field, the link attribute element data in the link attribute element data field, and the element data specifying information of the referential destination in the referential element data field. This enables data management using element data specifying information of the referential destination.
25) In the database management system according to the present invention, when narrative clause data comprising inverse predication relationship information which is predication relationship information of the lower individual element data to the upper individual element data are given, the narrative clause data are divided into a plurality of records which are associated, before being stored, as described below.
   The records are associated by defining the lower individual element data, the upper individual element data and data representing the inverse predication relationship as source case individual element data, goal case individual element data and path case individual element data, respectively, and defining individual element data that connect these individual element data as narrative clause top individual element data and linking the narrative clause top individual element data to the lower individual element data by narrative clause link individual element data.
   This enables narrative clause data to which even linked plural element group data are linked to be written.
26) In the database management system according to the present invention, when element data specified by the link attribute element data are an element belonging to a label, an upper element ID, link attribute element data in a link attribute with the upper element and an element data ID of a referential destination are given to the writing means. Thus, link attribute element data and the element data ID of the referential destination can be written.
27) In the database management system according to the present invention, when an upper element ID of a writing target element, and link attribute element data in a link attribute with the upper element and an element data ID of a referential destination are given, the writing means further generates and stores a record having the element data ID of the writing target in the upper element data field, an element data ID representing a weight in the link attribute element data field and an element data ID representing the degree of weight in the attribute value data field when writing the upper element ID in the upper element data field, the link attribute element data in the link attribute element data field, and the element data ID of the referential destination in the referential element data field. Thus, element-associated data with a high writing frequency can be stored.
28) In the database management system according to the present invention, when the same element-associated data as the generated element-associated data have been already stored in the table, the writing means increases the degree of weight of element data ID in the attribute value data field of element-associated data associated with the stored element-associated data and having element data ID representing a weight in the link attribute element data field. Thus, element-associated data with a high writing frequency can be stored.

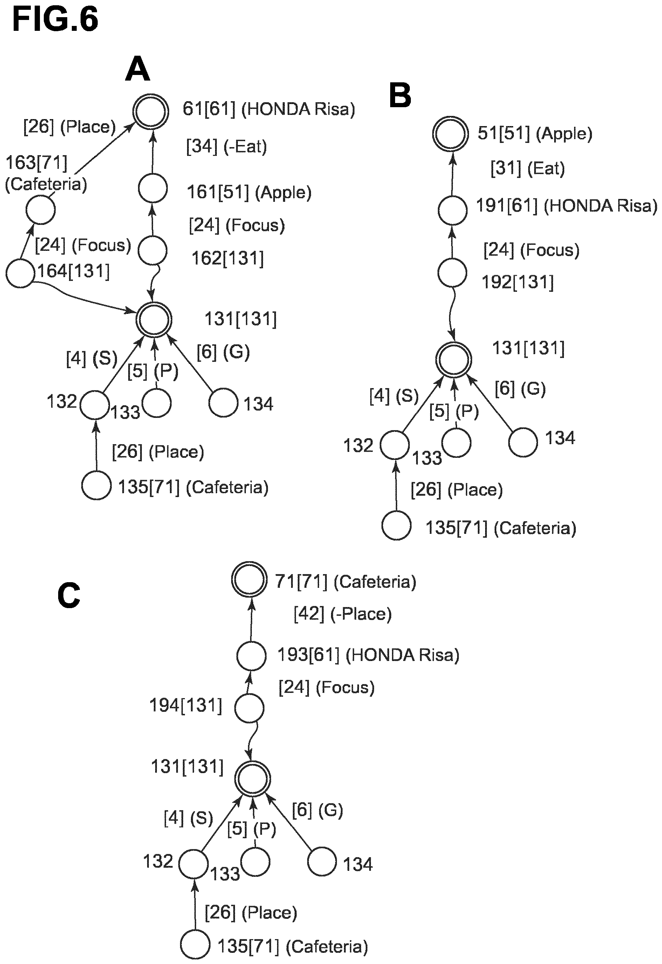

In this specification, the term "master element data" refer to element data that are located superior to slave element data when expressed as a meaning tree Monad among element-associated data. In the embodiments, for example, an ID 61[61] (HONDA Risa) corresponds to master element data with respect to an ID 161[51] (apple) in FIG. 6A, and an ID 51 (apple) corresponds to master element data with respect to an ID 191[61] (HONDA Risa) in FIG. 6B.

The expression "a search request specifying a master element data ID is given" is a concept including not only a case where a search condition specifying master element data is directly given from a database user but also a case where master element data are reached as a result of searching from another search condition and then another search is made from the master element data.

The element data ID field, the upper element data field, the link attribute element data field, the attribute value data field and the referential element data field correspond to the ID field 61, the connection field 63, the relation field 64, the meaning field 62 and the reference field 65, respectively, in the embodiments.

The meaning element data correspond to a top Monad of a meaning tree in the embodiments. The individual element data correspond to each record in the embodiments. The link knowledge data correspond to a top Monad and a group of lower Monads linked thereto in the embodiments.

The relationship between the upper record and the lower record includes both a case where two or more records are associated in parallel and a case where two or more records are associated hierarchically.

The label element data correspond to a top Monad of a reference tree in the embodiments.

The features, other objects, applications, effects, etc. will become apparent in reference to the following description on embodiments and appended drawings.

### Brief Description of Drawings

FIG. 1 is a functional block diagram of a database management system 1.
FIG. 2 is a diagram illustrating the data structure of a data table in the database management system 1.
FIG. 3 is a hardware configuration in a case where the database management system 1 is realized by a CPU.
FIG. 4 is a diagram illustrating one example of data stored in the table of the database management system 1.
FIG. 5 is a correspondence table between data IDs stored in the table and words.
FIG. 6 shows a meaning tree that can be acquired when data stored in the table of the database management system 1 are read.
FIG. 7 is a flowchart of read processing.
FIG. 8 is a diagram illustrating one example of data to be added to the table.
FIG. 8a shows a tree obtained by further associating the meaning trees shown in FIG. 6A to 6C.
FIG. 9 is a flowchart of processing for writing each Monad in the table.
FIG. 10 is a detailed flowchart of step S41 in FIG. 9.
FIG. 11 is a detailed flowchart of step S43 in FIG. 9.
FIG. 12 shows a meaning tree that can be acquired when added data are read.
FIG. 13 shows meaning trees that can be acquired when added data are read.
FIG. 14 is a flowchart for adding (writing) weight and time Monads.
FIG. 15 shows a meaning tree that can be acquired before adding (writing) weight and time Monads.
FIG. 16 shows a meaning tree that can be acquired after adding (writing) weight and time Monads.
FIG. 17 shows data corresponding to the meaning tree in FIG. 16.
FIG. 18 shows another meaning tree that can be acquired after adding (writing) weight and time Monads.
FIG. 19 shows another meaning tree that can be acquired after adding (writing) weight and time Monads.
FIG. 20 shows a meaning tree having added weight and time Monads (at a time of reading).
FIG. 21 is a flowchart for adding weight and time Monads (at a time of reading).
FIG. 22 is a detailed flowchart of step S19 in FIG. 21.
FIG. 23 shows one example of the table in a case where labels are added in a reference field.
FIG. 24 shows a tree in a case where labels are added in the reference field.
FIG. 25 shows one example of a meaning tree before adding a reference tree.
FIG. 26 shows one example of a meaning tree after adding a reference tree.
FIG. 27 is a flowchart of read processing.
FIG. 28 is a detailed flowchart of step S123 in FIG. 27.
FIG. 29 shows one example of the table in a case where there is a many-to-one referential relationship.
FIG. 30 illustrates the tree structure that is formed when the table shown in FIG. 29 is read.
FIG. 31 shows one example of a table in a case where there is a one-to-many referential relationship.
FIG. 32 illustrates the tree structure that is formed when the table shown in FIG. 31 is read.
FIG. 33 shows one example of a table in a case where there is a many-to-many referential relationship.
FIG. 34 illustrates the tree structure that is formed when the table shown in FIG. 33 is read.
FIG. 35 shows one example of a table before writing.
FIG. 36 shows one example of records to be added to the table.
FIG. 37 is a flowchart of processing for entering narrative clause data.
FIG. 38 shows one example of an entry screen for narrative clause data.
FIG. 39 shows one example of the entry screen that is displayed when an add button is selected.
FIG. 40 is a flowchart of processing for writing each Monad in the table.
FIG. 41 is a detailed flowchart of step S41 in FIG. 40.
FIG. 42 is a flowchart continued from FIG. 41.
FIG. 43 is a detailed flowchart of step S44 in FIG. 40.
FIG. 44 is a detailed flowchart of step S126 in FIG. 43.
FIG. 45 shows a tree structure before the records in FIG. 36 are written.
FIG. 46 shows the tree structure after the records in FIG. 36 are written.
FIG. 47 shows functional blocks in a third embodiment.

### Reference Sings List

1: database management system
23: CPU
27: memory

### Description of Embodiments

### 1. Functional block diagram

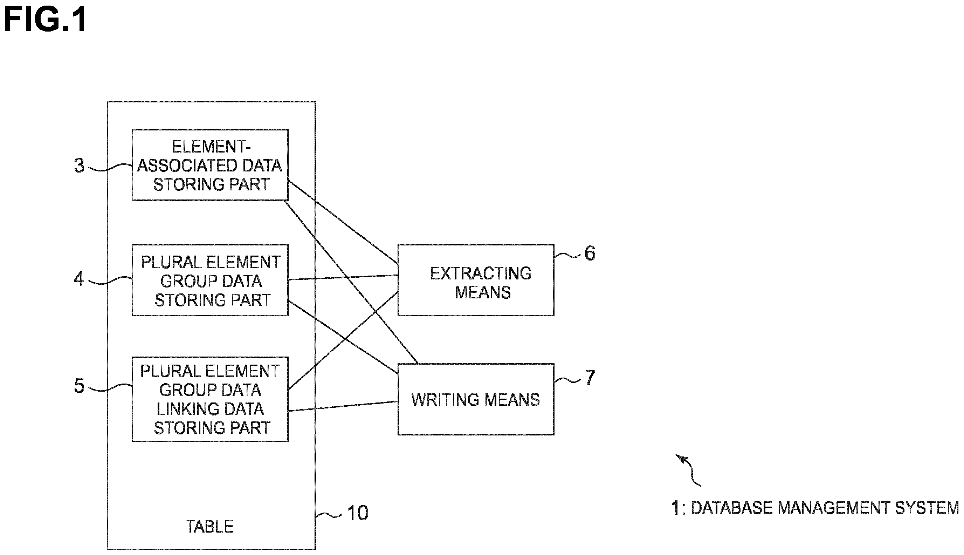

FIG. 1 shows a functional block diagram of a database management system 1 according to the present invention. The database management system 1 includes a table 10 having an element-associated data storing part 3, a plural element group data storing part 4 and a plural element group data linking data storing part 5, extracting means 6, and writing means 7.

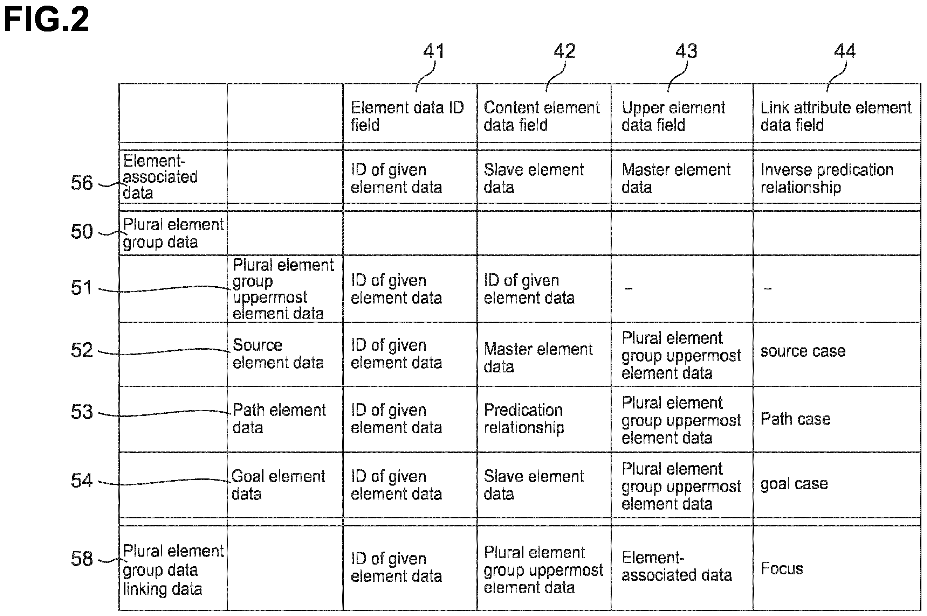

The data structure of the table 10 is described with reference to FIG. 2. The table 10 comprises a plurality of records, and each record has an element data ID field 41, a content element data field 42, an upper element data field 43 and a link attribute element data field 44.

In the element data ID field 41, an element data ID of given element data is stored. In the upper element data field 43, an upper element data ID, which is the ID of upper element data located superior to the given element data, is stored. In the link attribute element data field 44, a link attribute element data ID, which is the ID of link attribute element data representing a link attribute between the given element data and the upper element data, is stored. In the content element data field 42, a content element data ID specifying content element data representing a content of the link attribute is stored.

The data that are stored in each field of element-associated data 56, plural element group data 50 and plural element group data linking data 58 are described.

The element-associated data 56 are data specifying an association between master element data and slave element data, and having an element data ID of the slave element data in the content element data field 42, an element data ID of the master element data in the upper element data field 43, and an element data ID representing inverse predication relationship information, which is predication relationship information of the slave element data to the master element data, in the link attribute element data field 44.

The plural element group data 50 have at least source element data 52, goal element data 54 and path element data 53, and plural element group uppermost element data 51 linking the source element data 52, the goal element data 54 and the path element data 53.

The plural element group uppermost element data 51 have an element data ID of the given element data in the element data ID field 41 and content element data field 42. The source element data 52 have the element data ID of the master element data in the content element data field 42, an element data ID of the uppermost element data in the upper element data field 43, and an element data ID that means a source case in the link attribute element data field 44. The goal element data 54 have the element data ID of the slave element data in the content element data field 42, the element data ID of the uppermost element data in the upper element data field 43, and an element data ID that means a goal case in the link attribute element data field 44. The path element data 53 have an element data ID representing predication relationship information of the master element data to the slave element data in the content element data field 42, the element data ID of the uppermost element data in the upper element data field 43, and an element data ID that means a path case in the link attribute element data field 44.

The plural element group data linking data 58 have a plural element group uppermost element data ID of the plural element group data 50 in the content element data field 42, the element data ID of the element-associated data in the upper element data field 43, and a link attribute ID of a focus attribute representing that the plural element group uppermost element data are linked to the element-associated data in the link attribute element data field 44.

When a search request specifying a master element data ID in the upper element data field 43 is given, the extracting means 6 shown in FIG. 1 extracts element-associated data including the master element data, extracts plural element group data linking data 58 including the element data ID of the extracted element-associated data, and extracts plural element group data 50 specified by the extracted plural element group data linking data to extract linked element data.

When source element data 52, goal element data 54 and path element data 53 are given as new plural element group data, the writing means 7 performs a plural element group data generating step, an element-associated data generating step and a plural element group data linking data generating step as described below.

In the plural element group data generating step, the writing means 7 generates plural element group uppermost element data 51 of the source element data 52, the goal element data 54 and the path element data 53, and writes the plural element group uppermost element data 51 together with the given source element data 52, goal element data 54 and path element data 53 in the table 10 as plural element group data 50. In the element-associated data generating step, the writing means 7 generates element-associated data 56 having the element data ID in the content element data field of the source element data in the upper element data field, the element data ID in the content element data field of the goal element data in the content element data field, and an element data ID in an inverse relationship with the element data ID in the content element data field of the path element data in the link attribute element data field, and writes the element-associated data 56 in the table 10. In the plural element group data linking data generating step, the writing means 7 generates plural element group data linking data 58 having the element data ID of the generated plural element group uppermost element data in the content element data field 42, the element data ID of the generated element-associated data in the upper element data field 43, and the element data ID of the link attribute of the focus attribute in the link attribute element data field 44, and writes the plural element group data linking data 58 in the table 10.

This enables data in which a plurality of pieces of knowledge is linked to be obtained with a simple data structure.

### 2. Hardware configuration

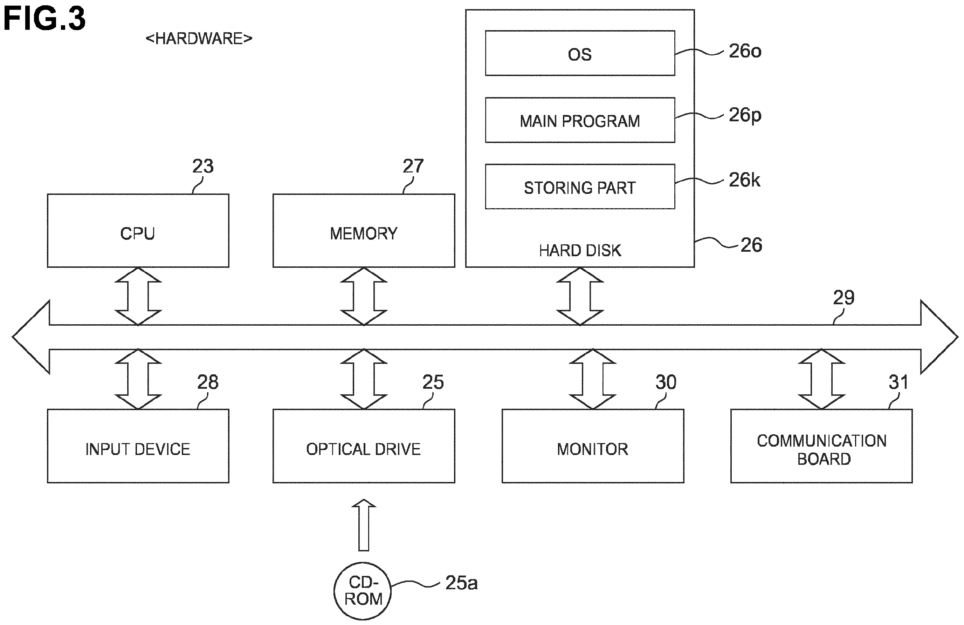

The hardware configuration of the database management system 1 shown in FIG. 1 is described with reference to FIG. 3, which shows one example of the hardware configuration of the database management system 1 constituted using a CPU.

The database management system 1 includes a CPU 23, a memory 27, a hard disk 26, a monitor 30, an optical drive 25, an input device 28, a communication board 31, and a bus line 29. The CPU 23 controls each part via the bus line 29 according to various programs stored in the hard disk 26.

In the hard disk 26, an operating system program 26o (which is hereinafter referred simply as "OS") and a main program 26p are stored.

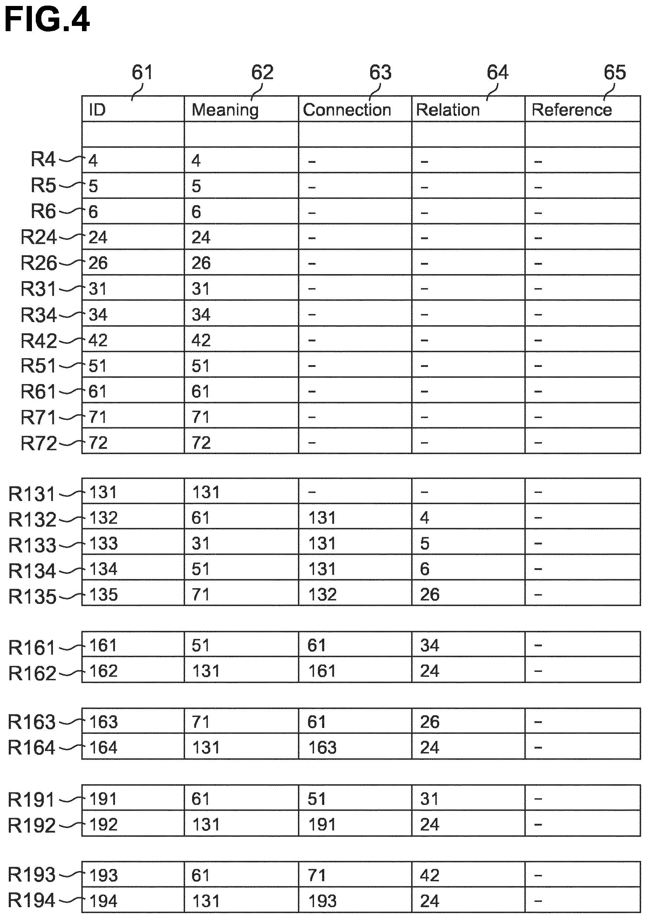

The processing executed by the main program 26p is the same as conventional processing in a general database management processing except data write processing and search (extraction) processing. The write processing and search processing are described later. A table as shown in FIG. 4 is stored in a data storing part 26k.

The configuration of the table is described. An ID field 61, a meaning field 62, a connection field 63 and a relation field 64 correspond to the element data ID field 41, the content element data field 42, the upper element data field 43 and the link attribute element data field 44, respectively, in FIG. 2. A reference field 65 is a field representing a referential destination.

Each record comprises such five-dimension data is named as "Monad" in this embodiment. Data are not necessarily contained in all the five dimensions, and there may be fields containing nothing.

In FIG. 4, records R4 to R72 are definition Monads. A definition Monad is a Monad having the same ID in the ID field 61 and the meaning field 62 and nothing in the other fields.

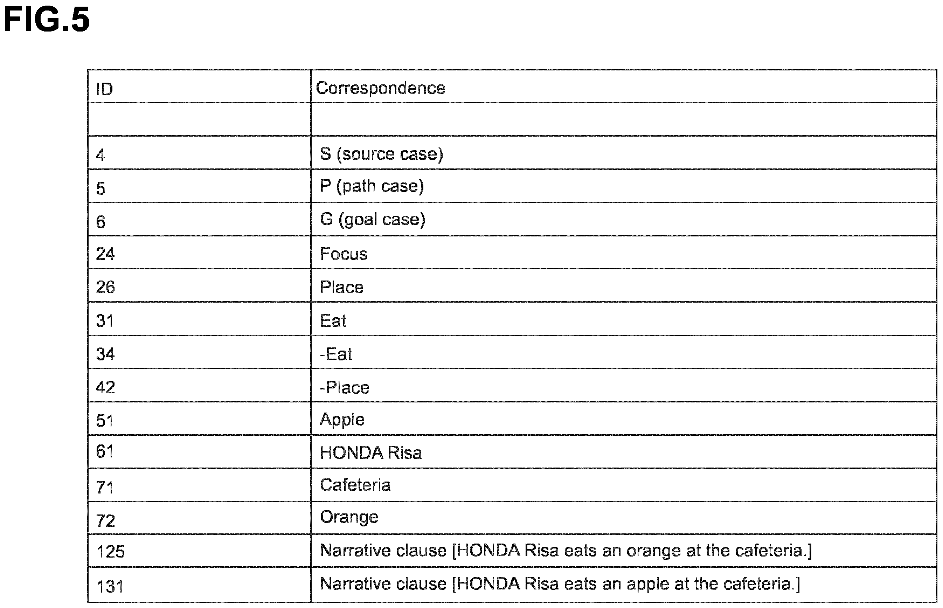

The correspondence of each ID in the meaning field 62 is shown in FIG. 5. For example, an ID 26 corresponds to a "place." Thus, the record R26 in FIG. 4 is a Monad having a "place" in the meaning field 62.

A record R161 is a master-slave Monad. A master-slave Monad is a Monad having the hierarchical link relationship between two definition Monads in the connection field and a link attribute of the link relationship in the relation field. A master-slave Monad corresponds to the element-associated data 56 in FIG. 2.

Records R131 to 135 are narrative clause constituting Monads, and correspond to the plural element group data 50 in FIG. 2. The record R131 is an uppermost Monad, the record R132 is a source Monad, the record R133 is a path Monad, and the record R134 is a goal Monad. A source Monad, a path Monad and a goal Monad correspond to the source element data 52, the path element data 53 and the goal element data 54, respectively, in FIG. 2. The record R135 is a narrative clause constituting Monad to which the Monad of the record R132 (source Monad) is linked.

A record R162 is a narrative clause link Monad, which corresponds to the plural element group data linking data 58 in FIG. 2.

The main program can generate tree-structured data (which are hereinafter referred to as "meaning tree") as shown in FIG. 6A by reading the records R131 to R135 and R161 to R164 and linking the Monads to each other. This processing is described later.

Similarly, a meaning tree as shown in FIG. 6B can be generated by reading the records R131 to R135, R191 and R192 and linking the Monads to each other, and a meaning tree as shown in FIG. 6C can be generated by reading the records R131 to R135, R193 and R194 and linking the Monads to each other.

The way of representation in FIG. 6 is described. The uppermost Monad in a meaning tree is called top Monad. In the case of FIG. 6A, "61[61] (HONDA Risa)" is shown. This means that the record with an ID 61 has "61" in the meaning field. The text (HONDA Risa) in brackets is the words corresponding to "61" taken from the correspondence table in FIG. 5 for ease of understanding of the relationship between the Monads in the meaning tree.

A Monad with an ID 161 is linked to the downside of the Monad with an ID 61. The Monad with an ID 161 is marked with "161[51] (apple)." This means that the record with an ID 161 has "51" in the meaning field 62. The text "apple" in brackets is the word (apple) corresponding to "51" taken from the correspondence table in FIG. 5. The representation "[34] (-eat)" is given to represent the relationship of the Monad with an ID 61[61] (HONDA Risa) to the Monad with an ID 61[51] (apple).

While LINUX (trademark or trade name) is employed as the operating system program (OS) 26o in this embodiment, the present invention is not limited thereto.

Each of the above programs is read from a CD-ROM 25a containing the programs via the optical drive 25 and installed into the hard disk 26. The programs may be installed into the hard disk from a computer-readable recording medium such as a flexible disk (FD) or IC card in place of a CD-ROM. Alternatively, the programs may be downloaded through a communication line.

In this embodiment, the programs are installed into the hard disk 26 from a CD-ROM to cause a computer to execute the programs stored in the CD-ROM indirectly. However, the present invention is not limited thereto. The computer may execute the programs stored in a CD-ROM directly from the optical drive 25. Programs executable by a computer include not only programs that can be directly executed when installed in unchanged form but also programs that once need conversion to a different form (decompression of compressed data, for example) and programs that can be executed when combined with another module portion.

### 3. Flowchart

### 3.1 Regarding read processing

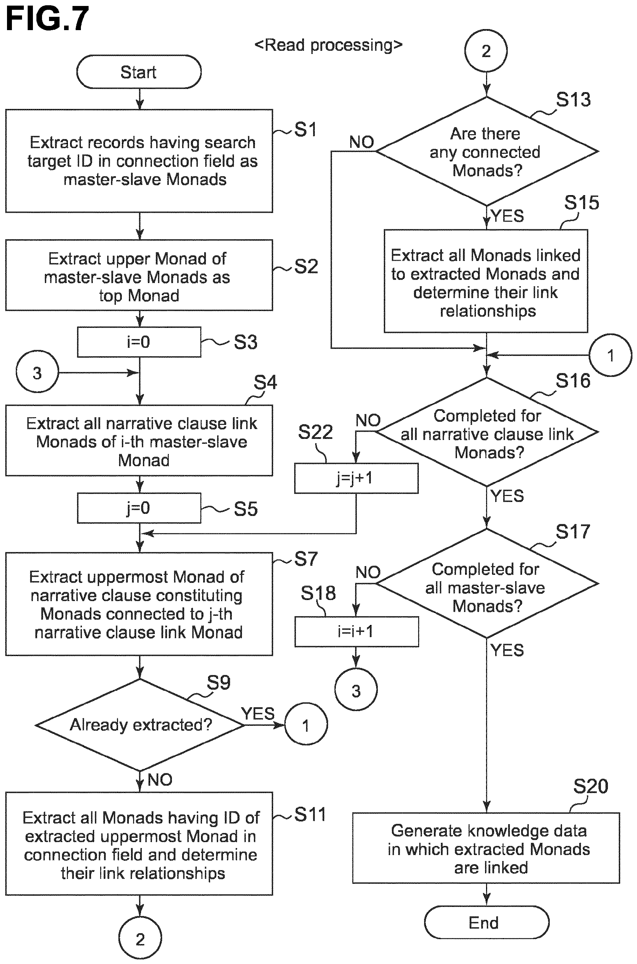

The processing that is executed by the main program 26p to read Monads to generate a meaning tree is described with reference to FIG. 7. Here, a case is described where Monads are read for an ID "61" corresponding to "HONDA Risa."

The CPU 23 extracts records having the search target ID in the connection field 63 as master-slave Monads (step S1). In this case, because "HONDA Risa" has an ID "61," records having "61" in the connection field 63 are extracted. In the case of FIG. 4, the records R161 and R163 are extracted.

The CPU 23 extracts the upper Monad of the master-slave Monads as a top Monad (step S2). In the case of FIG. 4, the records R161 and R163 has an ID "61" in the connection field 63. Thus, the record R61 is extracted as a top Monad.

The CPU 23 initializes a processing number i (step S3), and extracts the entire narrative clause link Monads of the extracted i-th master-slave Monad (step S4). In this embodiment, whether a Monad is a narrative clause link Monad is determined based on whether it has the record ID of the master-slave Monad in the connection field 63 and whether it is a record having "focus" in the relation field. In this case, referring to FIG. 5, "24" means "focus."

In this case, a record R162, which has the record ID "161" of the extracted 0th master-slave Monad R161 in the connection field 63 and "24" in the relation field 64, is extracted as the narrative clause link Monad.

The CPU 23 initializes a processing number j (step S5).

The CPU 23 extracts the uppermost Monad of the narrative clause constituting Monads connected to a j-th narrative clause link Monad out of the extracted narrative clause link Monads (step S7). In this case, the record R162 as the 0th narrative clause link Monad has "131" in the meaning field. Thus, the record R131 is extracted as the corresponding uppermost Monad of the narrative clause constituting Monad.

The CPU 23 determines whether the ID of the extracted uppermost Monad has already been extracted (step S9). In this case, it has not been extracted yet, the CPU 23 extracts records having the ID of the extracted uppermost Monad in the connection field 63 and determines their link relationships (step S11).

Specifically, the CPU 23 extracts records R132 to R134 having "131," which is in the meaning field 62 of the record R131, in the connection field 63. Because the records R132 to R134 have "131" in the connection field 63, it is apparent that they are located inferior to the record R131. In addition, the record R132 has "4" in the relation field 64 and "61" in the meaning field 62. Thus, referring to FIG. 5, it is apparent that "HONDA Risa" is connected to the downside of the record 131 with the status of a source case S. Similarly, in records R133 and R134, it is apparent that "eat" is connected to the downside of the record R131 with the status of a path case P, and "apple" is connected to the downside of the record R131 with the status of a goal case G.

The CPU 23 determines whether there are any Monads connected to the extracted narrative clause constituting Monads (step S13 in FIG. 7). Specifically, the CPU 23 determines whether there are records having the ID of any of the records R132 to R134 extracted as narrative clause constituting Monads stored in the connection field 63.

In this case, there is a record R135 having "132" in the connection field 63 in FIG. 4. Thus, the CPU 23 extracts the record R135 and determines its link relationship (step S15). In this case, because the record R135 has "132" in the connection field 63, it is apparent that the record R135 is located inferior to the record R132 as the link relationship. In addition, the record R135 has "26" in the relation field 64 and "71" in the meaning field 62. Thus, referring to FIG. 5, it is apparent that "cafeteria" is connected to the downside of the record 131 with the status of a "place."

The CPU 23 determines whether processing has been completed for all the narrative clause link Monads (step S16). In this case, because processing has been completed for all the narrative clause link Monads, the CPU 23 determines whether processing has been completed for all the master-slave Monads (step S17). In this case, because the processing has not been completed for the record 163, the CPU 23 increments the processing number i (step S18) and advances to step S4.

The CPU 23 extracts all the narrative clause link Monads of a 1st master-slave Monad (step S4). In this case, a record R164, which has the record ID "163" of the extracted 1st master-slave Monad R163 in the connection field 63 and "24" in the relation field 64, is extracted as the narrative clause link Monad.

The CPU 23 initializes the processing number j (step S5), and extracts the uppermost Monad of the narrative clause constituting Monads connected to the 0th narrative clause link Monad out of the extracted narrative clause link Monads (step S7). In this case, the record R164 as the 0th narrative clause link Monad has "131" in the meaning field. Thus, the record R131 is extracted as the corresponding uppermost Monad of the narrative clause constituting Monads (step S7).

The CPU 23 determines whether the ID of the extracted uppermost Monad has already been extracted (step S9). In this case, the record R131 has already been extracted, the CPU 23 determines whether processing has been completed for all the narrative clause link Monads without executing the processing in step S11, step S13 and step S15 (step S16). In this case, processing has been completed for all the narrative clause link Monads, the CPU 23 determines whether processing has been completed for all the master-slave Monads (step S17).

In this case, because processing has been completed for all the master-slave Monads, the CPU 23 generates a knowledge database in which the extracted Monads are linked (step S20).

Specifically, the extracted records are simply connected with the link relationships determined in step S11 and step S15. As a result, a meaning tree as shown in FIG. 6A can be obtained.

Successive linkage of data can be achieved by repeating such read processing to further expand the link relationship.

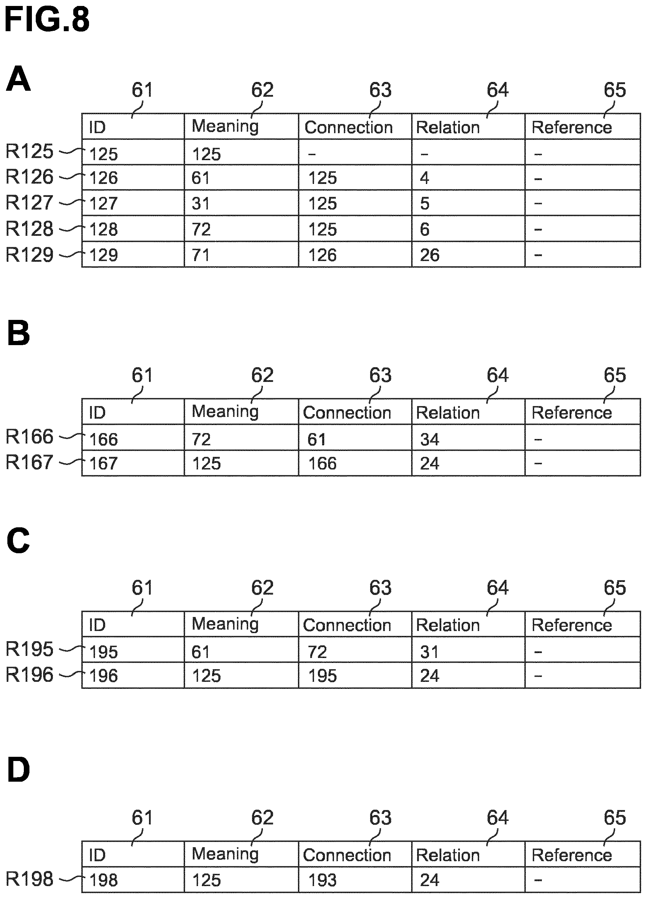

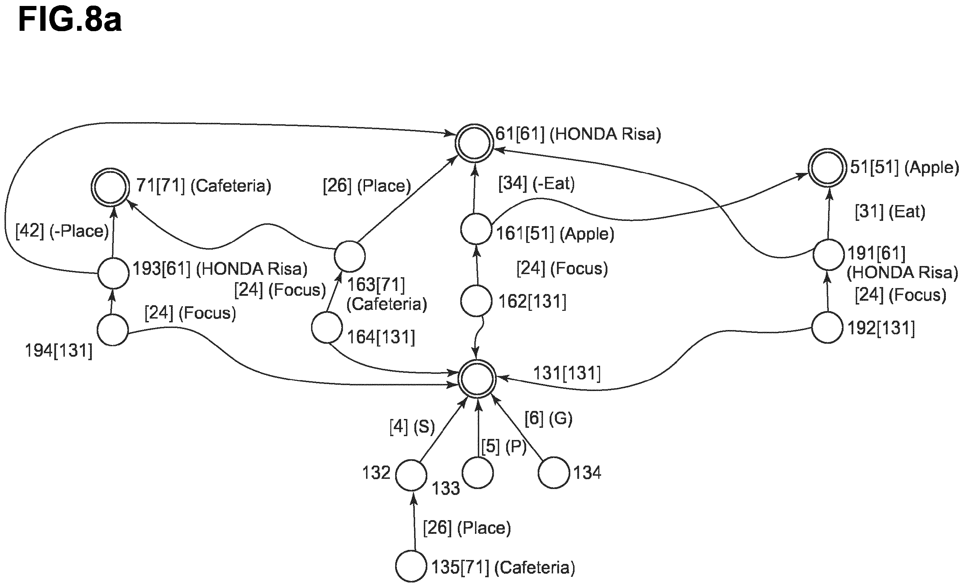

For example, the record with an ID 161 has an ID 51 in the meaning field 62. When records having an ID 51 in the connection field 63 are extracted, a record R191 is extracted. Then, the processing in and after step S2 in FIG. 7 is simply executed using the extracted record as a master-slave Monad. As a result, data of link relationship among a plurality of meaning trees as shown in FIG. 8a can be obtained.

### 3.2 Write processing

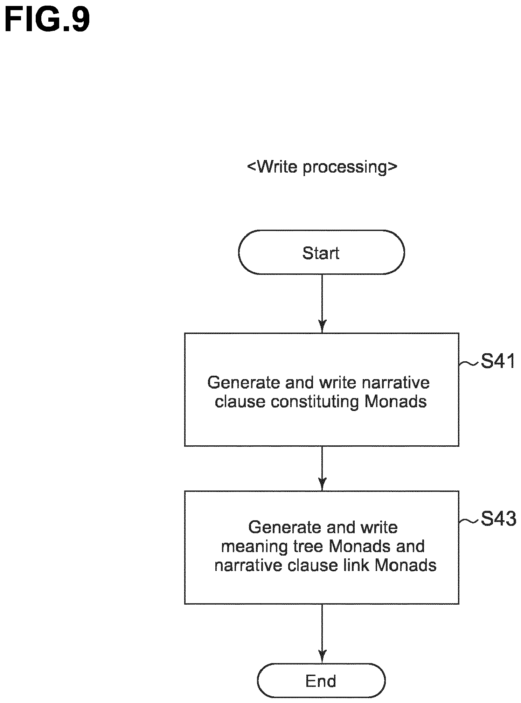

Write processing that is executed to write each Monad by the main program 26p is described with reference to FIG. 9. In the following, a case is described where narrative clause constituting data shown in FIG. 8A, narrative clause link Monads shown in FIG. 8B and master-slave Monads shown in FIG. 8C are generated when data "HONDA Risa" (source case), "orange" (goal case), "eat" (path case) and "cafeteria" (place) are given as a result of an analysis of the sentence "HONDA Risa eats an orange at the cafeteria."

### 3.2.1 Processing for writing narrative clause constituting Monads

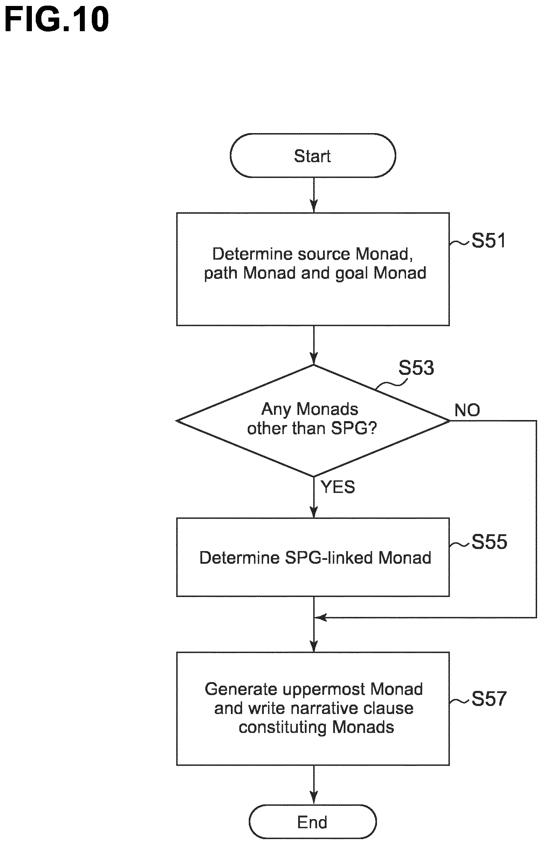

The CPU 23 generates and writes narrative clause constituting Monads (step S41 in FIG. 9). Details of step S41 are shown in FIG. 10. The CPU 23 determines a source Monad, a path Monad and a goal Monad (step S51 in FIG. 10). Specifically, the CPU 23 extracts data to which a "source case," a "goal case," or a "path case" is attached as an attribute out of the given data "HONDA Risa," "orange," "eat" and "cafeteria."

The CPU 23 determines whether there are Monad candidate data other than "source case," "goal case" and "path case" (step S53). In this case, because there are Monad candidate data in addition to "HONDA Risa" (source case), "orange" (goal case) and "eat" (path case), "cafeteria" is determined as an SPG-linked Monad. The CPU 23 advances to step S57, and generates an uppermost Monad and writes narrative clause constituting Monads.

Specifically, the CPU 23 executes the following processing. First, the CPU 23 determines an ID for the uppermost Monad. An empty ID is used for the ID. Here, an ID "125" is used. The CPU 23 writes "125" in the ID field 61 and the meaning field 62. Next, the CPU 23 determines an ID for the source Monad. Again, an empty ID is used. Here, an ID "126" is used. The CPU 23 recognizes with reference to FIG. 5 that "HONDA Risa" and "source case" correspond to "61" and "4," respectively. Thus, the CPU 23 writes "126" in the ID field 61, "61" in the meaning field 62, "125", which is the ID of the uppermost Monad, in the connection field 63, and "4" in the relation field 64.

A similar procedure is applied to "orange" (goal case) and "eat" (path case).

Each Monad that was not extracted as "source case," "goal case," or "path case" is regarded as a Monad that is linked to any of the source Monad, the path Monad and the goal Monad based on predetermined rules.

In this embodiment, a "place" is linked to the source Monad and the goal Monad, and "time" and "tool" are linked to the path Monad. The Monads as the destinations of link may be changeable. Here, "time" is attribute information about the date and time or time of the day, and "tool" is attribute information about a tool as in "with a knife."

In this embodiment, a "place" is associated only with the source Monad in order to avoid redundancy.

Thus, because "cafeteria" represents a "place," it is associated with the source Monad. Specifically, a record having "71" corresponding to "cafeteria" in the meaning field 62, "126," which is the ID in the meaning field 62 of the record 126, in the connection field 63, and "26" corresponding to a "place" in the relation field 64 is stored. While the record ID of such a record may be arbitrarily determined in the same way as above, the record is stored with an ID "129" here.

As a result, a narrative clause constituting Monad is written in the table as a record R129 as shown in FIG. 8A.

### 3.2.2 Writing of meaning tree Monads and narrative clause link Monads

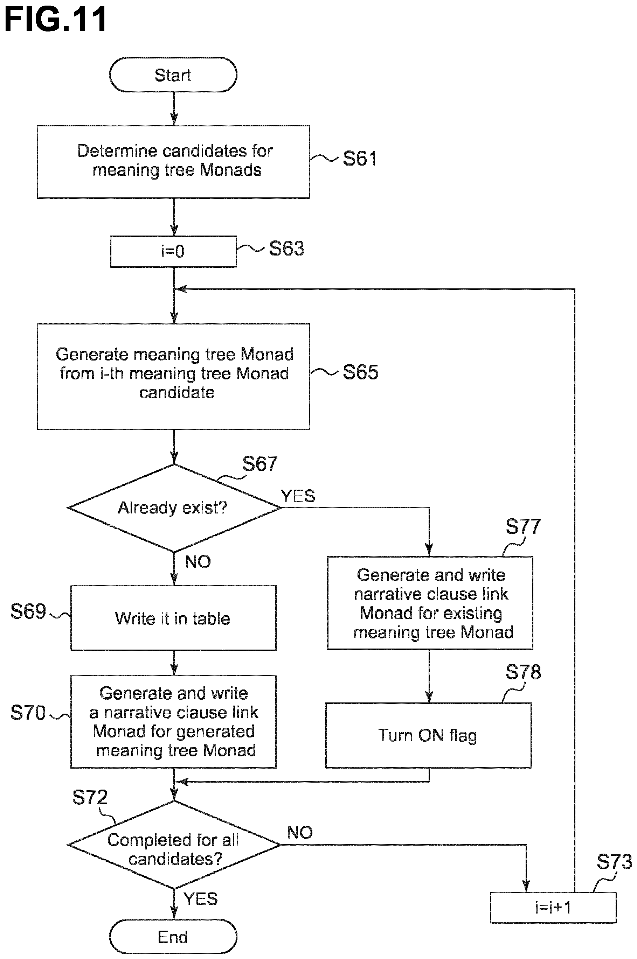

Next, the CPU 23 generates meaning tree Monads and narrative clause link Monads and writes them in the table (step S43 in FIG. 9). Details of step S43 are described with reference to FIG. 11.

The CPU 23 determines candidates for meaning tree Monads (step S61 in FIG. 11). In this embodiment, two types of Monads are selected as candidates for meaning tree Monads. First candidates are master-slave Monads. A master-slave Monad is a Monad representing the association between a Monad specified by an ID in the meaning field 62 of a source Monad of narrative clause constituting Monads and a Monad specified by an ID in the meaning field 62 of a goal Monad. In addition, two types of master-slave Monads are generated. One of the master-slave Monads is a Monad representing that "orange" is linked to the upside of "HONDA Risa" and the relationship of "HONDA Risa" to "orange" is a predication relationship connected by "eat." The other is a Monad representing that, contrary to the above, "HONDA Risa" is linked to the upside of "orange" and the relationship of "orange" to "HONDA Risa" is an inverse predication relationship connected by "minus (which is hereinafter represented by "-") eat."

Here, the term "predication relationship information" refers to information representing the predication relationship of a definition Monad specified by the ID in the meaning field 62 of a source Monad to a definition Monad specified by the ID in the meaning field 62 of a goal Monad. In contrast to this, the term "inverse predication relationship information" refers to information representing the predication relationship of a definition Monad specified by the ID in the meaning field 62 of a goal Monad to a definition Monad specified by the ID in the meaning field 62 of a source Monad. In other words, "-eat" represents a predication relationship in the opposite direction with respect to "eat."

In this embodiment, in a master-slave Monad, the Monad with the ID in the connection field 63 is located superior to the Monad with the ID in the meaning field 62, and the Monad with the ID in the relation field 64 represents the relationship between them seen from the side of the Monad with the ID in the meaning field 62. Thus, when a predication relationship is defined between two Monads, an inverse predication relationship is defined between them if their hierarchical relationship is inverted. As a result, two types of master-slave Monads can be generated.

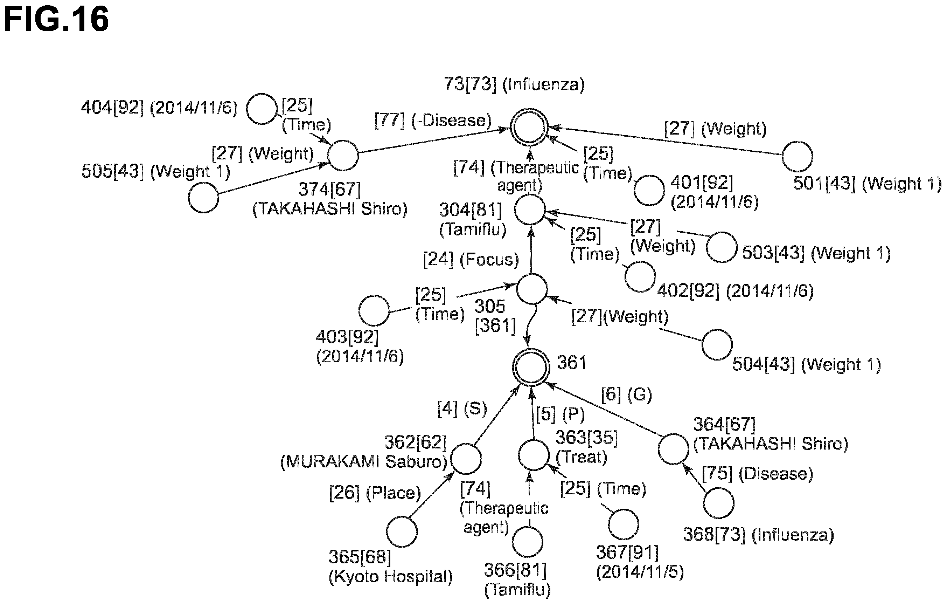

Candidates for meaning tree Monads other than master-slave Monads are detail Monads. A detail Monad is a Monad that is associated with any of the source Monad, the path Monad, and the goal Monad that constitute the narrative clause constituting Monads. For example, Monads with ID 365 to ID 368 in FIG. 16, which are described later, are detail Monads.

In this embodiment, a Monad having "place," "time" or "tool" as an attribute in the relation field is defined as a detail Monad. In this case, "cafeteria" has an attribute "place." In this embodiment, because a "place" is associated with a source Monad as has been described above, a Monad representing that "cafeteria" is associated with "HONDA Risa," which is a Monad specified by the ID in the meaning field 62 of a source Monad, by "place" is also regarded as a candidate for a meaning tree Monad. From a Monad associated as described above, a meaning tree Monad candidate from the opposite direction representing that "HONDA Risa" is connected to "cafeteria" by "-place" is generated as in the case with a master-slave Monad. Thus, four candidates are determined in total.

The CPU 23 initializes a processing number i (step S63 in FIG. 11), and generates a meaning tree Monad from a 0th meaning tree Monad candidate (step S65). In this case, a Monad representing that the Monad candidate "orange" determined in step S61 is connected to "HONDA Risa" by "-eat" is generated. Specifically, IDs representing "orange," "HONDA Risa" and "-eat" are stored in the meaning field 62, the connection field 63 and the relation field 64, respectively. As a result, a meaning tree Monad is generated.

The CPU 23 determines whether the generated meaning tree Monad already exists in the table (step S67 in FIG. 11). In this case, because the generated meaning tree Monad does not exist in the table, the CPU 23 writes it in the table (step S69). An empty ID is used for the Monad to be written. Here, an ID "166" is used. The CPU 23 recognizes with reference to FIG. 5 that "HONDA Risa," "orange" and "-eat" correspond to "61," "72" and "34," respectively. Thus, the CPU 23 writes "166" in the ID field 61, "72" in the meaning field 62, "61" in the connection field 63 and "34" in the relation field 64.

The CPU 23 generates a narrative clause link Monad and writes it in the table (step S70). A narrative clause link Monad is a Monad that links the uppermost Monad of narrative clause constituting Monads and a meaning tree Monad. In this case, the ID of the uppermost Monad of narrative clause constituting Monads is "125," and the ID of the meaning tree Monad to be connected is "166." In addition, in this embodiment, an attribute "focus" is employed as an attribute representing such a relationship. Thus, the CPU 23 writes "167" "125," "166" and "24" in the ID field 61, the meaning field 62, the connection field 63 and the relation field 64, respectively, of an empty ID "167."

The CPU 23 determines whether processing has been completed for all the candidates determined in step S61 (step S72 in FIG. 11). In this case, processing has not been completed for all the candidates, the CPU 23 increments the processing number i (step S73), and generates a meaning tree Monad from a 1st candidate (step S65).

In this case, a Monad representing that the Monad candidate "HONDA Risa" determined in step S61 is connected to "orange" by "eat" is generated. Specifically, the IDs representing "HONDA Risa," "orange" and "eat" are stored in the meaning field 62, the connection field 63 and the relation field 64, respectively. As a result, a meaning tree Monad is generated.

The CPU 23 determines whether the generated meaning tree Monad already exists in the table (step S67 in FIG. 11). In this case, because the generated meaning tree Monad does not exist in the table, the CPU 23 writes it in the table (step S69). An empty ID is used for the Monad to be written. Here, an ID "195" is used. The CPU 23 recognizes with reference to FIG. 5 that "orange," "HONDA Risa" and "eat" correspond to "72," "61" and "31," respectively. Thus, the CPU 23 writes "195," "61," "72" and "31" in the ID field 61, the meaning field 62, the connection field 63 and the relation field 64, respectively.

The CPU 23 generates and writes a narrative clause link Monad for the meaning tree Monad written in step S69 (step S70).

In this case, the ID of the uppermost Monad of the narrative clause constituting Monads is "125" and the ID of the generated meaning tree Monad is "195." Thus, the CPU 23 writes "196," "125," "195" and "24" in the ID field 61, the meaning field 62, the connection field 63 and the relation field 64, respectively, of an empty ID "196."

The CPU 23 determines whether processing has been completed for all the candidates determined in step S61 (step S72 in FIG. 11). In this case, processing has not been completed for all the candidates, the CPU 23 increments the processing number i (step S73), and generates a meaning tree Monad for a 2nd candidate (step S65).

In this case, a Monad representing that the Monad candidate "cafeteria" determined in step S61 is connected to "HONDA Risa" by "place" is generated.

Specifically, a meaning tree Monad having the IDs representing "cafeteria," "HONDA Risa" and "place" in the meaning field 62, the connection field 63 and the relation field 64, respectively, is generated.

The CPU 23 determines whether the generated meaning tree Monad already exists in the table (step S67 in FIG. 11). In this case, because the generated meaning tree Monad (having "71," "61" and "26" in the meaning field 62, the connection field 63 and the relation field 64, respectively) exists in the table (record R163), the CPU 23 generates a narrative clause link Monad that links the existing meaning tree Monad (record R163) to the narrative clause constituting Monads without writing the meaning tree Monad in the table, and writes it (step S77).

In this case, the ID of the uppermost Monad of narrative clause constituting Monads is "125" and the ID of the existing meaning tree Monad is "163." Thus, the CPU 23 writes "197," "125," "163" and "24" in the ID field 61, the meaning field 62, the connection field 63 and the relation field 64, respectively, of an empty ID "197."

The CPU 23 turns on an omission flag for the existing meaning tree Monad (record R163) (step S78). The omission flag is described later.

The CPU 23 determines whether processing has been completed for all the candidates determined in step S61 (step S72 in FIG. 11). In this case, processing has not been completed for all the candidates, the CPU 23 increments the processing number i (step S73), and generates a meaning tree Monad for a 3rd candidate (step S65).

In this case, a Monad representing that the Monad candidate "HONDA Risa" determined in step S61 has a relationship expressed as "-place" to "cafeteria" is generated.

Specifically, a meaning tree Monad having the IDs representing "HONDA Risa," "cafeteria" and "-place" in the meaning field 62, the connection field 63 and the relation field 64, respectively, is generated.

The CPU 23 determines whether the generated meaning tree Monad already exists in the table (step S67 in FIG. 11). In this case, there exists a record R193 having the same data as the generated meaning tree Monad (having "61," "71" and "42" in the meaning field 62, the connection field 63 and the relation field 64, respectively) in the table 10. Thus, the CPU 23 generates a narrative clause link Monad that links the existing meaning tree Monad (record R193) to the narrative clause constituting Monads without writing the generated meaning tree Monad in the table, and writes it (step S77).

In this case, the ID of the uppermost Monad of narrative clause constituting Monads is "125" and the ID of the existing meaning tree Monad is "193." Thus, the CPU 23 writes "198," "125," "193" and "24" in the ID field 61, the meaning field 62, the connection field 63 and the relation field 64, respectively, of an empty ID "198."

The CPU 23 turns on an omission flag for the existing meaning tree Monad (record R163) (step S78).

The CPU 23 determines whether processing has been completed for all the candidates determined in step S61 (step S72 in FIG. 11). In this case, because processing has been completed for all the four generated candidates, the CPU 23 terminates the write processing.

As described above, in this embodiment, when the same meaning tree Monad has already been stored in the table, the generated meaning tree Monad is not redundantly written in the table. This is because treating as a weight as described later is more effective to eliminate duplicated data, to improve the search speed and to reduce data capacity than having a plurality of meaning tree Monads having the same combination.

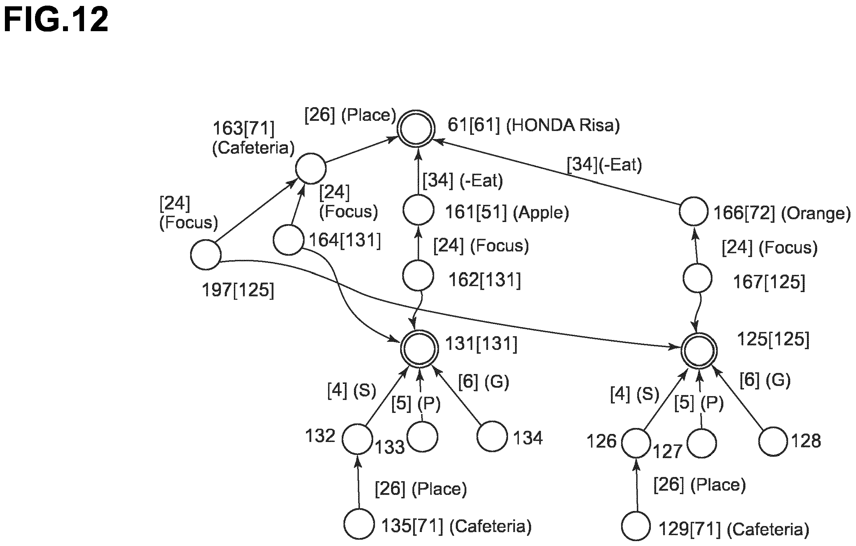

By performing read processing as has been described above on the generated data in the table, a new meaning tree can be obtained. For example, when the term "HONDA Risa" is searched, a meaning tree as shown in FIG. 12 can be obtained. This is a meaning tree obtained by adding information about "orange" to the meaning tree shown in FIG. 6A.

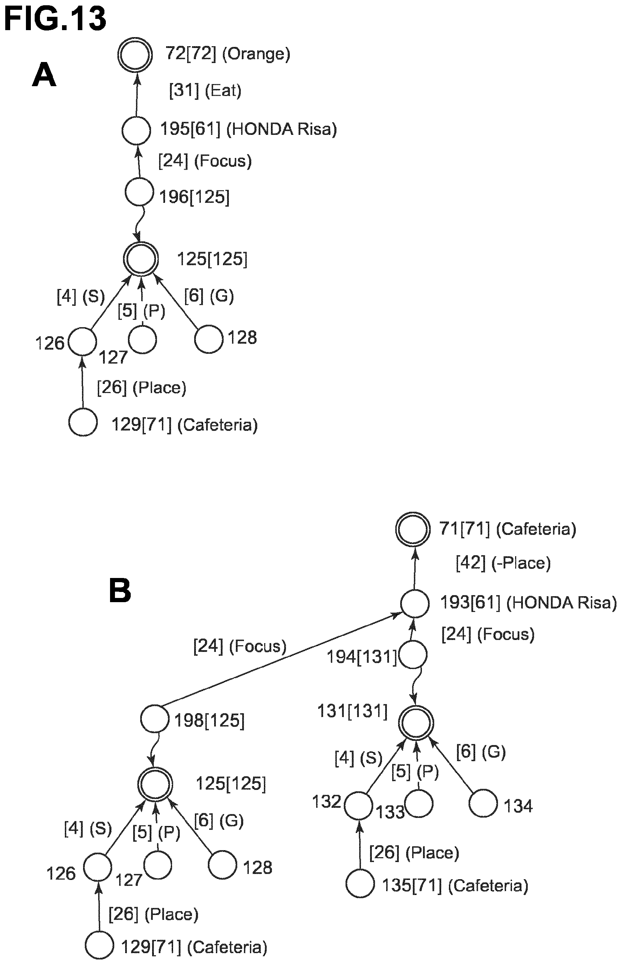

Also, when the term "orange" is searched, a meaning tree as shown in FIG. 13A can be obtained.

Also, when the term "cafeteria" is searched, a meaning tree as shown in FIG. 13B can be obtained. This is a meaning tree obtained by adding narrative clause data about the association between "cafeteria" and "HONDA Risa" to the meaning tree shown in FIG. 6C.

In this embodiment, master-slave Monads are determined on the assumption that a "source case" and a "goal case" are connected by a "path case," and only records having connection with other records, in other words, records from which a meaning tree as shown in FIG. 6 can be generated are stored as detail Monads in the table. However, if there are three Monads, records from which a meaning tree Monad that defines the relationship between them is generated can be generated from the Monads. For example, "eat," which is a "path case," may be used as a top Monad and "cafeteria" may be connected to it by a "place." In addition, records from which a meaning tree in which "apple" and "cafeteria," which are not directly linked, are connected by a "place" may be generated.

### 4. Second embodiment

In the above embodiment, if there exists the same Monad when a meaning tree Monad is written, the existing Monad is used to avoid redundant writing. In other words, even if the same Monad is generated, there is no way of knowing the frequency at which it is generated.

In contrast to this, in the second embodiment, a weight Monad and a time Monad are assigned to each Monad when it is written or read. By assigning a weight to each Monad in this way and extracting a Monad with a heavier weight or newer date, knowledge data reflecting the trend of times, for example, can be obtained.

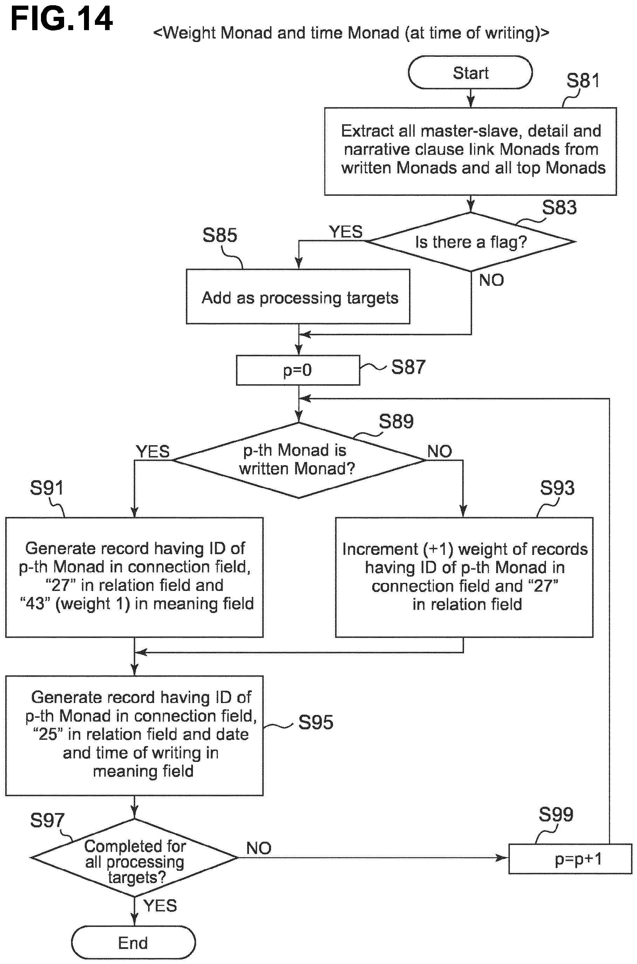

A weight Monad and a time Monad are written by executing the processing of flowchart shown in FIG. 14 after step S43 in FIG. 9 in the first embodiment. Before describing the processing, description is made of what difference is made when data are read to form a meaning tree between a case where weights are assigned and a case where no weight is assigned.

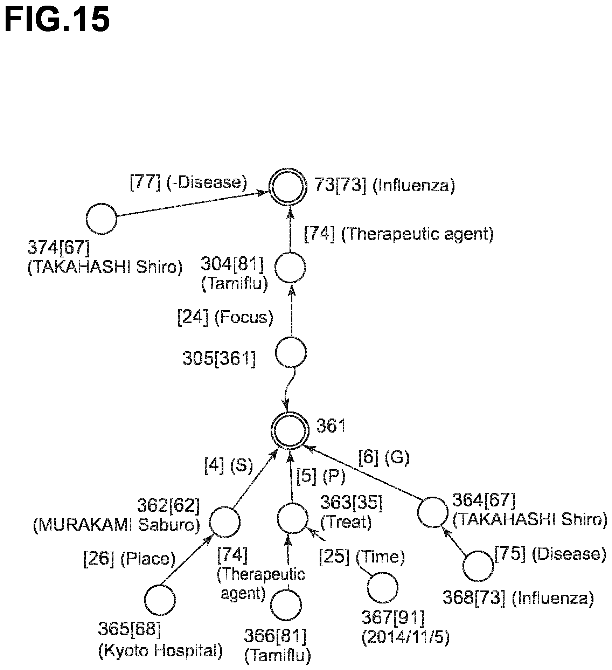

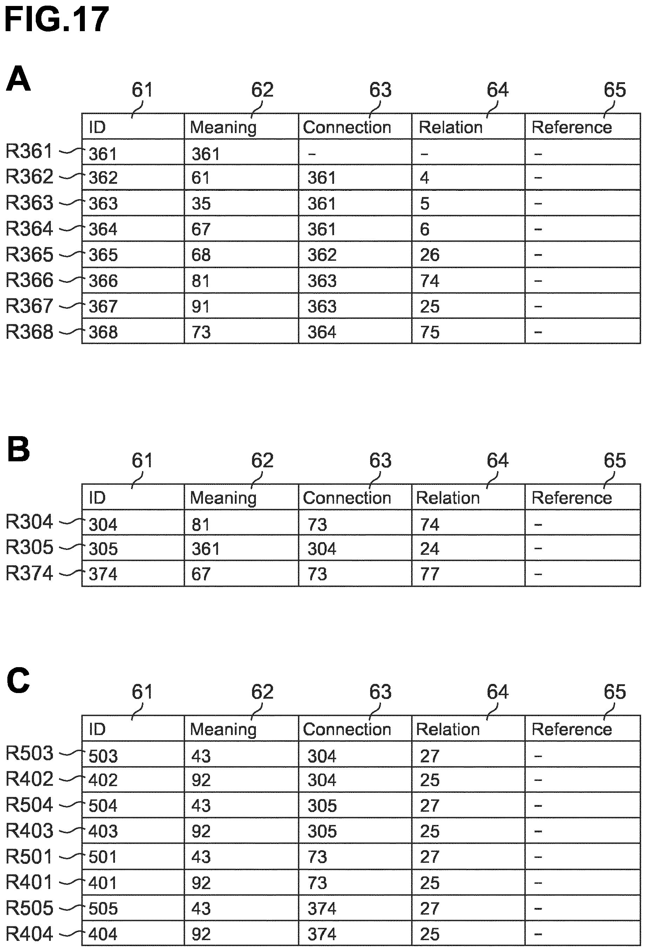

FIG. 15 shows a meaning tree in which meaning tree Monads are associated with each other without weights as in the case of the first embodiment. The data stored in each field of each record corresponding to FIG. 15 are shown in FIGs. 17A and 17B. The data in individual records are the same as those in the first embodiment. The meaning of each ID in each record is shown in FIG. 5 as has been described above and is not repeated here. In the following, description is made using the meaning tree in FIG. 15.

The meaning tree shown in FIG. 15 is briefly described. A Monad with an ID 304[81] (Tamiflu) is associated with a Monad with an ID 73[73] (influenza) by [74] (therapeutic agent). Also, a Monad with an ID 374[67] (TAKAHASHI Shiro) is associated with a Monad with an ID 73[73] (influenza) by [77] (-disease). Also, a Monad with an ID 305[361], which is a narrative clause link Monad, is associated with a Monad with an ID 304[81] (Tamiflu) by [24] (focus). The uppermost Monad with an ID 361 of narrative clause constituting Monads is associated with a Monad with an ID 362[62] (MURAKAMI Saburo) with the status of "4[4] (S)," with a Monad with an ID 363[35] (treat) with the status of "5[5] (P)," and with a Monad with an ID 364[67] (TAKAHASHI Shiro) with the status of "6[6] (G)."

A Monad with an ID 362[62] (MURAKAMI Saburo) is associated with a Monad with an ID 365[68] (Kyoto Hospital) with the status of [26] (place). A Monad with an ID 363[35] (treat) is associated with a Monad with an ID 366[81] (Tamiflu) with the status of [74] (therapeutic agent), and with a Monad with a Monad with an ID 367[91] (2014/11/5) with the status of [25] (time). A Monad with an ID 364[67] (TAKAHASHI Shiro) is associated with a Monad with an ID 368[73] (influenza) with the status of [75] (disease).

What is meant by the narrative clause constituting Monads is "MURAKAMI Saburo treated TAKAHASHI Shiro with influenza using Tamiflu as a therapeutic agent at Kyoto Hospital on 2014/11/5." By the narrative clause link Monad, the Monad with an ID 304[81] (Tamiflu) is associated with the narrative clause constituting Monads.

A meaning tree obtained by assigning weight Monads and time Monads to the meaning tree Monad shown in FIG. 15 is shown in FIG. 16. In FIG. 16, a weight Monad and a time Monad are assigned to all the Monad except the narrative clause constituting Monads. Here, as the time Monad, the date when the data were written, 2014/11/6, is used.

In this case, to the Monad with an ID 374[67] (TAKAHASHI Shiro), a weight Monad with an ID 505[43] (weight 1) is linked by [27] (weight) and a time Monad with an ID 404[92] (2014/11/6) is linked by [25] (time). Similarly, a weight Monad and a time Monad are linked to the Monad with an ID 73[73] (influenza), the Monad with an ID 304[81] (Tamiflu) and the Monad with an ID 305[361].

The specific record configuration of a weight Monad and a time Monad is described with reference to FIG. 17C. A record R505, which is a weight Monad, has "374" in the connection field 63, "43" in the meaning field 62 and "27" in the relation field 64. Similarly, a record R404, which is a time Monad, has "374" in the connection field 63, "92" in the meaning field 62 and "25" in the relation field 64.

Meaning tree generation processing in a case of adding weight Monads and time Monads as shown in FIG. 16 is described with reference to FIG. 14.

First, in a case of a meaning tree shown in FIG. 15, data as shown in FIGs. 17A and 17B have been generated by the processing in steps S41 and S43 shown in FIG. 9. FIG. 17A shows narrative clause constituting Monads, FIG. 17B shows a master-slave Monad, a detail Monad and a narrative clause link Monad.

A case where only limited meaning tree Monads are generated is described in the first embodiment. In this embodiment, however, combinations of records without restrictions are generated about association between narrative clause constituting Monads and the generation of a meaning tree Monad is permitted only when the association is defined. In other words, in the case of the relationship between the narrative clause constituting Monads shown in FIG. 15, [62] (MURAKAMI Saburo) and [81] (Tamiflu) are not directly associated with each other. However, various combinations of records, such as the combination of records that constitutes a meaning tree in which [62] (MURAKAMI Saburo) is associated with [81] (Tamiflu) by [74] (therapeutic agent), are possible. In this embodiment, all the records from which meaning tree Monads of such combinations can be generated are generated. In addition, permissible combinations are previously set as definitions so that records corresponding to meaning tree Monads can be generated only from the set combinations. FIG. 15 shows a meaning tree that is formed when associating [81] (Tamiflu) with [73] (influenza) by [74] (therapeutic agent) is defined.

The CPU 23 extracts all master-slave Monads, detail Monads and narrative clause link Monads from the written Monads and extracts all the top Monads (step S81 in FIG. 14). In this case, Monads with ID 304, ID 305, ID 374 and ID 73 are extracted from FIGs. 17A and 17B.

The CPU 23 determines whether there is an omission flag (step S83 in FIG. 14). This is to add a weight Monad and a time Monad to existing Monads because a duplicated Monad is not generated in step S77 in FIG. 11 when the same Monad already exists.

In this case, because there is no Monad having an omission flag being on, the CPU 23 advances to step S87, initializes a processing number p (step S87 in FIG. 14), and determines whether the 0th Monad is a written Monad (step S89). In this case, because the 0th Monad is the Monad with an ID 304 and is not a Monad added as a processing target in step S85, the CPU 23 generates a record having the ID 304 of the 0th Monad in the connection field, "27" in the relation field and "43" (weight 1) in the meaning field. An empty ID is simply used for the record. Here, an ID 503 is used.

The CPU 23 generates a record having the ID "304" of the 0th Monad in the connection field 63, "25" in the relation field 64 and the ID of the Monad representing the date and time in the meaning field 62 (step S95).

The CPU 23 determines whether processing has been completed for all the processing target Monads (step S97). In this case, processing has not been completed for all the processing target Monads, the CPU 23 increments the processing number p and repeats the processing in and after step S89.

Because the 1st Monad is a written Monad with an ID 305, the CPU 23 generates a record having the ID "305" of the 1st Monad in the connection field, "27" in the relation field and "43" (weight 1) in the meaning field (step S91). Here, an ID 504 is used.

The CPU 23 generates a record having the ID "305" of the 1st Monad in the connection field 63, "25" in the relation field 64 and the ID of the Monad representing the date and time in the meaning field 62 (step S95).

The CPU 23 determines whether processing has been completed for all the processing target Monads (step S97). In this case, processing has not been completed for all the processing target Monads, the CPU 23 increments the processing number p and repeats the processing in and after step S89.

After that, a weight Monad and a time Monad are added in the same manner.

The records for the added weight Monads and time Monads are shown in FIG. 17C. When these are added, meaning tree Monads as shown in FIG. 16 can be read when data are read for an ID 73.

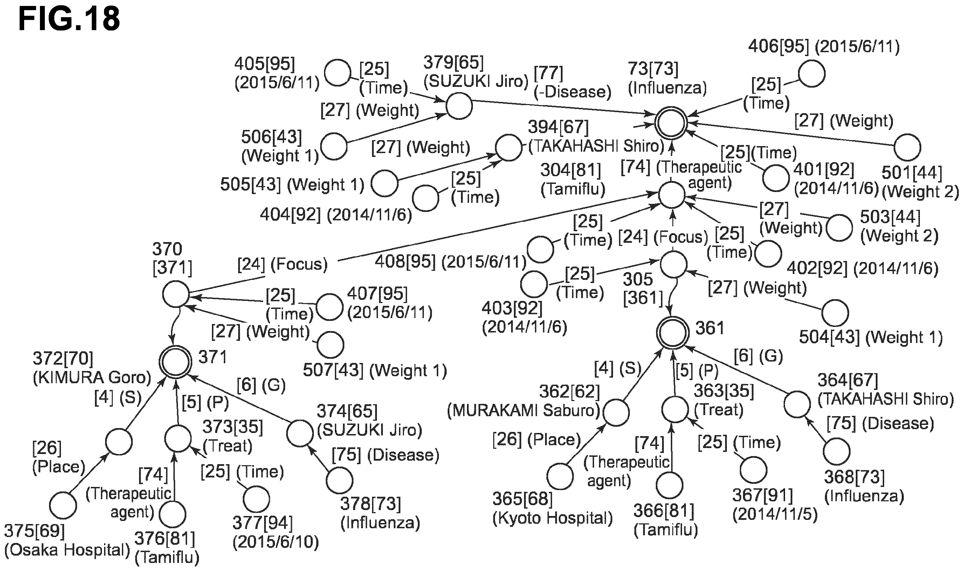

Also, when data of narrative clause constituting Monads corresponding to "KIMURA Goro treated SUZUKI Jiro with influenza using Tamiflu as a therapeutic agent at Osaka Hospital on 2015/6/10." are given with the records corresponding to FIG. 16 stored, records are added to the table in the same manner by the processing shown in FIG. 9, FIG. 11 and FIG. 14 so that the state as shown in FIG. 18 can be achieved.

When the data of narrative clause constituting Monads corresponding to "KIMURA Goro treated SUZUKI Jiro with influenza using Tamiflu as a therapeutic agent at Osaka Hospital on 2015/6/10." are given in the state shown in FIG. 16, the CPU 23 advances from step S67 to step S77 in FIG. 11 during write processing because the Monad with an ID 304[81] (Tamiflu) already exists. In step S77, the CPU 23 generates a narrative clause link Monad for the existing meaning tree Monad and writes it as a record. In this case, a Monad with an ID 370 is generated. Then, the CPU 23 turns on an omission flag for the Monad with an ID 304 (step S78).

Because an omission flag requesting omission of writing is on as described above, the CPU 23 advances from step S83 to step S85 in FIG. 14, and adds the Monad with an ID 304 as a processing target. Also, because the Monad ID 304 becomes a processing target Monad, the CPU 23 advances from step S89 to step S93, and increments (+1) the weight of the records having the ID of this Monad in the connection field 63 and "27" in the relation field 64. For example, in this case, the ID 503 is incremented to "44," which represents "weight 2." For such procedure, the ID of the Monad representing the weight (such as weight 2) resulting from incrementing the weight by one is simply determined in advance.

As a result, as shown in FIG. 18, a weight is assigned to all the Monads stored in the table except narrative clause constituting Monads. For example, the weights of the Monad with an ID 73[73] (influenza) and the Monad with an ID 304[81] (Tamiflu) are increased as represented by a Monad with ID 501[44] (weight 2) and a Monad with an ID 503[44] (weight 2), respectively.

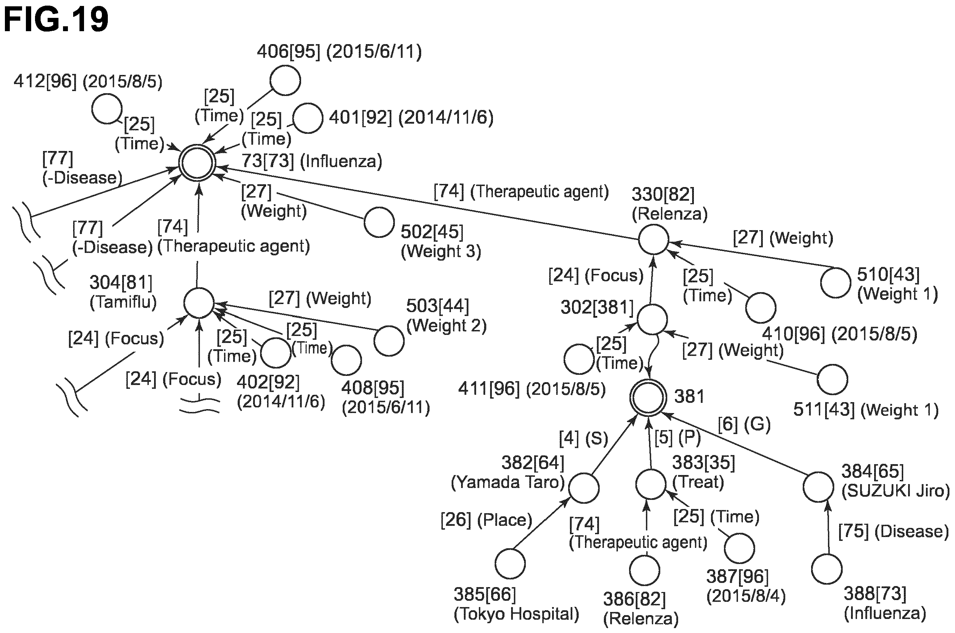

When a Monad with an ID 330[82] (Relenza) is given as a therapeutic agent to the Monad with an ID 73[73] (influenza) when the records corresponding to the tree structure shown in FIG. 18 have been stored in the table, the weight of the Monad with an ID 73[73] (influenza) is increased as represented by a Monad with an ID 502[45] (weight 3) as shown in FIG. 19.

While the weight is changed by changing the data in the meaning field 62 to a record ID that is greater by one than the previous one without changing the ID of the Monad representing the weight in this embodiment, a new record may be generated and the old Monad may be deleted.

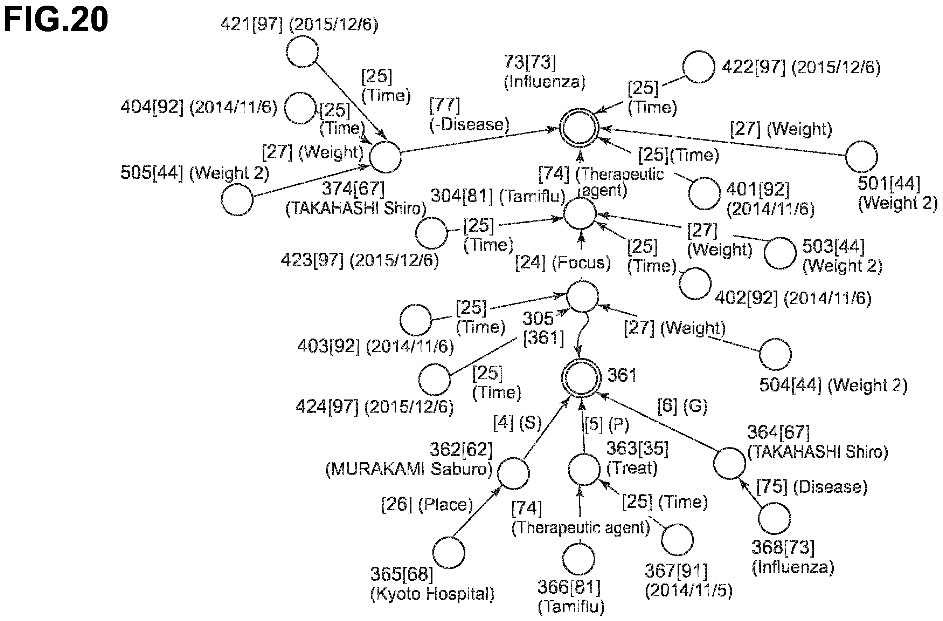

A flowchart of the processing for adding a weight Monad and a time Monad in the read processing is described. When data are read for "influenza" and "Tamiflu" in the state shown in FIG. 16 on December 6, 2015, the weights of the weight Monads are increased and time Monads are added as shown in FIG. 20. For example, the ID 501 [43] (weight 1) of the ID 73[73] (influenza) is changed to an ID 501[44] (weight 2), and an ID 422[97] (2015/12/6) is added to the ID 73[73] (influenza).

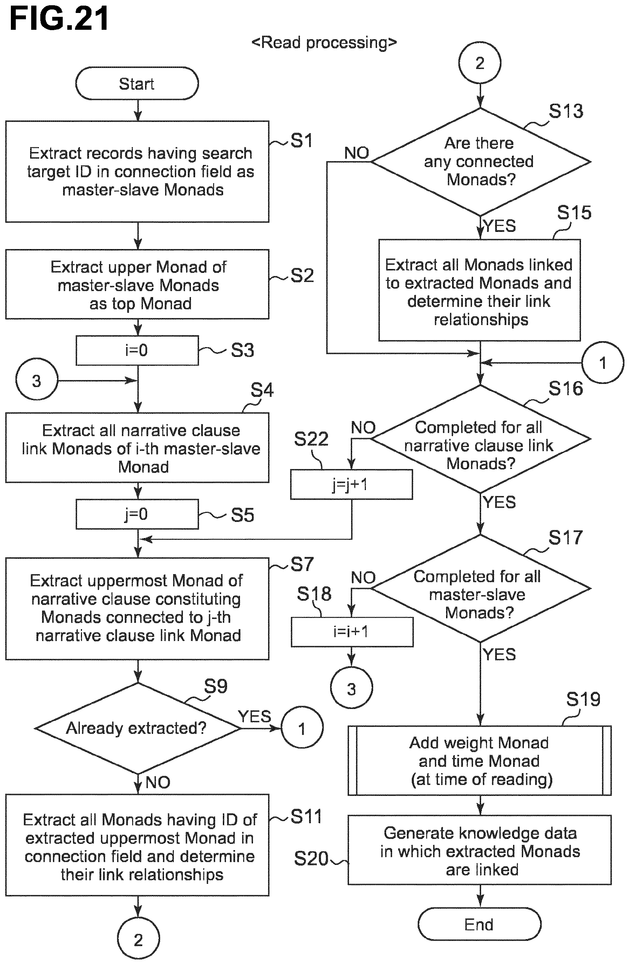

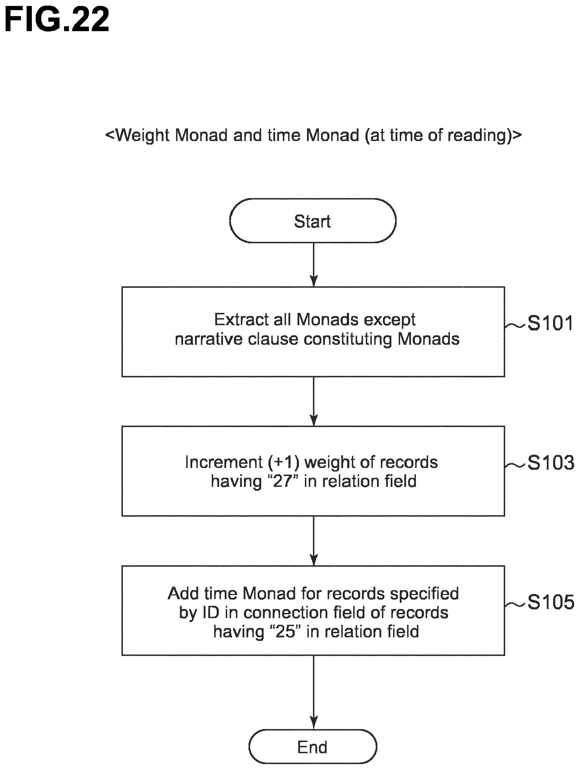

This processing is described with reference to FIG. 21 and FIG. 22. FIG. 21 is different from FIG. 7 in that step S19 is added between step S17 and step S20.

Details of step S19 are shown in FIG. 22.

The CPU 23 extracts all the Monads except narrative clause constituting Monads from the read Monad (step S101). In this case, because the Monads shown in FIG. 20 have been extracted, Monads with ID 305, ID 304 and ID 43 are read.

The CPU 23 increments (+1) the weight of the records having "27" in the relation field 64 (step S103). Specifically, the CPU 23 simply changes the data in the meaning field 62 to a record ID representing a weight that is greater by one than the previous one. In this case, the ID in the meaning field 62 of Monads with ID 501, ID 505, ID 503 and ID 504 are all changed to an ID 44, which represents "weight 2."

The CPU 23 extracts all the records having "25" in the relation field 64, and adds a time Monad to records specified by the ID in the connection field 63 of the extracted records (step S105). In this case, a time Monad representing the date on which the data are read "December 6, 2015" is added to the Monads with ID 73, ID 374, ID 304 and ID 305.

Storing such "weight" and "time" provides the following merits. For example, as the cases in which "Tamiflu" is used to treat "influenza" as shown in FIG. 17 increase, the frequency at which the data are read increases. Thus, it is possible to know the overall trend. In addition, because narrative clause constituting Monads are linked as its details, it is possible to know, for example, that different usage is applied depending on the characteristics with reference to the details if there are slightly different examples of use. For example, if age is stored as an attribute, it is possible to know that "Tamiflu" is often used to treat adults with influenza and other medicines are used to treat children.

Also, it is possible to know when a certain generic drug began to be used to treat what symptoms with reference to times. Also, when a search is performed for the terms "influenza" and "therapeutic agent," it is possible to know at the time of extraction that there is a recent trend toward the increased use of "Relenza" in place of "Tamiflu," which used be frequently used.

When the records of usage of therapeutic agents are stored in a database, even a doctor who is not very familiar with a certain area can make a right decision with reference to the database. In addition, the database allows for automatic diagnoses. For example, advancement in medicine is so fast that the construction of a system containing medical data necessary for automatic diagnoses cannot catch up with the advancement in medicine. With this system, however, if approximately 60% of basic information is stored in advance, the system grows by accepting examples of use from many users and becomes able to make automatic diagnoses with an accuracy of close to 100%.

In this embodiment, weight Monads and time Monads are assigned both at times of reading the searched data and at time of writing, and the weight of each weight Monad is increased by one at a time. However, different weights may be added at the time of reading and at the time of writing.

In this embodiment, records corresponding to meaning tree Monads are generated for preset combinations of not only directly linked narrative clause constituting Monads but also indirectly linked narrative clause constituting Monads. However, the present invention is not limited thereto. Associated Monads may be generated for anything possible without limitation from such settings.

In the second embodiment, weight Monads are added. At that time, if there is already a master-slave Monad at a time of writing, the uppermost Monad of the narrative clause constituting Monads is connected to the master-slave Monad by a narrative clause link Monad without writing the generated Monad. Thus, even if the weights are not stored, the writing frequency can be known by counting the number of uppermost Monads of narrative clause constituting Monads connected by such focus Monads.

In addition, even if contradictory data have been stored, the database can be used as a knowledge database without contradiction. For example, when narrative clause constituting Monads corresponding to "HONDA Risa dislikes green peppers." are given, a Monad having an ID representing green peppers in the meaning field, an ID representing HONDA Risa in the connection field and an ID representing "-dislike (is disliked)" in the relation field is generated, and linked to the given narrative clause constituting Monads by a narrative clause link Monad.

When a narrative clause "HONDA Risa likes green peppers." is given here, a Monad having the ID representing green peppers in the meaning field, the ID representing HONDA Risa in the connection field and an ID representing "-like (is liked)" in the relation field is generated and linked to the given narrative clause constituting Monads by a narrative clause link Monad in the same manner. In this state, contradictory pieces of knowledge have been stored.

After that, when a narrative clause "HONDA Risa likes green peppers." is given again, a Monad having the ID representing green peppers in the meaning field, the ID representing HONDA Risa in the connection field and the ID representing "-like (is liked)" in the relation field and linked to the narrative clause constituting Monads by a narrative clause link Monad increase.

When a search is performed for the terms "HONDA Risa" and "green pepper" in this state, a meaning tree having more narrative clause constituting Monads linked by narrative clause link Monads is read in order to prevent a contradictory meaning tree from being read.

When the weight Monads have been added, a meaning tree having a weight Monad representing a heavier weight is simply read.

Contradictory concepts can be dealt with by reading a meaning tree with higher writing frequency as described above. The same holds true for reading.

This also applies to time Monads. When a newer meaning tree is read, contradictory data can be dealt with appropriately.

In this embodiment, the date is employed for a time Monad. However, even the time of day may be stored.

While the weight of each weight Monad is increased by one at the times of writing and reading in this embodiment, time Monads may be utilized for weighting. For example, when the original weight is 2, a coefficient k of 0.3 may be used to calculate the weight as 2 + 0.3*1 = 2.3 at a time of writing if the difference in time from the latest time Monad is large. Such a coefficient may be varied dynamically. Alternatively, a lighter weight may be added as the total of differences between the times represented by all the time Monads and the time of writing, instead of the difference between the time represented by the latest time Monad and the time of writing, is larger. In contrast to this, a heavier weight may be added to a Monad that is frequently used recently. The same may be applied to reading.

### 5. Other embodiments

In each of the above embodiments, the relationship that is established when a link is formed from a lower Monad to an upper Monad of master-slave Monads is stored in the relation field 64. This is to ensure agreement with the association between detail Monads.

In the first embodiment, a case is described where the sentence "HONDA Risa eats an orange at the cafeteria." is analyzed at the time of writing and, consequently, data "HONDA Risa" (source case), "orange" (goal case), "eat" (path case) and "cafeteria" (place) are given. However, data may be given with the link state of each data specified as a template.

While a case where the present invention is implemented as one system is described in the above embodiments, a more accurate knowledge database can be obtained if table data are collected from a plurality of computers.

To integrate a plurality of such databases, the following method is simply used including: 1) extracting all the top Monads of meaning tree Monads; 2) selecting one top Monad and extracting all the slave Monads dependent on this top Monad; 3) adding only the narrative clause data if there is the same slave Monad; 4) perform this on all the slave Monads; and 5) repeating these procedures to all the top Monads.

When there are weight Monads, the values of the weight Monads are simply added. When there are time Monads, they are simply linked additionally.

In the above embodiments, a CPU is used to accomplish the functions shown in FIG. 1 and software is used to realize it. However, part or all of the functions may be achieved by hardware such as a logic circuit.

Part of processing of the above program may be executed by an operating system (OS).

In this specification, even narrative clause constituting Monads are read at the time of reading. However, reading narrative clause constituting Monads is not essential because a knowledge database is meaningful if it can simply link one piece of data to another in a meaning tree. For example, if various types of information are further linked in FIG. 12, the linkage of data may expand as follows: "HONDA Risa" → "apple" → "fruit" → "juice" → "health."

In addition, writing narrative clause link Monads and narrative clause constituting Monads is not essential. For example, narrative clause link Monads and narrative clause constituting Monads may not be written if the database is simple.

### 6. Third embodiment

### 6.1 <Differences from first embodiment

In the above embodiments, description is made, for ease of understanding, on the assumption that one substance corresponds to one label as shown in FIG. 5, specifically, on the assumption that the substance with an ID 61 specified by the meaning tree in FIG. 12 is in one-to-one correspondence with the label "HONDA Risa" (refer to FIG. 5).

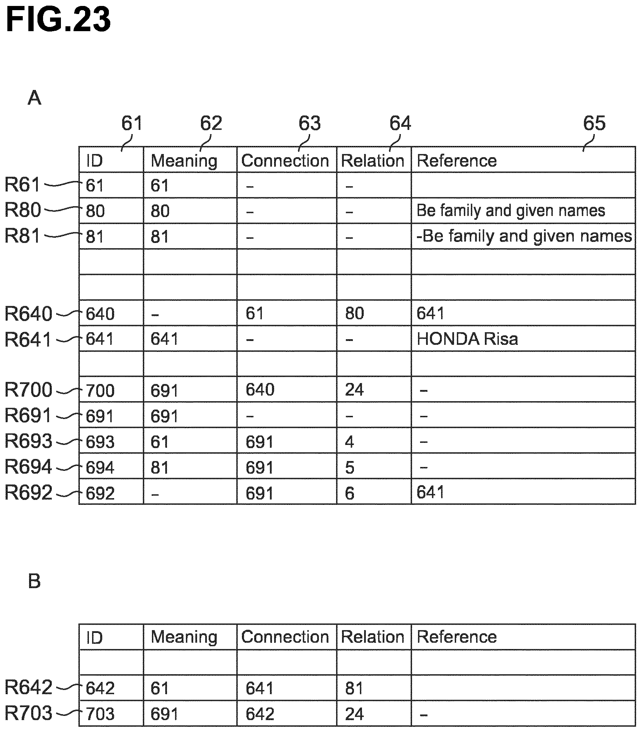

Such label data may be generated and stored in the reference field 65 (refer to FIG. 4) as shown in FIG. 23. The label data can be read with reference to the record ID thereof.

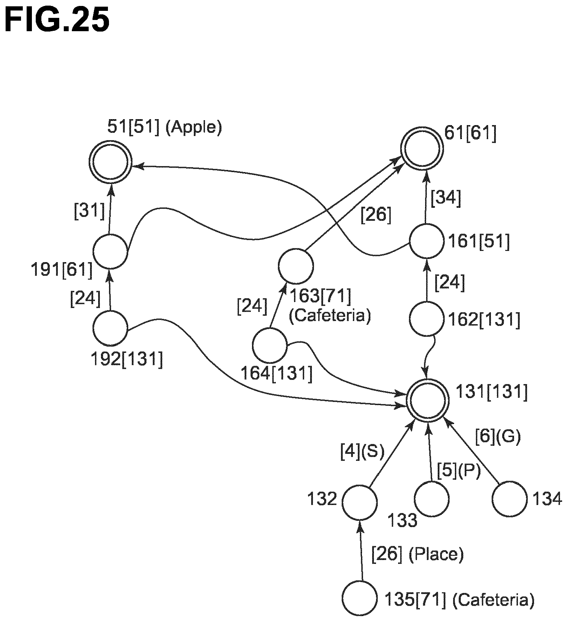

In FIG. 25, a straight line arrow represents a link relationship and a curved line arrow represents a referential relationship. There are three types of referential relationships: references between different meaning trees, references between a meaning tree and a reference tree, and references between reference trees. These are described later.

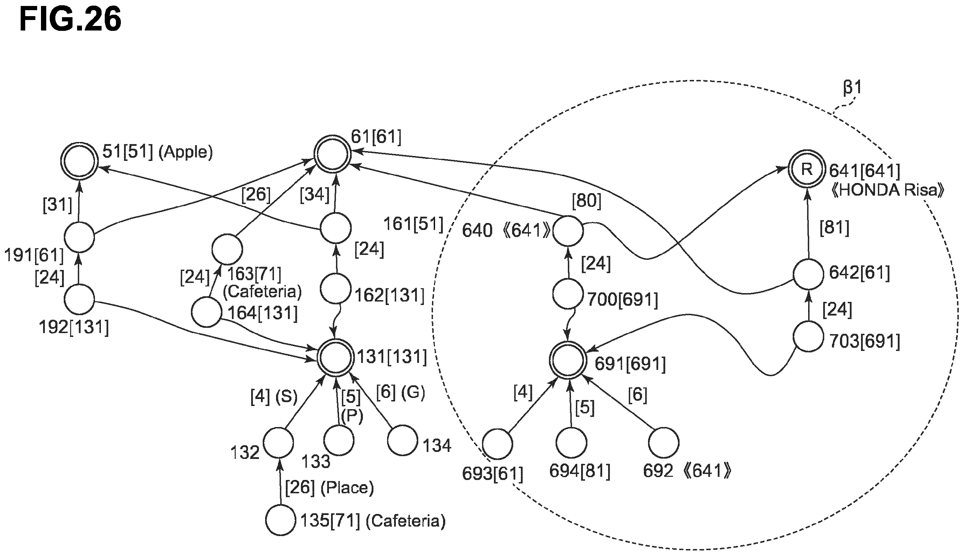

In FIG. 26, the IDs stored in the meaning field 62 are enclosed in [ ] and their corresponding texts are enclosed in () in the same manner as in the first embodiment. The IDs in the relation field 64 are represented by [ ] placed in the vicinity of the straight line arrows. The texts stored in the reference field 65 are enclosed in « ».

In the following, the data structure in the case where the substance with an ID 61 has a link attribute "Be family and given names" and its attribute value is "HONDA Risa" is described. As described above, an attribute value can be a label, or it can be a meaning.

In FIG. 23, records R80, R81 and R641 are referential definition Monads. A referential definition Monad is a Monad having the same ID in the ID field 61 and the meaning field 62, nothing in the connection field 63 and the relation field 64 and referential target data in the reference field 65. While the referential target data in the reference field 65 comprises a text in this embodiment, the present invention is not limited thereto. In addition, such a text may be a file specifying ID that represents the location where specific image data or audio data are stored, such as a URI.

A record R640 is a referential master-slave Monad. A referential master-slave Monad is a Monad having the hierarchical link relationship between two definition Monads in the connection field 63, nothing in the meaning field 62, in which an attribute value specifying ID specifying an attribute value representing a value of the link attribute is stored, an attribute of the link relationship in the relation field 64, and an ID of represented data of the link relationship in the reference field 65.

In the first embodiment, a definition Monad is defined as a Monad having the same ID in the ID field 61 and the meaning field 62 and nothing in the other fields. On the other hand, when all the five dimensions are utilized, Monads having data in the reference field 65 are included in the definition Monads. In other words, the individual element data specified by a record R641 is a definition Monad.

Records R691 to 694 are narrative clause constituting Monads, and a record R700 is a narrative clause link Monad. These are the same as those in the first embodiment.

### 6.2 <Read processing>

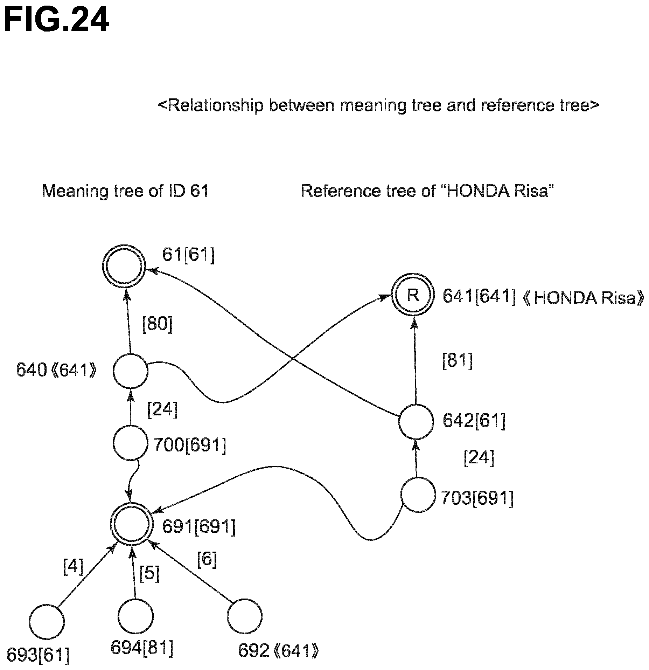

When the main program reads the records in FIGs. 23A and 23B and links the Monads, a meaning tree and a reference tree as shown in FIG. 24 can be generated.

For example, as described in the first embodiment, if records as shown in FIG. 4 have been stored in the table, a meaning tree as shown in FIG. 25 is formed when these records are read. In the following, a case where records as shown in FIG. 23 have been additionally stored and a meaning tree and a reference tree as shown in FIG. 26 are formed when these records are read is described. Because the hardware configuration is the same as that in the first embodiment, its description is omitted.

The part β1 encircled by a dashed line in FIG. 26 represents the tree added to the tree state shown in FIG. 25. In FIG. 26, the Monads with ID 51 and ID 163 are shown as 51[51] (apple) and 163[71] (cafeteria), respectively, in the same manner as in the first embodiment. This is for ease of understanding. In reality, their labels are referenced in the reference tree as in the case of the label "HONDA Risa."

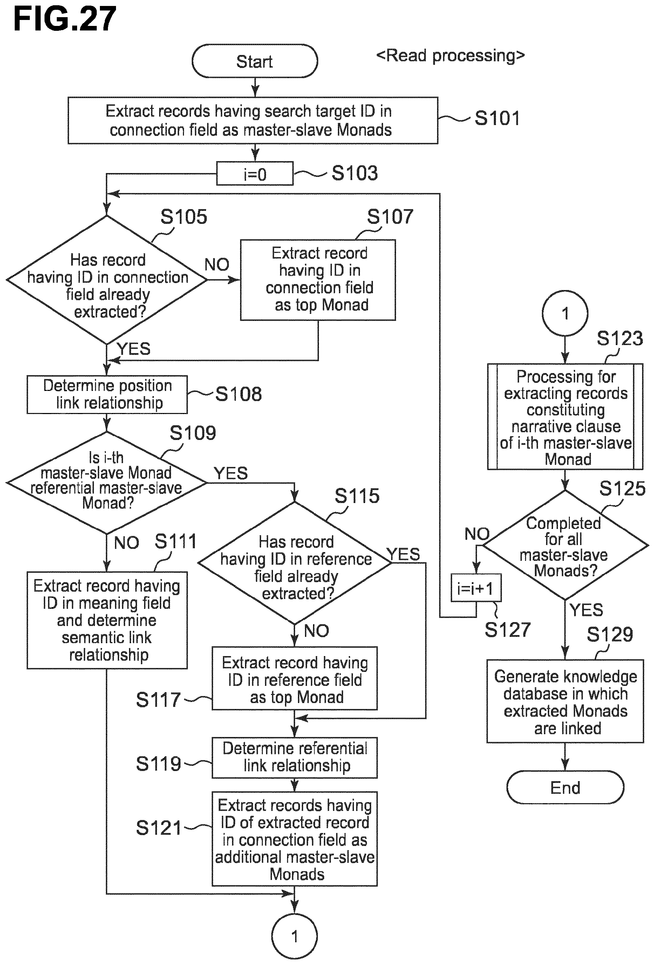

FIG. 27 shows the flowchart of this processing. The CPU 23 extracts records having the search target ID in the connection field 63 as master-slave Monads (step S101 in FIG. 27). In this case, because the search target ID is "61," records having "61" in the connection field 63, i.e., a record R640 in FIG. 23 is extracted together with records R161 and R163 in FIG. 4.

The CPU 23 initializes a processing number i (step S103), and determines whether the record having the ID in the connection field of the i-th master-slave Monad has been already extracted (step S105). Because the record R161 is the 0th master-slave Monad, the ID "61" in its connection field has not been extracted yet. Thus, the record, which has the ID in the connection field of the record R161, is extracted as a top Monad (step S107).

The CPU 23 determines that the records R161 and R61 are in a position link relationship (step S108).

The CPU 23 determines whether the 0th master-slave Monad is a referential master-slave Monad (step S109). Whether a record is a referential master-slave Monad can be determined based on whether it has nothing in the meaning field 62. In this case, because the record R161 has data in the meaning field 62, the CPU 23 extracts the record 51, which has the ID "51" in the meaning field of the record R161, as a link target and determines it as having a semantic link relationship (step S111).

The CPU 23 extracts records constituting the narrative clause of the 0th master-slave Monad (step S123).

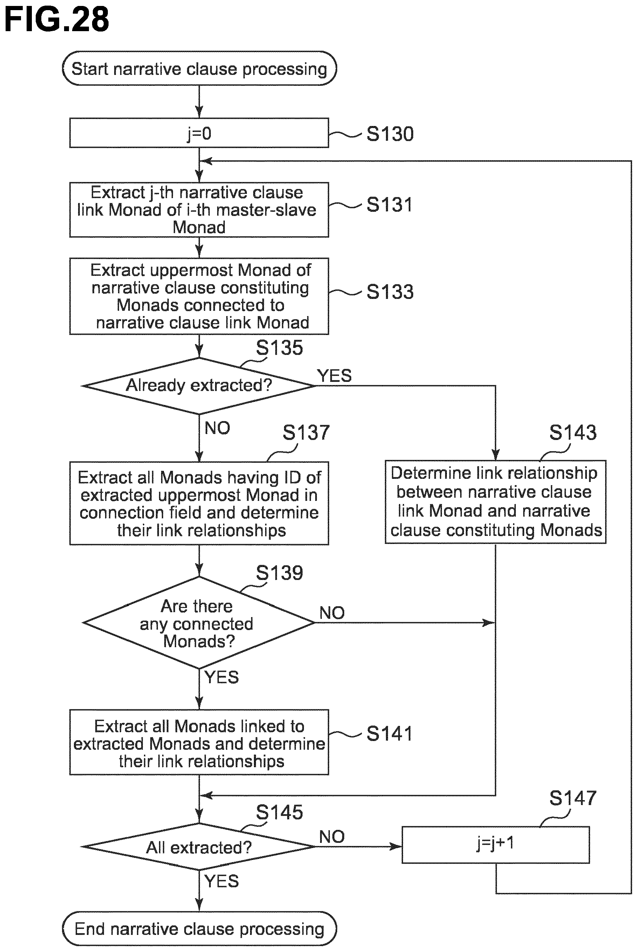

Details of the processing in step S123 are shown in FIG. 28. FIG. 28 is almost the same as step S7 to step S22 in FIG. 7 but is described briefly below.

The CPU 23 initializes a narrative clause processing number j (step S130).

The CPU 23 extracts the j-th narrative clause link Monad of the i-th master-slave Monad (step S131). Whether a Monad is a narrative clause link Monad is determined in the same manner as in the first embodiment. In this case, a record R162, which has the record ID "161" of the extracted 0th master-slave Monad R161 in the connection field 63 and "24" in the relation field 64 is extracted as a narrative clause link Monad.

The CPU 23 extracts the uppermost Monad of narrative clause constituting Monads connected to this narrative clause link Monad (step S133). In this case, the record R162 as the 0th narrative clause link Monad has "131" in the meaning field. Thus, a record R131 is extracted as the uppermost Monad of the corresponding narrative clause constituting Monads.

The CPU 23 determines whether the ID of the extracted uppermost Monad has already been extracted (step S135). In this case, because the ID has not been extracted yet, the CPU 23 extracts records having the ID of the extracted uppermost Monad in the connection field 63, and determines their link relationships (step S137).

The CPU 23 determines whether there are any Monads connected to the extracted narrative clause constituting Monads (step S139). In this case, a record R135, which has "132" in the connection field 63, exists in FIG. 4. Thus, the CPU 23 extracts the record R135 and determines its link relationship (step S141).

The CPU 23 determines whether all the narrative clause link Monads of the i-th master-slave Monad have been extracted (step S145). If there remains any, the CPU 23 increments the narrative clause processing number j (step S147) and repeats the processing in and after step S131. In this case, all the narrative clause link Monads have been extracted, the CPU 23 determines whether processing has been completed for all the master-slave Monads when processing for extracting records constituting the narrative clause is completed (step S125 in FIG. 27).

While a case where the record R135 is the only one Monad connected to the narrative clause constituting Monads is described in this embodiment, there are also cases where each record is further modified and many Monads are extracted as being connected to the narrative clause constituting Monads as described later. In such a case, a link relationship is determined for every extracted Monad.

In this case, because processing has not been completed for the record R163 in step S125 in FIG. 27, the CPU 23 increments the processing number i (step S127) and advances to step S105.

The CPU 23 performs the processing in and after step S105 on the record R163 as the 1st master-slave Monad. In this case, the processing is the same as that performed on the record R161 except the following points.

Because the ID "61" in the connection field has already been extracted in step S105 in FIG. 27, the processing in step S107 is not executed. Also, because the record R131 has already been extracted in step S135 in FIG. 28, the link relationship between the narrative clause link Monad and each narrative clause constituting Monad is determined without executing step S137 to step S141 (step S143).

When processing for extracting records constituting a narrative clause is completed, the CPU 23 determines whether processing has been completed for all the master-slave Monads (step S125 in FIG. 27). In this case, because processing has not been completed for a record R640, the CPU 23 increments the processing number i (step S127) and advances to step S105.

The CPU 23 performs processing in and after step S105 on the record R640 at the 2nd master-slave Monad.

The CPU 23 determines whether the record having the ID in the connection field of the 2nd master-slave Monad has been already extracted (step S105). In this case, because the ID "61" in the connection field of the record R640 has already been extracted, the CPU 23 advances to step S108 and determines the position link relationship between the 2nd master-slave Monad and the top Monad, which has been already extracted.

The CPU 23 determines whether this master-slave Monad is a referential master-slave Monad (step S109). In this case, the record R640 has nothing in the meaning field 62. Thus, the CPU 23 advances to step S115, and determines whether the record having the ID in the reference field 65 of the record R640 has been extracted. In this case, because the record 641, which has the ID "641" in the reference field 65 of the record R640, has not been extracted yet, the CPU 23 extracts the ID "641" in the reference field 65 as a top Monad (step S117). The CPU 23 determines that the extracted top Monad and the referential master-slave Monad are in a referential link relationship (step S119).

The CPU 23 extracts records having the ID 641 of the extracted top Monad in the connection field as additional master-slave Monads and adds them (step S121). In this case, a record R642 (refer to FIG. 23B) is extracted and added as an additional master-slave Monad.

The CPU 23 extracts records constituting the narrative clause having the record R640 as a master-slave Monad (step S123). This step is performed as follows. The CPU 23 initializes the narrative clause processing number j (step S130 in FIG. 28).

The CPU 23 extracts the 0th narrative clause link Monad of the 2nd master-slave Monad (step S131 in FIG. 28). In this case, a record R700, which has the ID 640 in the connection field 63 and "24" in the relation field 64 (refer to FIG. 23A), is extracted as the 0th narrative clause link Monad.

The CPU 23 extracts the uppermost Monad of the narrative clause constituting Monads connected to this narrative clause link Monad (step S133). In this case, the record R700 has "691" in the meaning field. Thus, a record R691 is extracted as the uppermost Monad of the corresponding narrative clause constituting Monads.

The CPU 23 determines whether the ID of the extracted uppermost Monad has already been extracted (step S135). In this case, because the ID has not been extracted yet, the CPU 23 extracts records having the ID of the extracted uppermost Monad in the connection field 63, and determines their link relationships (step S137).

The CPU 23 determines whether there are any Monads connected to the extracted narrative clause constituting Monads (step S139). In this case, there is no record having the ID of any of the extracted narrative clause constituting Monads in the connection field 63. Thus, the CPU 23 terminates the narrative clause processing.

When the processing for extracting records constituting the narrative clause is completed, the CPU 23 determines the link relationship (step S141).

The CPU 23 determines whether all the narrative clause link Monads of the i-th master-slave Monad have been extracted (step S145). If there remains any, the CPU 23 increments the narrative clause processing number j (step S147), and repeats the processing in and after step S131. In this case, all the narrative clause link Monads have been extracted, the CPU 23 determines whether processing has been completed for all the master-slave Monads when processing for extracting records constituting the narrative clause is completed (step S125 in FIG. 27). In this case, processing has not been completed for the record R642 added in step S115, the CPU 23 increments the processing number i (step S123) and advances to step S105.

Because the ID "641" in the connection field of the record R642 has already been extracted, the CPU 23 determines that the records R641 and R642 are in a position link relationship (step S108).

The CPU 23 determines whether the 3rd master-slave Monad is a referential master-slave Monad (step S109). In this case, because the record R642 has data in the meaning field 62, the CPU 23 extracts the record, which has the ID "61" in the meaning field of the record R642, as a link target and determines it as having a semantic link relationship (step S111).

The CPU 23 extracts records constituting the narrative clause having the record R642 as a master-slave Monad (step S123). Specifically, the CPU 23 extracts the narrative clause link Monad of the 3rd master-slave Monad (step S131 in FIG. 28). In this case, a record R703, which has the ID 642 in the connection field 63 and "24" in the relation field 64, is extracted as the narrative clause link Monad.

The CPU 23 extracts the uppermost Monad of the narrative clause constituting Monads connected to this narrative clause link Monad (step S133). In this case, the record R703 has "691" in the meaning field. Thus, the record R691 is extracted as the uppermost Monad of the corresponding narrative clause constituting Monads.

The CPU 23 determines whether the ID of the extracted uppermost Monad has already been extracted (step S135). In this case, the ID has already been extracted, the CPU 23 determines the link relationships between the narrative clause link Monad and the narrative clause constituting Monads (step S143).

While all the record constituting a reference tree are extracted in this embodiment, only the records of top Monads of a reference tree may be extracted. For example, the Monads with ID 642 and ID 703 in FIG. 26 may not be extracted. This is because there is a case where it is only necessary to know the label of the ID 641 referenced from the ID 640. In this case, the processing in step S121 in FIG. 27 is omitted and the processing in step S129 is simply executed without executing the processing in steps S123 to 127.

It is possible to perform an associative search with reference to a label in the reference field from the beginning. For example, when "*HONDA*" is entered to perform an associative search, records having "*HONDA*" in the reference field 65 are specified, and records having the ID of any of these records in the connection field 64 are extracted. Formation of a meaning tree from the extracted records allows for linkage of data from a reference tree to the meaning tree.

Records having the target ID not in the connection field 64 but in the reference field 65 may be extracted.

When the narrative clause processing is completed, the CPU 23 determines whether processing has been completed for all the master-slave Monads (step S125 in FIG. 27). In this case, processing has been completed for all the master-slave Monads, the CPU 23 generates a knowledge database in which extracted Monads are linked (step S129).

Specifically, the elements are linked based on the position link relationships, the semantic link relationships and the referential link relationships. In this embodiment, a position link relationship is represented by a straight line, and a semantic link relationship or a referential link relationship is represented by a curved line. As a result, the link relationships as shown in FIG. 26 can be obtained. While top Monads are shown by a double circle and a letter "R" is placed in the double circle for the top Monad of a reference tree in FIG. 26, the present invention is not limited thereto.

A position link relationship refers to a relationship in which two elements are connected with their hierarchical relationship and their link attribute is determined. In this case, a value is in their meaning fields or reference fields.

A semantic link relationship refers to a relationship in which two elements are linked by the ID in their meaning fields and a referential link relationship refers to a relationship in which two elements are linked by the ID in their reference fields.

In this knowledge database, elements are linked by such position link relationships, semantic link relationships and referential link relationships. Thus, associated record information can be sequentially read by sequentially tracking these link relationships.

### 6.3 <Regarding referential relationship>

While a case where the label of the substance with an ID 61 is "HONDA Risa" is described in FIG. 23, such a label allows for successive linkage of data from one meaning tree through label Monads to other meaning trees when there is one label for a plurality of substances (many-to-one), when there is a plurality of labels for one substance (one-to-many), or when there is a plurality of labels for a plurality of substances (many-to-many).

### 6.3.1 <Regarding many-to-one referential relationship>

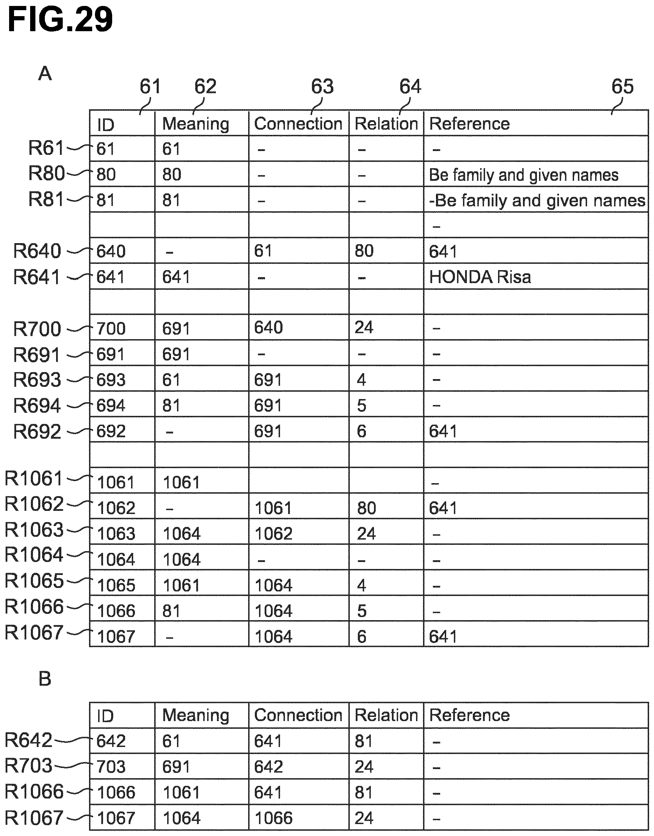

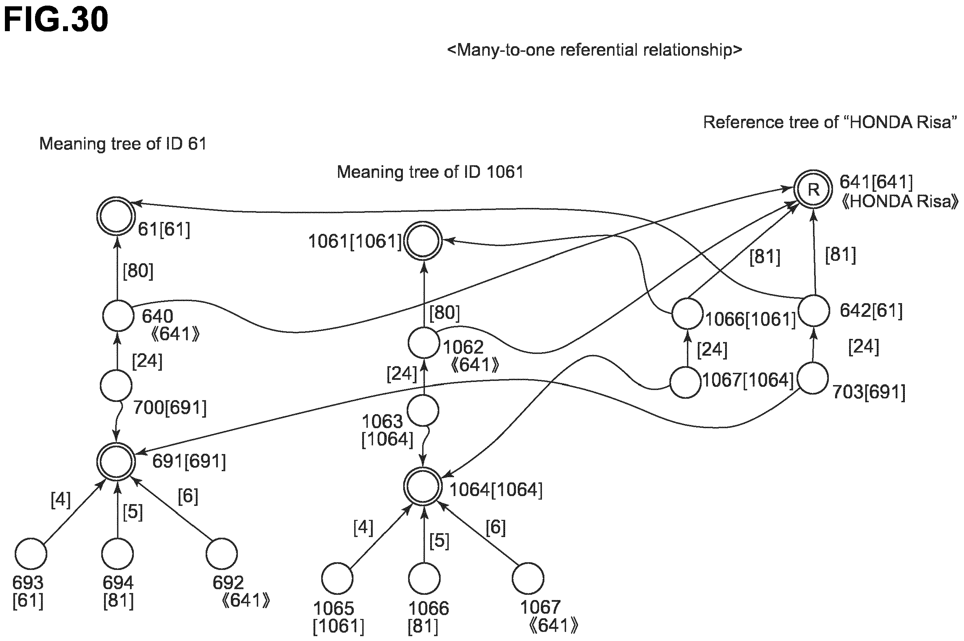

A many-to-one case is described. When records as shown in FIG. 29 have been stored in the table and the label of two substances with ID 61 and ID 1061 have the same label "HONDA Risa," a meaning tree and a reference tree as shown in FIG. 30 are formed as a result of the read processing shown in FIG. 27.

In FIG. 30, one referential link relationship is formed from each of a plurality of substances to one reference tree. Specifically, as shown in FIG. 30, referential links are formed from Monads with ID 640 and ID 1062 to a Monad with ID 641.

In other words, in this embodiment, at least one piece of lower individual element data (ID 640) among a plurality of pieces of lower individual element data associated with upper individual element data of first link knowledge data do not have the attribute value data and individual element data (Monad with an ID 641) referenced by the element data ID of individual element data of the referential destination are associated therewith; at least one piece of lower individual element data (Monad with an ID 1062) among a plurality of pieces of lower individual element data associated with upper individual element data of second link knowledge data do not have the attribute value data and individual element data (Monad with an ID 641) referenced by the element data ID of the individual element data of the referential destination are associated therewith; and the individual element data of these referential destinations are the same individual element data (Monad with an ID 641).

When meaning trees and a reference tree are in such a relationship, a Monad with an ID 641 is referenced from the meaning tree having a Monad with an ID 61 as the top Monad, and a meaning tree having a Monad with an ID 1061 as the top Monad can be derived from this Monad.

### 6.3.2 <Regarding one-to-many referential relationship>

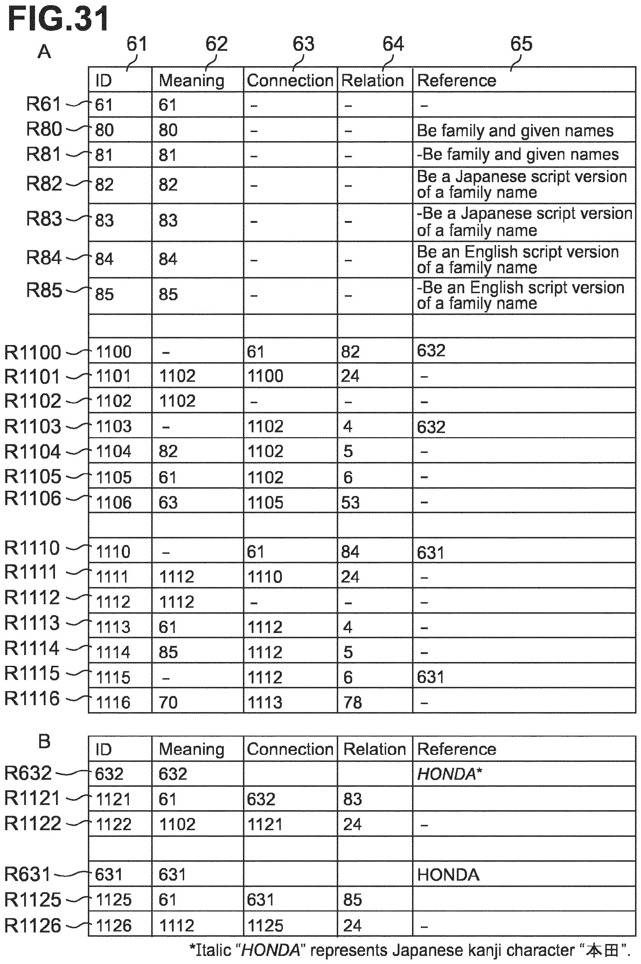

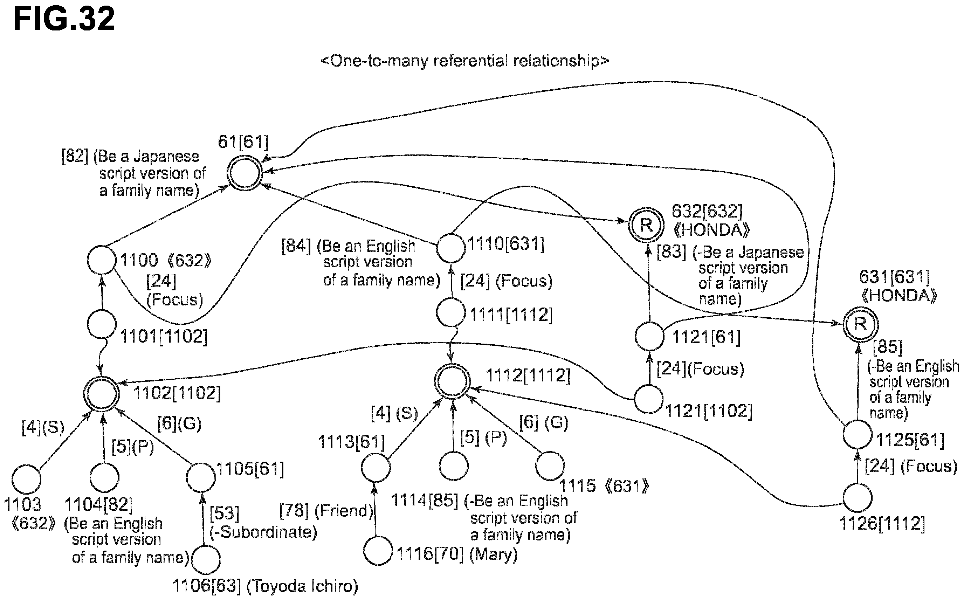

A one-to-many case is described. When records as shown in FIG. 31 have been stored in the table and one substance with an ID 61 has two labels "HONDA" and "*HONDA*," a referential link relationship is constructed from one substance with an ID 61 to two reference trees as shown in FIG. 32.

Specifically, as shown in FIG. 32, the Monad with an ID 61 has two Monads, Monads with ID 1100 and ID 1110, and referential links are formed from the Monad with an ID 1100 and the Monad with an ID 1110 to the Monad with an ID 632 and Monad with an ID 631, respectively. As a result, it is possible to show that the substance with an ID 61 has two labels.

In other words, in this embodiment, at least two or more pieces of individual element data (in this case, the reference tree having the Monad with an ID 632 as a top Monad and the reference tree having the Monad with an ID 631 as a top Monad) among the plurality of pieces of link knowledge data stored in the storage means (in this case, the meaning tree having the Monad with an ID 61 as a top Monad, and the reference tree having the Monad with an ID 632 as a top Monad and the reference tree having the Monad with an ID 631 as a top Monad) fulfil the following conditions.

First lower individual element data (the Monad with an ID 1100) and second lower individual element data (the Monad with an ID 1110) among a plurality of pieces of lower individual element data associated with upper individual element data of first link knowledge data (the meaning tree having the Monad with an ID 61 as a top Monad) do not have the attribute value data and individual element data of the referential destinations (the Monads with ID 632 and ID 631) referenced by the element data IDs of the individual element data of the referential destinations are associated therewith; and the individual element data of the referential destinations are different individual element data (the Monads with ID 632 and ID 631).

When a meaning tree and reference trees are in such a relationship, a meaning tree having the Monad with an ID 61 as a top Monad can be linked from the Monad with an ID 632 and the Monad with ID 631 can be further referenced from its lower Monad, for example.

### 6.3.3 <Regarding many-to-many referential relationship>

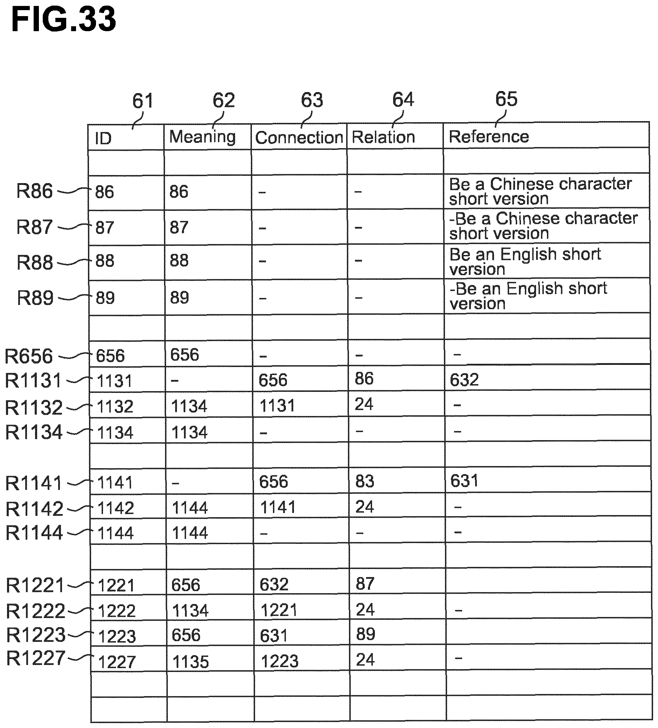

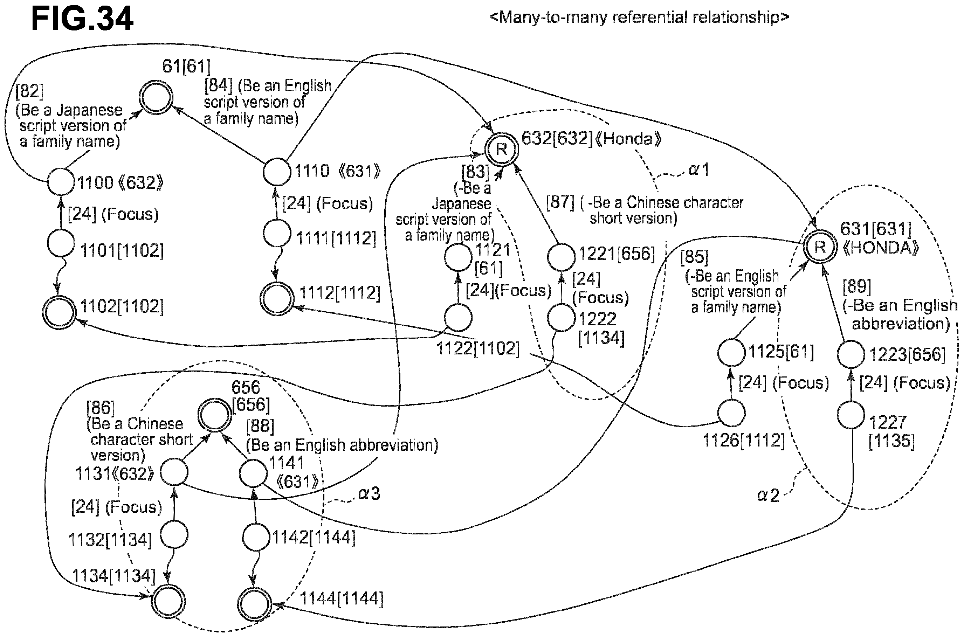

A many-to-many case is described. When records as shown in FIG. 31 and FIG. 33 have been stored in the table, referential link relationships are constructed from each of a Monad with an ID 61 and a Monad with an ID 656 as substances as shown in FIG. 34 to two reference trees ("HONDA" and "*HONDA*"). Specifically, as shown in FIG. 34, the ID 656 has two Monads, Monads with ID 1131 and ID 1141, in addition to those in FIG. 32, and referential links are formed from the Monads with ID 1131 and ID 1141 to Monads with ID 632 and ID 631, respectively. As a result, it is possible to show that the substances with ID 61 and ID 656 have the same two labels.

The trees α1, a2 and a3 in FIG. 34 are parts constructed from the records shown in FIG. 33. The trees α1 and a2 are reference trees and the tree α3 is a meaning tree.

In FIG. 34, only the uppermost Monads of narrative clause constituting data are shown and the other narrative clause constituting data are omitted from illustration. In addition, the curved line arrows representing the reference from lower Monads with ID 1125, ID 1223, ID 1121 and ID 1211 of the Monads with ID 631 and ID 632 are omitted from illustration.

In other words, in this embodiment, at least two or more pieces of link knowledge data (the meaning tree having the Monad with an ID 61 as a top Monad and the meaning tree having the Monad with an ID 656 as a top Monad) among the plurality of pieces of link knowledge data store, in the storage means, individual element data that fulfil the following conditions. First and second lower individual element data (the Monad with an ID 1100 and the Monad with an ID 1110) among a plurality of pieces of lower individual element data associated with upper individual element data (the Monad with an ID 61) of first link knowledge data (the meaning tree having the Monad with an ID 61 as a top Monad) do not have the attribute value data; individual element data (the Monads with ID 632 and ID 631) referenced by the element data IDs of individual element data of the referential destinations are associated therewith; and the first and second lower individual element data reference different individual element data (the Monads with ID 632 and ID 631). Also, at least two pieces of lower individual element data (the Monads with ID 1131 and ID 1141) among a plurality of pieces of lower individual element data associated with upper individual element data (the Monad with an ID 656) of second link knowledge data (the meaning tree having the Monad with an ID 656 as a top Monad) do not have the attribute value data, and one of the two pieces of lower individual element data are third lower individual element data (the Monad with an ID 1131) associated with individual element data (the Monad with an ID 632) with which the first lower individual element data (the Monad with an ID 1100) are associated and the other piece of lower individual element data are fourth lower individual element data (the Monad with an ID 1141) are associated with individual element data (the Monad with an ID 631) with which the second lower individual element data (the Monad with an ID 1110) are associated.

Again, in each of the above embodiments, only the records of top Monads of reference trees may be extracted.

When meaning trees and reference trees are in such a relationship, knowledge data in which the Monad with an ID 631 is referenced from the meaning tree having the Monad with an ID 61 as a top Monad, and a meaning tree having the Monad with an ID 656 as a top Monad is linked to the Monad with an ID 631 can be obtained.

Also, knowledge data in which the Monad with an ID 632 is linked to a meaning tree having the Monad with an ID 61 as a top Monad is linked and the Monad with an ID 631 is referenced from the Monad with an ID 1110 located inferior to the Monad with an ID 61 can be obtained.

While a case where the reference Monads with ID 632 and ID 631 referenced from a lower Monad of the Monad with an ID 61 are also referenced from the meaning Monad with an ID 656 is described as an example in FIG. 34, only one of the lower Monads of the meaning Monad with an ID 656 may be referenced. Also, one of the lower Monads of the meaning Monad with an ID 656 may reference a reference Monad other than the reference Monads with ID 632 and ID 631 referenced by the meaning Monad with an ID 61.

### 6.4 <Regarding applications>

When the correspondence between substances and labels (the one-to-many, many-to-one and many-to-many relationships) described above are applied, homonyms can be dealt with. For example, substances "cloud" and "spider" have the same pronunciation "kumo" in Japanese. In English, "bean" and "been" are homonyms.

In addition, translation processing between different languages can be also achieved. This is because the one substance has different expressions in different languages. For example, the same fruit is expressed as "ringo" in Japanese and "apple" in English. This also applies to a case where the same thing is called by different names depending on the region even in the same language.

In this embodiment, a case where the labels of substances are known and substances are read by their IDs is described. If the ID of the label of a substance is unknown, records having the corresponding text in the reference field 65 are first read and a search is simply performed for the IDs in their connection fields 63 as described above.

For example, if the records shown in FIG. 29 have been stored, a Monad with an ID 641 can be extracted when a search is performed in the reference field 65 for the text "HONDA Risa." When records having this ID 641 in the connection field 63 are extracted, records R642 and R1066 are extracted. When the IDs in their meaning fields 63 are tracked, the Monads with ID 61 and ID 1061 can be reached.

Records having this ID 641 in the reference field 65 may be extracted.

Because nothing is in the meaning field 62 when a record is linked to another record by a referential link relationship, the target top Monad can be reached within a shorter period of time if the search is limited to records having nothing in the meaning field 62.

### 6.5 <Write processing>

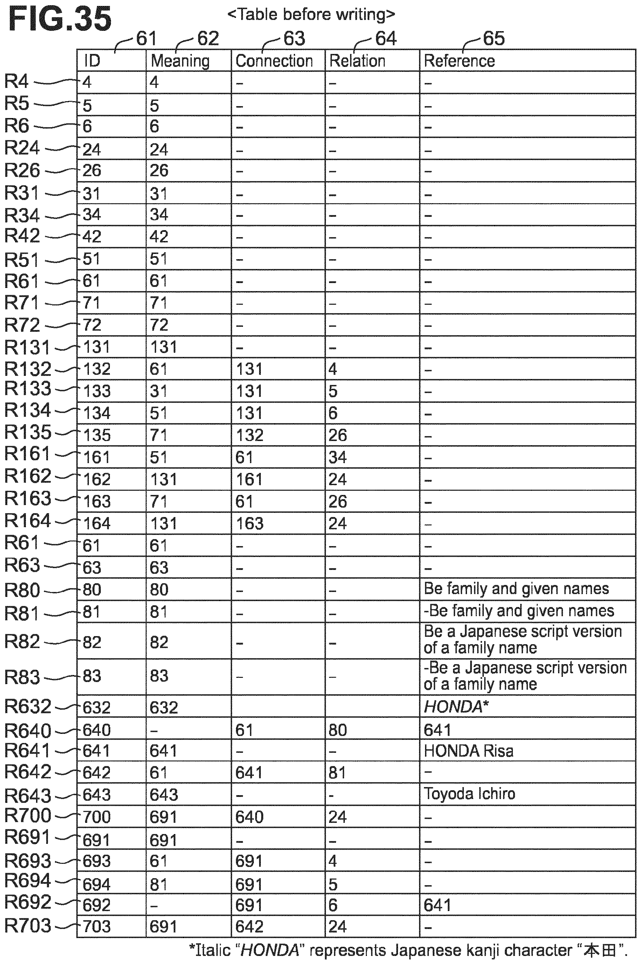

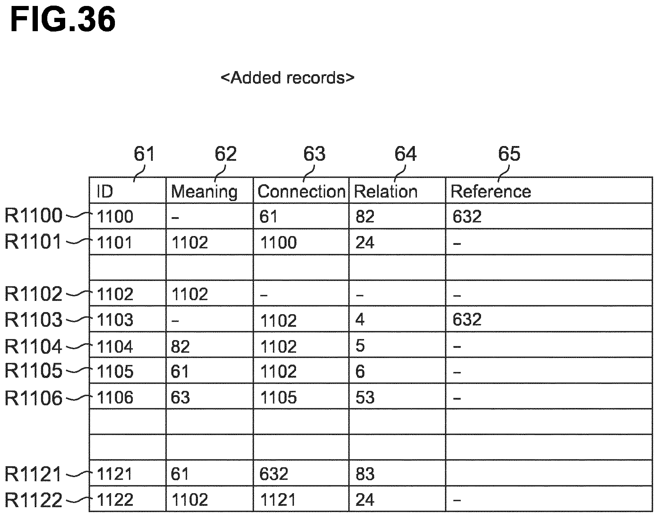

The processing that is executed by the main program 26p to write each Monad is described. In the following, a case where the narrative clause data "*HONDA* is a Japanese script version of the family name of HONDA Risa, who works under Toyoda Ichiro." are given when the table shown in FIG. 35 has been stored is described. In this case, the records shown in FIG. 36 are added as a result of the following processing.

### 6.5.1 Narrative clause data entry processing

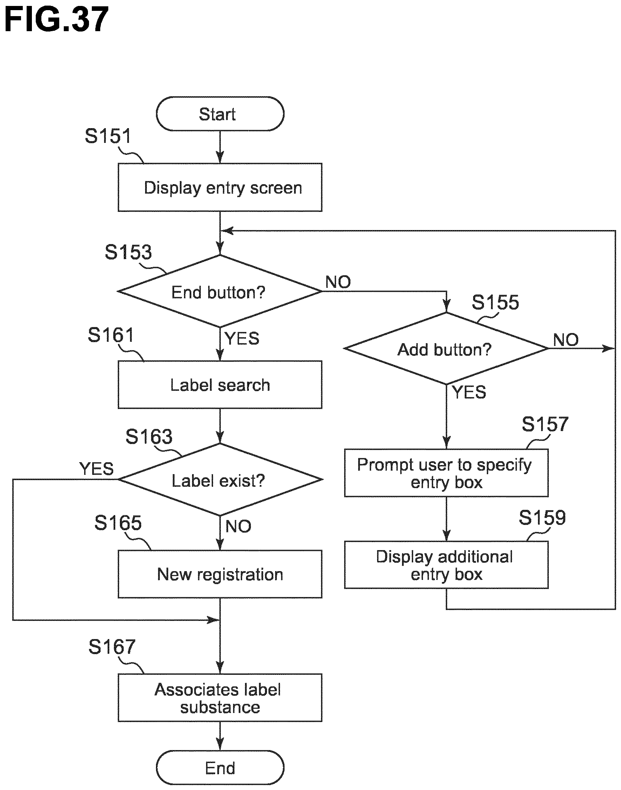

First, the method for entering the narrative clause data "*HONDA* is a Japanese script version of the family name of HONDA Risa, who works under Toyoda Ichiro." is described with reference to FIG. 37.

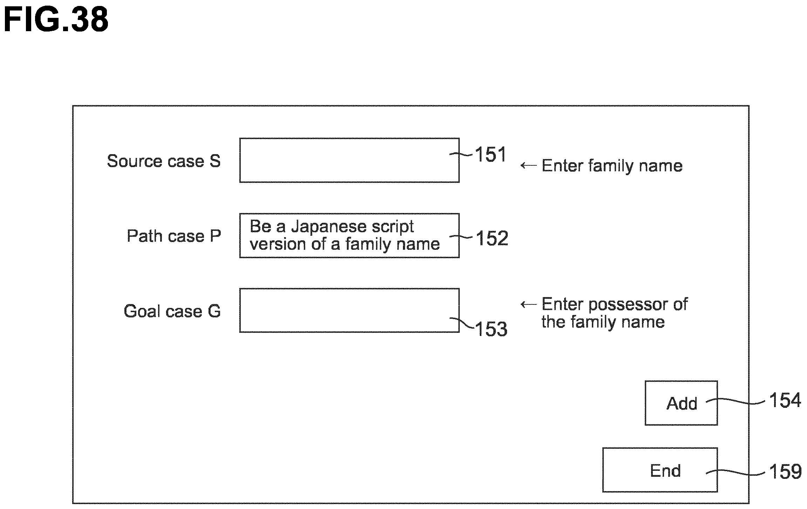

The CPU 23 displays a template entry screen for data entry (step S151 in FIG. 37). FIG. 38 shows one example of it. In such a case, a template representing a relationship "The family name XX is a Japanese script version of a family name for the possessor XX of the family name." has been previously stored. This is read to prompt the user to enter the text of the subject and object. A plurality of candidate templates may be stored to prompt the user to select one.

The user enters the family name "*HONDA*" in the entry box 151 and the target "HONDA Risa" in an entry box 153. Because the target "HONDA Risa" has a modifier "who works under Toyoda Ichiro," the user selects an icon 154.

The CPU 23 determines whether an end button 159 has been selected (step S153). In this case, because the end button 159 has not been selected, the CPU 23 advances to step S155 and determines whether the add button has been selected. In this case, because the icon 154 has been selected, the CPU 23 prompts the user to select the entry box to be modified (step S157). While the message "Select the entry box to be modified." is displayed on the screen in this embodiment, the present invention is not limited thereto.

In this case, because the item that the user wants to modify is "HONDA Risa" in the entry box 153, the user selects the entry box 153.

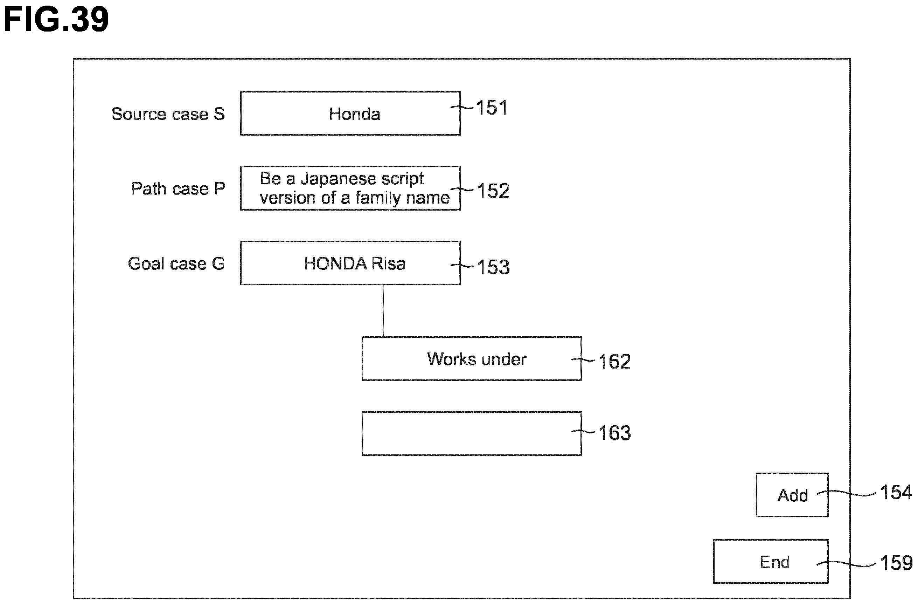

Then, the CPU 23 displays additional entry boxes representing the modification relationship for the selected entry box (step S159). One example in this case is shown in FIG. 39.

In this case, among the three entry boxes for the clause "The subject (oo) works under the target (XX)," the relationship of the entry box 163 has not been determined. The user enters "Toyoda Ichiro" in the entry box 163, and selects the end button.

The CPU 23 determines whether the end button 159 has been selected (step S153). In this case, because the end button 159 has been selected, the CPU 23 performs a label search (step S161) and determines whether there already exists the label entered in the entry box (step S163). Specifically, the CPU 23 simply determines whether there is the corresponding text in the reference field 65 of the table.

In this case, "HONDA Risa" entered in the entry box 153 already exists but *"HONDA"* entered in the entry box 151 does not exist. Thus, the CPU 23 newly registers the label *"HONDA"* (step S165). As a result, a record having the same ID that in the meaning field 62 and "*HONDA*" in the reference field 65 is generated in a record with an empty ID. In this case, the data are registered in the record with an ID "632."

If there are two or more labels to be newly registered, step S165 is simply repeated.

The CPU 23 associates the label with a substance (step S167). This is because there may be a case where one label, such as "HONDA Risa," is associated with a plurality of substances, such as substances with ID 61 and ID 1061, as shown in FIG. 30. In this embodiment, when there are two or more substances, the CPU 23 displays the link attributes of the substances represented by their meaning trees on the screen to help the user's selection. However, the present invention is not limited thereto.

In this case, the Monad with an ID 61 is selected by the user. In addition, because the source case S is determined to require entry of a label by the verb in "be a Japanese script version of a family name" employed as a template, the label "*HONDA*" is not associated with a substance. "Toyoda Ichiro" is associated with a substance in the same manner as above. In this case, the Monad of the record with an ID 63 is selected.

In this way, entry of narrative clause data "'*HONDA*' is a Japanese script version of the family name of HONDA Risa, who works under Toyoda Ichiro." is completed.

While it is determined whether there are records having the text entered in the input box in their reference field 65 when the end button is selected in this embodiment, the time of determination may not be limited thereto. For example, the presence of such records may be determined when an entry is made in the entry box. The same applies to the association of a label with a substance.

### 6.5.2 <Table write processing>

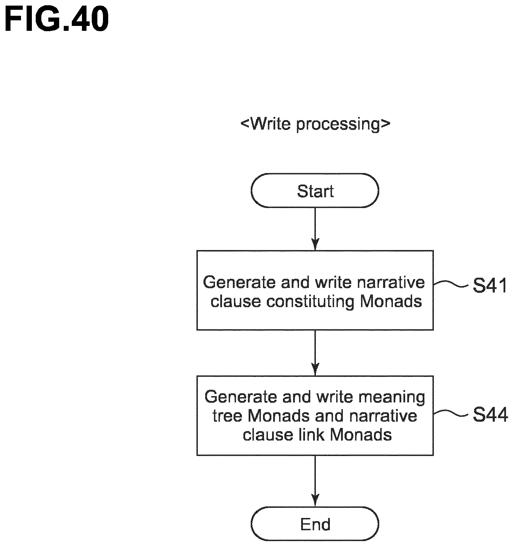

The write processing after that is almost the same as that in the first embodiment except writing of data in the reference field. In FIG. 40, the order of processing is changed from that of the first embodiment for much easier understanding of the contents.

### 6.5.3 Processing for writing narrative clause constituting Monads

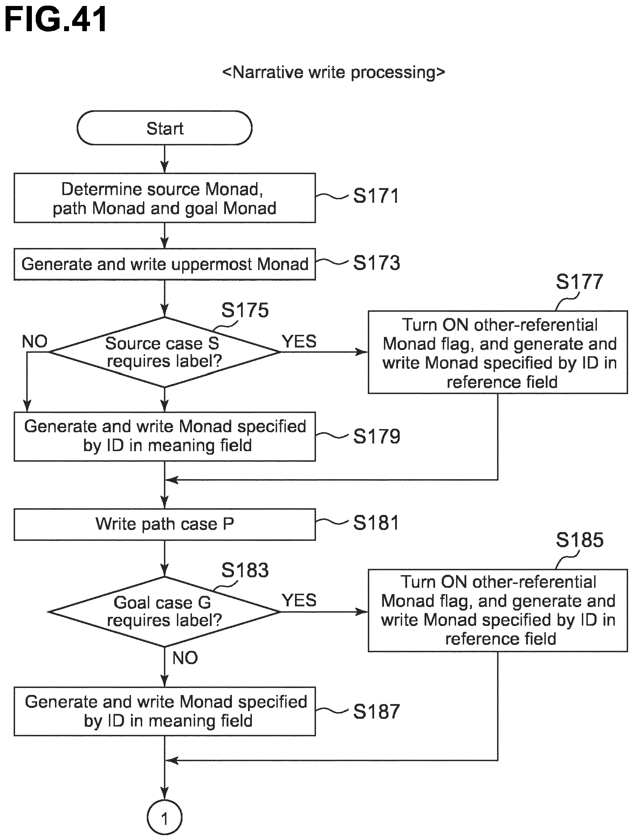

The CPU 23 generates and writes narrative clause constituting Monads (step S41 in FIG. 40). The processing for generating narrative clause constituting Monads is described with reference to FIG. 41. The CPU 23 determines a source Monad, a path Monad and a goal Monad (step S171 in FIG. 41). In this embodiment, when the user enters narrative clause data, a source case S, a path case P and a goal case G are determined. Thus, a source Monad, a path Monad and a goal Monad can be determined without a morphological analysis as in the first embodiment. In this case, the given data "*HONDA*," "be a Japanese script version of a family name" and "HONDA Risa" correspond to a source case S, a path case P and a goal case G, respectively.

The CPU 23 generates and writes an ID of the uppermost Monad (step S173). An empty ID is used for the ID. Here, an ID "1102" is used. The CPU 23 writes "1102" in the meaning field 62 of a record "1102."

The CPU 23 determines whether the source case S requires entry of a label (step S175). Whether entry of a label is required is determined based on whether the source case S is determined to require entry of a label by the verb as a path case P (in this case, "be a Japanese script version of a family name"). Thus, whether the source case S or goal case G requires entry of a label is stored for each verb (not shown).

In this case, because this verb requires entry of a label for the source case S, the CPU 23 turns on an other-referential Monad flag (a flag representing that this is a Monad referencing a reference Monad), and generates a Monad specified by the ID in the reference field 65 and writes it (step S177). In this case, the CPU 23 writes "-(blank)," the ID "1102" of the upper Monad, the ID "4" of the "source case" and the ID "632" of *"HONDA"* in the meaning field 62, the connection field 63, the relation field 64 and the reference field 65, respectively, of an empty ID "1103." The ID of the *"HONDA"* can be found if a search is performed for a text *"HONDA"* in the reference field 65.

The CPU 23 writes a record of the path case P (step S181). In this case, "be a Japanese script version of a family name" has an ID "82", the path case P has an ID "5" and the upper Monad has an ID "1102." Thus, the CPU 23 writes "82," the ID "1102" of the upper Monad, the ID "5" of the "path case P" and "-(blank)" in the meaning field 62, the connection field 63, the relation field 64 and the reference field 65, respectively, of the next empty ID "1104."

The CPU 23 determines whether the goal case G requires entry of a label (step S183). Whether entry of a label is required is determined by the verb as described above. In this case, it is determined that the goal case G does not require entry of a label, the CPU 23 generates a Monad specified by the ID in the meaning field 62 and writes it (step S187). In this case, the CPU 23 writes the ID "61" representing the substance HONDA Risa, the ID "1102" of the upper Monad, the ID "6" of the goal case G and "-(blank)" in the meaning field 62, the connection field 63, the relation field 64 and the reference field 65, respectively, of an empty ID "1105."

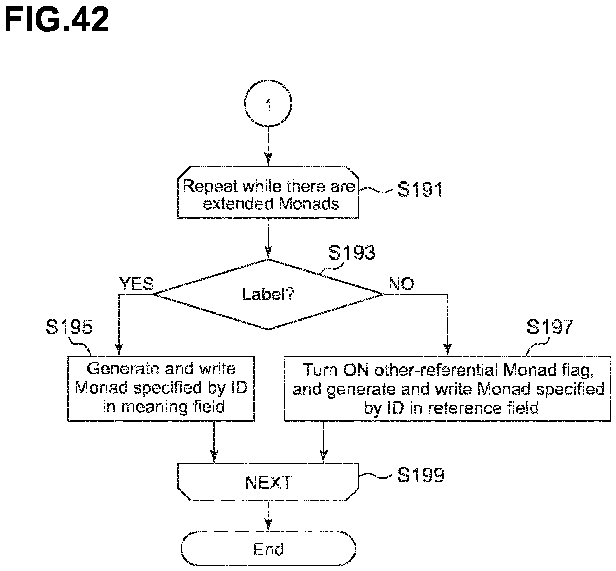

The CPU 23 advances to FIG. 42, and repeats step S193 to step S199 while there remain any extended Monads (step S191 to step S199). An extended Monad refers to a Monad candidate except the source case, goal case and path case.

In this case, because there are Monad candidate data in addition to *"HONDA"* (source case), "HONDA Risa" (goal case) and "be a Japanese script version of a family name" (path case), the CPU 23 determines that there are extended Monads. Specifically, the CPU 23 selects "Toyoda Ichiro," which is the source case, as an extended Monad out of "Toyoda Ichiro" and "works under" modifying HONDA Risa.

In this embodiment, "Toyoda Ichiro" is dealt with as a source case. The reason for this is as follows. When such an extended Monad is associated with the path case "works under," two possibilities arise: a case where the modification target "HONDA Risa" works under "Toyoda Ichiro" and a case where "Toyoda Ichiro" works under the modification target "HONDA Risa." In this system, regularization is made on the assumption that the former is true.

The CPU 23 determines whether the extended Monad requires entry of a label (step S193). In this case, because the path case P "works under," corresponding to the extended Monad "Toyoda Ichiro" does not require entry of a label, the CPU 23 advances to step S195, and generate a Monad specified by the ID in the meaning field 62 and writes it.

Here, if "HONDA Risa" works under "Toyoda Ichiro," "HONDA Risa" has a relationship expressed as "- works under" to "Toyoda Ichiro." Thus, the CPU 23 writes an ID "63" representing the substance Toyoda Ichiro, the ID "1102" of the upper Monad, the ID "53" of "- works under" and "-(blank)" in the meaning field 62, the connection field 63, the relation field 64 and the reference field 65, respectively, of an empty ID "1106."

The CPU 23 determines in step S199 whether there remain any extended Monads. In this case, because the number of extended Monads is one, the processing for writing narrative clause constituting Monads is terminated.

As a result of the processing, the records R1102 to R1106 in FIG. 36 are written.

In this embodiment, as has been described above, information about whether a verb constituting a path case P requires entry of a label is stored, and, based on this information, each Monad is determined to be a Monad having a value in the meaning field or a Monad having a value in the reference field when it is written. As a premise of this, a verb is dealt with as having at least a source case, a goal case and a path case. Here, in the general grammar, there are intransitive verbs and Be verbs, which do not take an object. In this specification, these verbs are dealt with as taking an object. For example, an intransitive verb sentence "HONDA Risa runs." is dealt with as being a sentence "HONDA Risa causes HONDA Risa to run." Also, a Be verb sentence "Apples are red." is dealt with using a verb "have a color" as in "Apples have a red color."

Also, in this case, a verb is dealt with as a "path case" seen from the side of lower individual element data as in the first embodiment.

### 6.5.4 <Processing for writing tree Monads and narrative clause link Monads>

Next, the CPU 23 performs processing for writing tree Monads and narrative clause link Monads (step S44 in FIG. 40). The term "tree Monads" is a general term to cover both meaning tree Monads and reference tree Monads. This embodiment is different from the first embodiment in that it is determined whether a Monad referencing a reference Monad (which is hereinafter referred to as "other-referential Monad") is written as described below.

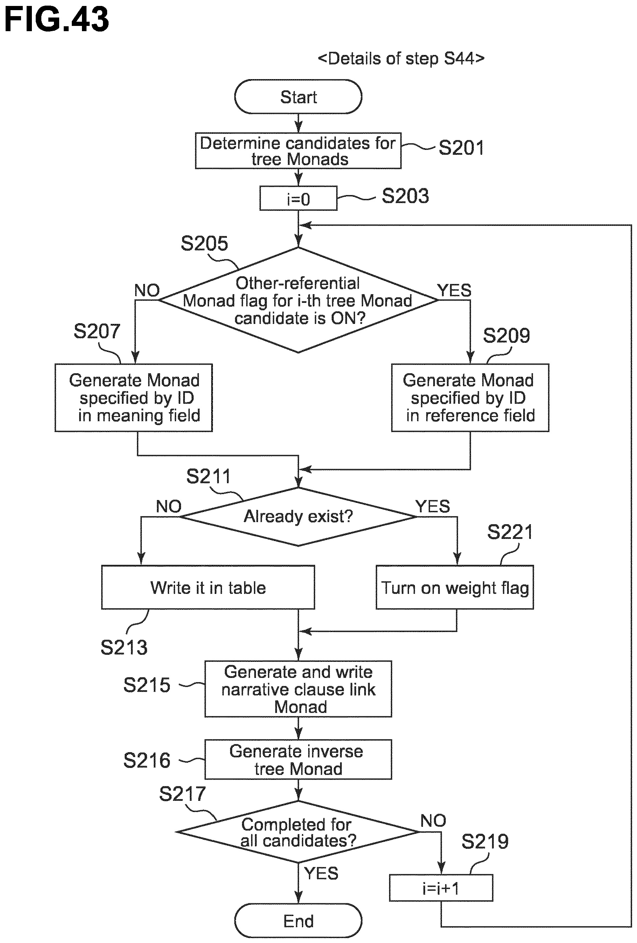

Details of step S44 are described with reference to FIG. 43. The CPU 23 determines candidates for tree Monads (step S201 in FIG. 43). There are two types of master-slave Monads as candidates for tree Monads. In this case, the two types of master-slave Monads are Monads having a substance as a top Monad and Monads having a label as a top Monad. The former are meaning tree Monads, and the latter are reference tree Monads. The former are further divided into two types, Monads that reference a label and Monads that do not reference a label. The processing that is performed when a label is not referenced and the processing that is performed when there are detail Monads at that time are the same as those in the first embodiment, their description is omitted.

In the following, processing for writing meaning tree Monads that references a label and processing for writing reference Monads are first described.

The CPU 23 initializes the processing number i (step S203 in FIG. 43), and determines whether a flag referencing a reference Monad for the 0th tree Monad candidate (other-referential Monad flag) is on (step S205). In this case, the other-referential Monad flag for the 0th tree Monad candidate *"HONDA"* has been turned on in step S197 in FIG. 42, the CPU 23 generates a Monad that references another Monad by the ID in the reference field 65 (step S209 in FIG. 43). Specifically, "-," "61," the ID "82" representing "be a Japanese script version of a family name" and "632" representing the label *"HONDA"* are stored in the meaning field 62, the connection field 63, the relation field 64 and the reference field 65, respectively. As a result, a meaning tree Monad (other-referential Monad) referencing a reference Monad is generated.

The CPU 23 determines whether the generated other-referential Monad exists in the table (step S211). In this case, because the generated other-referential Monad does not exist in the table, the CPU 23 writes it in the table (step S213). An empty ID is used for the Monad to be written. Here, an ID "1100" is used.

The CPU 23 generates a narrative clause link Monad and writes it in the table (step S215). The narrative clause link Monad is written in the same manner as in the first embodiment. In this case, the ID determined in step S213 is "1100" and the uppermost Monad of narrative clause constituting Monads to be connected has an ID "1102." Thus, the CPU 23 writes "1102," "1100" and "24" in the meaning field 62, the connection field 63 and the relation field 64, respectively, of an empty ID "1101."

The CPU 23 generates an inverse Monad tree (step S216). As described in the first embodiment, an inverse Monad tree is a Monad that is in an inverse predication relationship with an i-th tree Monad candidate. For example, in the first embodiment, a tree Monads for a narrative clause "apple" "is eaten (-eat)" by "HONDA Risa," which is in inverse relationship with "HONDA Risa" "eats" an "apple," is generated. Similarly, in this case, a tree Monads representing that the substance "HONDA Risa" is connected to the label *"HONDA"* by "-be a Japanese script version of a family name" is generated. In this case, a reference tree Monad having the reference Monad as a top Monad is generated as a Monad in an inverse predication relationship with the meaning tree Monad having an other-referential Monad flag being on.

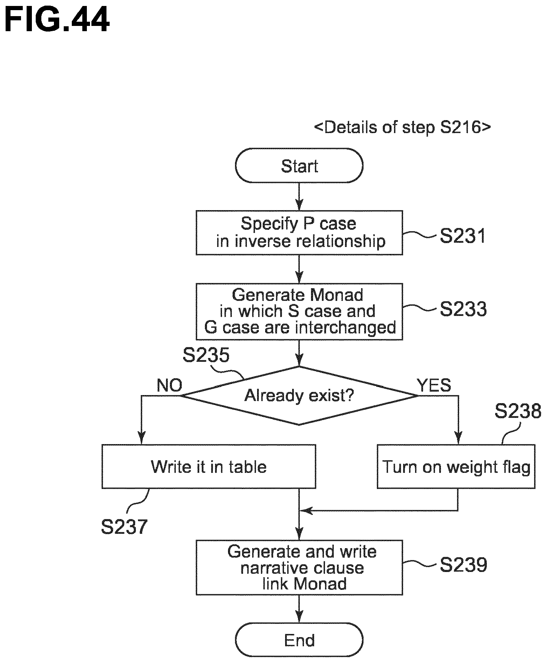

Details of step S216 are shown in FIG. 44.

The CPU 23 specifies "-be a Japanese script version of a family name" in an inverse relationship with the path case P "be a Japanese script version of a family name" out of the source case S, the path case P and the goal case G (step S231). The CPU 23 generates a Monad in which the source case S and the goal case G are interchanged (step S233). In this case, "61," "632" the ID "83" representing "-be a Japanese script version of a family name" and "-" are stored in the meaning field 62, the connection field 63, the relation field 64 and the reference field 65, respectively.

The CPU 23 determines whether the Monad already exists (step S235). In this case, because the Monad does not exist, the CPU 23 writes it in the table (step S237). Specifically, the CPU 23 writes "61," "632" and "83" in the meaning field 62, the connection field 63 and the relation field 64 , respectively,of an empty ID "1121." As a result, a reference tree Monad is generated.

The CPU 23 generates a narrative clause link Monad that links the narrative clause link Monad generated in step S215 in FIG. 43 and writes it (step S239). Because this step is the same as step S215, detailed description is omitted. In this case, the ID determined in step S213 is "1121" and the uppermost Monad of the connected narrative clause constituting Monads is "1102." Thus, the CPU 23 writes "1102," "1121" and "24" in the meaning field 62, the connection field 63 and the relation field 64, respectively, of an empty ID "1122."

If the Monad already exists in step S235, a weight flag is turned on (step S238). Because this step is the same as step S221 in FIG. 43, description is omitted.

The CPU 23 determines whether processing has been completed for all the candidates determined in step S201 in FIG. 43 (step S217 in FIG. 43). In this case, because processing has been completed for all the candidates, the CPU 23 returns to FIG. 40 and terminates the write processing. In this case, the records R1100, R1101, R1121 and R1122 in FIG. 36 are written.

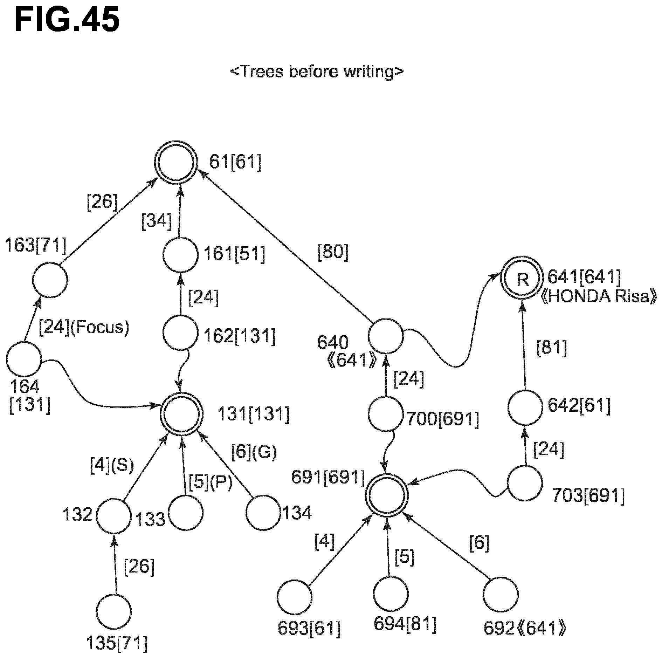

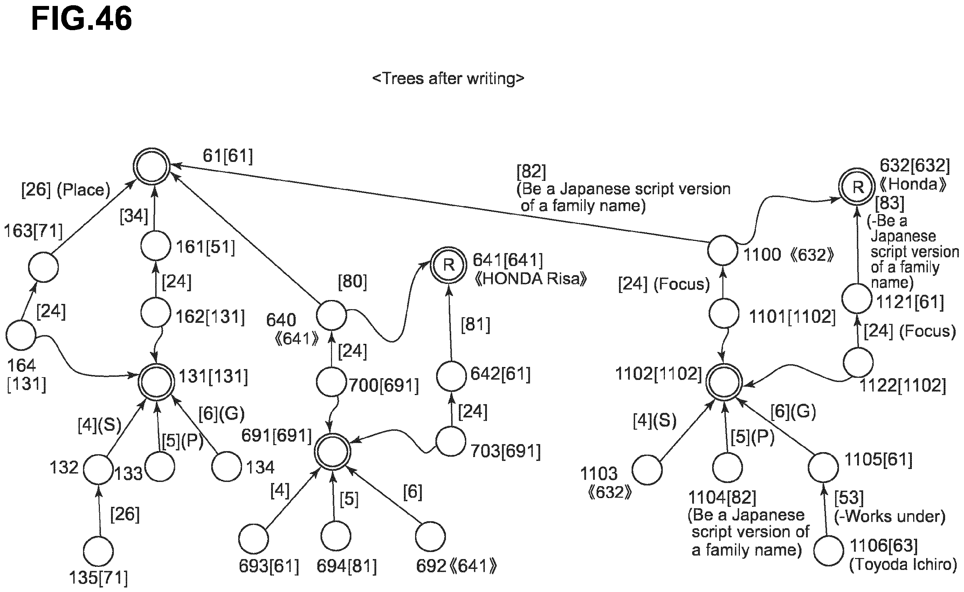

The records before the records shown in FIG. 36 are added are shown in FIG. 35. When these records are read according to the reading flowchart shown in FIG. 27, a meaning tree and a reference tree shown in FIG. 45 are obtained. The records shown in FIG. 36 are added thereto by the above write processing. When these records are read together, the tree structure shown in FIG. 46 is obtained.

In FIG. 45 and FIG. 46, the labels are the same as those in the first embodiment except those attached to the added reference tree for ease of understanding.

Step S221 in FIG. 43 is the same as step S78 in FIG. 11.

While records R4 to R72, R80 to 83, R641 and R643 in FIG. 35 have been preliminarily stored, these are displayed in FIG. 44 only when linked to another Monad. Also, while the record R63 in FIG. 35 is the top Monad of the meaning Monads of "Toyoda Ichiro," the records of these meaning Monads are omitted in FIG. 35.

In this embodiment, a Monad in an inverse relationship is generated in step S216 in FIG. 44. However, the present invention is not limited thereto. A Monad in an inverse relationship may be generated as a tree Monad by repetitive processing as in the first embodiment. In contrast to this, the processing in step S216 may be provided in the first embodiment.

### 6.6 <Other embodiments>

While the reference between a meaning tree and a reference tree is described in the above embodiments, reference between reference trees is also possible. For example, when a Monad having an ID 631 representing a label *"HONDA"* exists as shown in FIG. 32, the following referential relationship is obtained if a narrative clause "HONDA is a capitalized version of honda." is added.

The path case P "be a capitalized version" requires both the source case S and the goal case G to be a label. Thus, a Monad specified by the ID in the reference field 65 is written in both step S177 and step S185 in FIG. 41.

First, suppose that there are a Monad with an ID 1201 having "1201" in the meaning field and "honda" in the reference field 65, and a Monad with an ID 1202 having "1202" in the meaning field and "be a capitalized version" in the meaning field 62 as definition Monads. A Monad having nothing in the meaning field 62, "631" in the connection field 63, "1202" in the relation field 64 and "1201" in the reference field 65 is added as a Monad with an ID 1203 referencing them.

A Monad in an inverse relationship may be generated in the same manner as in the above embodiments (refer to step S216 in FIG. 44).

A weight Monad and a time Monad are also applicable to the third embodiment in the same manner. As a result, when the database is used for translation, for example, a translation result reflecting the frequency of use or the recent usage trend can be obtained in the same manner as described in the second embodiment. The weight and time Monads are also applicable not only to meaning trees but also reference trees.

In this embodiment, the rule that the source case S and/or goal case G need to be a label is stored for each Monad constituting a path case P, and it is determined that the Monad has no association with a substance if it falls under the rule. However, the present invention is not limited thereto. For example, whether a Monad is linked by the ID in the meaning field or by the ID in the reference field may be changed depending on whether it is associated with a substance. Naturally, such an attribute can be simply stored with a similar tree structure.

### 7.1 <Functional block diagram>

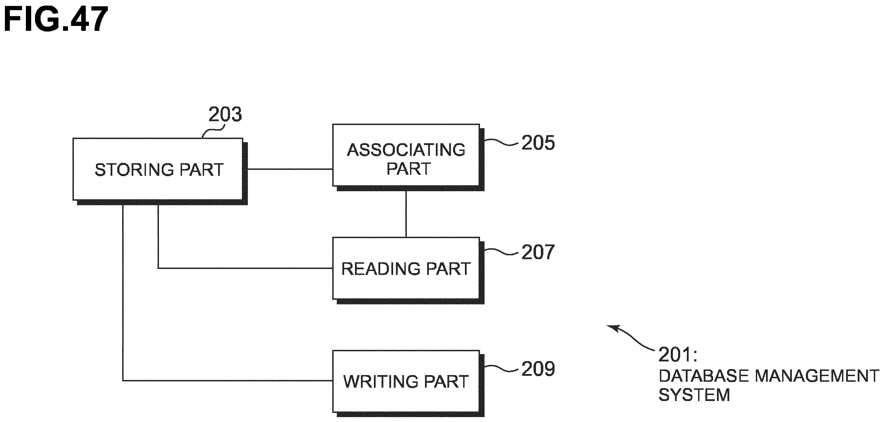

FIG. 47 shows a functional block diagram of the database management system 1 according to the third embodiment. The database management system 1 includes a storing part 203, an associating part 205, a reading part 207, and a writing part 209.

In the storing part 203, a table which comprises at least the following five fields a1) to a5) and in which one record comprises one piece of element data is stored:
a1) an element data ID field in which an element data ID of given element data is stored,
a2) an upper element data field in which an upper element data ID which is an ID of upper element data located superior to the given element data is stored,
a3) a link attribute element data field in which a link attribute element data ID which is an ID of link attribute element data representing a link attribute between the given element data and the upper element data is stored,
a4) an attribute value data field in which an attribute value specifying ID specifying an attribute value representing a value of the link attribute is stored, and
a5) a referential element data field in which represented data represented by the attribute value specifying ID in the attribute value data field or an element data ID of a referential destination are/is stored.

The associating part 205 positions a record having an ID in the meaning field of a certain record in the upper element data field as a lower record having the certain record as an upper record and associates the upper record with the lower record by defining a link attribute represented by link attribute element data in the link attribute element data field of the lower record as having an attribute value in the attribute value data field of the lower record. In addition, when nothing is in the attribute value data field of the lower record, the associating part 205 specifies a record referenced by the ID in the referential element data field, and associates the data in the referential element data field of the specified record as a label of the record having nothing in the meaning field.

The reading part 207 reads link knowledge data in which a plurality of lower records is linked to the upper record by causing the associating part 205 to repeat the associating.

When an upper element ID of a writing target element, and link attribute element data in a link attribute with the upper element and an attribute value thereof are given, the writing part 209 writes the upper element ID in the upper element data field, the link attribute element data in the link attribute element data field, and the attribute value thereof in the attribute value data field. In addition, when an upper element ID of a writing target element, and link attribute element data in a link attribute with the upper element and an element data ID of a referential destination are given, the writing part 209 writes the upper element ID in the upper element data field, the link attribute element data in the link attribute element data field, and the element data ID of the referential destination in the referential element data field.

As a result, data in which a plurality of pieces of knowledge is linked can be obtained with a simple data structure.

The invention of the first embodiment can be also specified as follows.

A database management system according to the present invention is a database management system having
A) a table which comprises at least the following four fields a1) to a4) and in which each piece of element data comprises one record:
   a1) an element data specifying information field in which element data specifying information specifying given element data is stored,
   a2) an upper element data field in which an upper element data specifying information specifying upper element data located superior to the given element data is stored,
   a3) a link attribute element data field in which link attribute element data specifying information which is specifying link attribute element data representing a link attribute between the given element data and the upper element data is stored, and
   a4) an attribute value data field in which an attribute value specifying ID specifying an attribute value representing an attribute value of link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
   wherein
   b1) the element-associated data are data specifying an association between master element data and slave element data, and having element data specifying information of the slave element data in the attribute value data field, element data specifying information of the master element data in the upper element data field, and element data specifying information representing inverse predication relationship information which is predication relationship information of the slave element data to the master element data in the link attribute element data field,
   b2) the plural element group data have at least source element data, goal element data and path element data, and plural element group uppermost element data linking the source element data, the goal element data and the path element data,
      b21) the plural element group uppermost element data having element data specifying information of the given element data in the element data specifying information field and the attribute value data field,
      b22) the source element data having the element data specifying information of the master element data in the attribute value data field, element data specifying information of the uppermost element data in the upper element data field, and element data specifying information that means a source case in the link attribute element data field,
      b23) the goal element data having the element data specifying information of the slave element data in the attribute value data field, the element data specifying information of the uppermost element data in the upper element data field, and element data specifying information that means a goal case in the link attribute element data field,
      b24) the path element data having element data specifying information representing predication relationship information of the master element data to the slave element data in the attribute value data field, the element data specifying information of the uppermost element data in the upper element data field, and element data specifying information that means a path case in the link attribute element data field,
   b3) the plural element group data linking data have plural element group uppermost element data specifying information of the plural element group data in the attribute value data field, the element data specifying information of the element-associated data in the upper element data field, and link attribute specifying information of a focus attribute representing that the plural element group uppermost element data are linked to the element-associated data in the link attribute element data field,
the database management system comprising:
C) extracting means which, when a search request specifying first element data specifying information in the attribute value data field is given, extracts element-associated data including the first element data, extracts plural element group data and plural element group data linking data associated with the extracted element-associated data to extract linked element data.

It is, therefore, possible to provide a database management system in which various types of data are linked in a table with a common format including the element data specifying information field, the upper element data field, the link attribute element data field and the attribute value data field.

A database management system according to the present invention is a database management system having
A) a table which comprises at least the following four fields a1) to a4) and in which each piece of element data comprises one record:
   a1) an element data specifying information field in which element data specifying information specifying given element data is stored,
   a2) an upper element data field in which an upper element data specifying information specifying upper element data located superior to the given element data is stored,
   a3) a link attribute element data field in which link attribute element data specifying information which is specifying link attribute element data representing a link attribute between the given element data and the upper element data is stored, and
   a4) an attribute value data field in which an attribute value specifying ID specifying an attribute value representing an attribute value of link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
   wherein
   b1) the element-associated data are data specifying an association between master element data and slave element data, and having element data specifying information of the slave element data in the attribute value data field, element data specifying information of the master element data in the upper element data field, and element data specifying information representing inverse predication relationship information which is predication relationship information of the slave element data to the master element data in the link attribute element data field,
   b2) the plural element group data have at least source element data, goal element data and path element data, and plural element group uppermost element data linking the source element data, the goal element data and the path element data,
      b21) the plural element group uppermost element data having element data specifying information of the given element data in the element data specifying information field and the attribute value data field,
      b22) the source element data having the element data specifying information of the master element data in the attribute value data field, element data specifying information of the uppermost element data in the upper element data field, and element data specifying information that means a source case in the link attribute element data field,
      b23) the goal element data having the element data specifying information of the slave element data in the attribute value data field, the element data specifying information of the uppermost element data in the upper element data field, and element data specifying information that means a goal case in the link attribute element data field,
      b24) the path element data having element data specifying information representing predication relationship information of the master element data to the slave element data in the attribute value data field, the element data specifying information of the uppermost element data in the upper element data field, and element data specifying information that means a path case in the link attribute element data field,
   b3) the plural element group data linking data have plural element group uppermost element data specifying information of the plural element group data in the attribute value data field, the element data specifying information of the element-associated data in the upper element data field, and link attribute specifying information of a focus attribute representing that the plural element group uppermost element data are linked to the element-associated data in the link attribute element data field,
the database management system comprising:
C) writing means which, when source element data, goal element data and path element data are given as new plural element group data, generates plural element group uppermost element data and writes the plural element group uppermost element data as plural element group data, and generates and writes element-associated data and plural element group data linking data.

It is, therefore, possible to provide a database management system in which various types of data are linked in a table with a common format including the element data specifying information field, the upper element data field, the link attribute element data field and the attribute value data field.

While the invention is described above by way of preferable embodiments, the language used is not for limitation but for explanation and may be changed without departing from scope and spirit of the invention within the scope of the appended claims.

## Claims

1. A database management system having
A) a table which comprises at least the following four fields a1) to a4) and in which each piece of element data comprises one record:
a1) an element data ID field in which an element data ID of given element data is stored,
a2) an upper element data field in which an upper element data ID which is an ID of upper element data located superior to the given element data is stored,
a3) a link attribute element data field in which a link attribute element data ID which is an ID of link attribute element data representing a link attribute between the given element data and the upper element data is stored, and
a4) a content element data field in which a content element data ID specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having an element data ID of the slave element data in the content element data field, an element data ID of the master element data in the upper element data field, and an element data ID representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having an element data ID of the given element data in the element data ID field and the content element data field,
b22) the source element data having the element data ID of the master element data in the content element data field, an element data ID of the uppermost element data in the upper element data field, and an element data ID that means a source case in the link attribute element data field,
b23) the goal element data having the element data ID of the slave element data in the content element data field, the element data ID of the uppermost element data in the upper element data field, and an element data ID that means a goal case in the link attribute element data field,
b24) the path element data having an element data ID representing predication relationship information of the master element data to the slave element data in the content element data field, the element data ID of the uppermost element data in the upper element data field, and an element data ID that means a path case in the link attribute element data field,
b3) the plural element group data linking data have a plural element group uppermost element data ID of the plural element group data in the content element data field, the element data ID of the element-associated data in the upper element data field, and a link attribute ID of a focus attribute representing that the plural element group uppermost element data are linked to the element-associated data in the link attribute element data field,
the database management system comprising:
C) extracting means which, when a search request specifying a master element data ID in the upper element data field is given, extracts element-associated data including the master element data, extracts plural element group data linking data including the element data ID of the extracted element-associated data, extracts plural element group data specified by the extracted plural element group data linking data to extract linked element data.

2. A database management system having
A) a table which comprises at least the following four fields a1) to a4) and in which each piece of element data comprises one record:
a1) an element data ID field in which an element data ID of given element data is stored,
a2) an upper element data field in which an upper element data ID which is an ID of upper element data located superior to the given element data is stored,
a3) a link attribute element data field in which a link attribute element data ID which is an ID of link attribute element data representing a link attribute between the given element data and the upper element data is stored, and
a4) a content element data field in which a content element data ID specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having an element data ID of the slave element data in the content element data field, an element data ID of the master element data in the upper element data field, and an element data ID representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having an element data ID of the given element data in the element data ID field and the content element data field,
b22) the source element data having the element data ID of the master element data in the content element data field, an element data ID of the uppermost element data in the upper element data field, and an element data ID that means a source case in the link attribute element data field,
b23) the goal element data having the element data ID of the slave element data in the content element data field, the element data ID of the uppermost element data in the upper element data field, and an element data ID that means a goal case in the link attribute element data field,
b24) the path element data having an element data ID representing predication relationship information of the master element data to the slave element data in the content element data field, the element data ID of the uppermost element data in the upper element data field, and an element data ID that means a path case in the link attribute element data field,
b3) the plural element group data linking data have a plural element group uppermost element data ID of the plural element group data in the content element data field, the element data ID of the element-associated data in the upper element data field, and a link attribute ID of a focus attribute representing that the plural element group uppermost element data are linked to the element-associated data in the link attribute element data field,
the database management system comprising:
C) writing means which, when source element data, goal element data and path element data are given as new plural element group data, performs the following steps:
c1) a plural element group data generating step of generating plural element group uppermost element data of the source element data, the goal element data and the path element data and writing the plural element group uppermost element data together with the given source element data, goal element data and path element data in the table as plural element group data,
c2) an element-associated data generating step of generating element-associated data having the element data ID in the content element data field of the source element data in the upper element data field, the element data ID in the content element data field of the goal element data in the content element data field, and an element data ID in an inverse relationship with the element data ID in the content element data field of the path element data in the link attribute element data field, and writing the element-associated data in the table, and
c3) a plural element group data linking data generating step of generating plural element group data linking data having the element data ID of the generated plural element group uppermost element data in the content element data field, the element data ID of the generated element-associated data in the upper element data field, and the element data ID of the link attribute of the focus attribute in the link attribute element data field, and writing the plural element group data linking data in the table.

3. A database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having element data specifying information of the given element data in the element data specifying information field and the content element data field,
b22) the source element data having the element data specifying information of the master element data in the content element data field, element data specifying information of the uppermost element data in the upper element data field, and element data specifying information that means a source case in the link attribute element data field,
b23) the goal element data having the element data specifying information of the slave element data in the content element data field, the element data specifying information of the uppermost element data in the upper element data field, and element data specifying information that means a goal case in the link attribute element data field,
b24) the path element data having element data specifying information representing predication relationship information of the master element data to the slave element data in the content element data field, the element data specifying information of the uppermost element data in the upper element data field, and element data specifying information that means a path case in the link attribute element data field,
b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
the database management system comprising:
C) extracting means which, when a search request specifying first element data specifying information in the content element data field is given, extracts element-associated data including the first element data, extracts plural element group data and plural element group data linking data associated with the extracted element-associated data to extract linked element data.

4. A database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having element data specifying information of the given element data in the element data specifying information field and the content element data field,
b22) the source element data having the element data specifying information of the master element data in the content element data field, element data specifying information of the uppermost element data in the upper element data field, and element data specifying information that means a source case in the link attribute element data field,
b23) the goal element data having the element data specifying information of the slave element data in the content element data field, the element data specifying information of the uppermost element data in the upper element data field, and element data specifying information that means a goal case in the link attribute element data field,
b24) the path element data having element data specifying information representing predication relationship information of the master element data to the slave element data in the content element data field, the element data specifying information of the uppermost element data in the upper element data field, and element data specifying information that means a path case in the link attribute element data field,
b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
the database management system comprising:
C) writing means which, when source element data, goal element data and path element data are given as new plural element group data, generates plural element group uppermost element data and writes the plural element group uppermost element data as plural element group data, and generates and writes element-associated data and plural element group data linking data.

5. The database management system according to Claim 4,
wherein
B) element-associated data and plural element group data linking data about the slave element data are further stored in the table,
b1) the element-associated data about the slave element data having element data specifying information of the master element data in the content element data field, element data specifying information of the slave element data in the upper element data field, and element data specifying information representing predication relationship information which is predication relationship information of the master element data to the slave element data in the link attribute element data field,
b2) the plural element group data linking data having the plural element group uppermost element data specifying information in the content element data field, element data specifying information of element-associated data about the slave element data in the upper element data field, and link attribute specifying information of a focus attribute representing that the given plural element group uppermost element data are linked to the given element-associated data in the link attribute element data field.

6. The database management system according to Claim 4,
wherein the writing means stores, as weight assigning candidate element data for element data specifying information specifying each piece of the generated element-associated data and plural element group data linking data, element data specifying information of the given weight assigning candidate element data in the upper element data field, element data specifying information representing a weight in the link attribute element data field, and element data specifying information representing the degree of weight in the content element data field.

7. The database management system according to Claim 4,
wherein, when the same element-associated data as the generated element-associated data have been already stored in the table, the writing means increases the degree of weight of element data specifying information in the content element data field of element-associated data associated with the stored element-associated data and having element data specifying information representing a weight in the link attribute element data field,
the database management system further comprising extracting means which, when a search request specifying the first element data specifying information in the content element data field is given, extracts element-associated data including the first element data, and extracts plural element group data and plural element group data linking data associated with the element-associated data thereby extracting linked element data,
wherein the extracting means extracts element-associated data with a heavier associated weight out of targets of the search request.

8. A data extraction method in a database management system, the database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having element data specifying information of the given element data in the element data specifying information field and the content element data field,
b22) the source element data having the element data specifying information of the master element data in the content element data field, element data specifying information of the uppermost element data in the upper element data field, and element data specifying information that means a source case in the link attribute element data field,
b23) the goal element data having the element data specifying information of the slave element data in the content element data field, the element data specifying information of the uppermost element data in the upper element data field, and element data specifying information that means a goal case in the link attribute element data field,
b24) the path element data having element data specifying information representing predication relationship information of the master element data to the slave element data in the content element data field, the element data specifying information of the uppermost element data in the upper element data field, and element data specifying information that means a path case in the link attribute element data field,
b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
C) the database management system comprising extracting, when a search request specifying first element data specifying information in the content element data field is given, element-associated data including the first element data to extract linked element data.

9. The data extraction method in a database management system according to Claim 8,
further comprising, in addition to the extracting element-associated data including the first element data, extracting plural element group data and plural element group data linking data associated with the element-associated data thereby extracting linked element data.

10. A data writing method in a database management system, the database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least b1) an element-associated data storing part in which element-associated data are stored, b2) a plural element group data storing part in which plural element group data are stored, and b3) a plural element group data linking data storing part in which plural element group data linking data linking the element-associated data and plural element group uppermost element data of the plural element group data are stored,
wherein
b1) the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
b2) the plural element group data have at least source element data, goal element data and path element data, and plural element group uppermost element data linking the source element data, the goal element data and the path element data,
b21) the plural element group uppermost element data having element data specifying information of the given element data in the element data specifying information field and the content element data field,
b22) the source element data having the element data specifying information of the master element data in the content element data field, element data specifying information of the uppermost element data in the upper element data field, and element data specifying information that means a source case in the link attribute element data field,
b23) the goal element data having the element data specifying information of the slave element data in the content element data field, the element data specifying information of the uppermost element data in the upper element data field, and element data specifying information that means a goal case in the link attribute element data field,
b24) the path element data having element data specifying information representing predication relationship information of the master element data to the slave element data in the content element data field, the element data specifying information of the uppermost element data in the upper element data field, and element data specifying information that means a path case in the link attribute element data field,
b3) the plural element group data linking data have plural element group uppermost element data specifying information of the plural element group data in the content element data field, the element data specifying information of the element-associated data in the upper element data field, and link attribute specifying information of a focus attribute representing that the plural element group uppermost element data are linked to the element-associated data in the link attribute element data field,
C) the database management system comprising generating plural element group uppermost element data and writing the plural element group uppermost element data as plural element group data, and generating and writing element-associated data and plural element group data linking data when source element data, goal element data and path element data are given as new plural element group data.

11. A database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least an element-associated data storing part in which element-associated data are stored,
wherein the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
wherein
C) when a search request specifying first element data specifying information in the content element data field is given, the database management system extracts element-associated data including the first element data to extract linked element data.

12. A database management system having
A) a table which comprises at least the following four fields a1) to a4) and in which each piece of element data comprises one record:
a1) an element data specifying information field in which element data specifying information specifying given element data is stored,
a2) an upper element data field in which an upper element data specifying information specifying upper element data located superior to the given element data is stored,
a3) a link attribute element data field in which link attribute element data specifying information which is specifying link attribute element data representing a link attribute between the given element data and the upper element data is stored, and
a4) a content element data field in which content element data specifying information specifying content element data representing a content of the link attribute is stored,
B) the table having at least an element-associated data storing part in which element-associated data are stored,
wherein the element-associated data are data specifying an association between master element data and slave element data, and having element data specifying information of the slave element data in the content element data field, element data specifying information of the master element data in the upper element data field, and element data specifying information representing inverse predication relationship information which is predication relationship information of the slave element data to the master element data in the link attribute element data field,
the database management system comprising:
C) writing means which, when plural element group data specifying source element data, goal element data and path element data are given, generates and writes the element-associated data.

13. A database management system comprising:
A) storage means including a table which comprises at least the following five fields a1) to a5) and in which each piece of element data comprises one record:
a1) an element data ID field in which an element data ID of given element data is stored,
a2) an upper element data field in which an upper element data ID which is an ID of upper element data located superior to the given element data is stored,
a3) a link attribute element data field in which a link attribute element data ID which is an ID of link attribute element data representing a link attribute between the given element data and the upper element data is stored,
a4) an attribute value data field in which an attribute value specifying ID specifying an attribute value representing a value of the link attribute is stored, and
a5) a referential element data field in which represented data represented by the attribute value specifying ID in the attribute value data field or an element data ID of a referential destination are/is stored,
B) associating means which positions a record having an ID in the element data ID field of a certain record in the upper element data field as a lower record having the certain record as an upper record and associates the upper record with the lower record by defining a link attribute represented by link attribute element data in the link attribute element data field of the lower record as having an attribute value in the attribute value data field of the lower record, and
C) reading means which reads link knowledge data in which a plurality of lower records are linked to the upper record by causing the associating means to repeat the associating,
wherein
D) when nothing is in the attribute value data field of the lower record, the associating means specifies a record referenced by the ID in the referential element data field, and associates the data in the referential element data field of the specified record as a label of the record having nothing in the meaning field.

14. The database management system according to Claim 13,
wherein the record referenced by the ID in the referential element data field has the same ID in the attribute value data field and the element data ID field and a text in the referential element data field.

15. A database management system comprising:
A) a storage means in which a plurality of pieces of individual element data defined by at least the following four pieces of data a1) to a4):
a1) an element data ID of given element data,
a2) an upper element data ID, which is the ID of upper element data located superior to the given element data,
a3) a link attribute element data ID, which is the ID of link attribute element data representing a link attribute between the given element data and the upper element data, and
a4) an attribute value specifying ID specifying an attribute value representing a value of the link attribute,
B) associating means which positions, for each piece of individual element data in the storage means, individual element data specified by a certain element data ID as upper individual element data and individual element data having an upper element data ID which is the same as the element data ID of the individual element data as lower individual element data, and associates the upper record with the lower record by defining an attribute represented by link attribute element data in the link attribute element data field of the lower record as having an attribute value in the attribute value data field of the lower record, and
C) reading means which reads link knowledge data in which a plurality of pieces of lower individual element data are linked to the upper individual element data by repeating the associating,
wherein
D) the individual element data can further store represented data represented by the attribute value specifying ID or an element data ID of element data referenced by an element data ID of individual element data of the referential destination, and
wherein
E) when the lower individual element data do not have attribute value data and have an element data ID of individual element data referenced by the element data ID of the individual element data of the referential destination, the associating means specifies the individual element data specified by the element data ID and associates represented data of the specified individual element data as a label of the individual element data.

16. The database management system according to Claim 15,
wherein the link knowledge data comprises a plurality of pieces of link knowledge data, and at least two or more pieces of individual element data among the plurality of pieces of link knowledge data stored in the storage means fulfil the following conditions:
at least one piece of lower individual element data among a plurality of pieces of lower individual element data associated with upper individual element data of first link knowledge data do not have the attribute value data and individual element data referenced by the element data ID of individual element data of the referential destination are associated therewith; and
at least one piece of lower individual element data among a plurality of pieces of lower individual element data associated with upper individual element data of second link knowledge data do not have the attribute value data and individual element data referenced by the element data ID of the individual element data of the referential destination are associated therewith; and the individual element data referenced are the same individual element data.

17. The database management system according to Claim 15,
wherein at least two or more pieces of individual element data among the plurality of pieces of link knowledge data stored in the storage means fulfil the following conditions:
first and second lower individual element data among a plurality of pieces of lower individual element data associated with upper individual element data of first link knowledge data do not have the attribute value data and individual element data of the referential destinations referenced by the element data IDs of the individual element data of the referential destinations are associated therewith; and the individual element data of the referential destinations are different individual element data.

18. The database management system according to Claim 15,
wherein at least two or more pieces of individual element data among the plurality of pieces of link knowledge data stored in the storage means fulfil the following conditions:
first and second lower individual element data among a plurality of pieces of lower individual element data associated with upper individual element data of first link knowledge data do not have the attribute value data; individual element data of referential destinations referenced by the element data IDs of individual element data of the referential destination are associated therewith; the first and second lower individual element data are associated with individual element data of different referential destinations; and
at least two pieces of lower individual element data among a plurality of pieces of lower individual element data associated with upper individual element data of second link knowledge data do not have the attribute value data, and one of the two pieces of lower individual element data are associated with individual element data of the referential destination with which the first lower individual element data are associated.

19. The database management system according to Claim 18,
wherein individual element data of another-referential destination different from the individual element data of the referential destination are further stored, and
wherein the lower individual element data different from the one of the two pieces of lower individual element data among a plurality of pieces of lower individual element data associated with upper individual element data of the second link knowledge data are associated with the individual element data of another-referential destination.

20. The database management system according to Claim 13,
wherein the lower individual element data are associated with narrative clause data in which a link attribute with individual element data further linked thereto and a value of the link attribute are defined, and the narrative clause data comprise inverse predication relationship information which is predication relationship information of the lower individual element data to the upper individual element data, and
wherein the associating means also extracts each pieces of narrative clause data.

21. The database management system according to Claim 13,
further comprising weight assigning means which, when an upper element ID of a reading target element, and link attribute element data in a link attribute with the upper element and an attribute value thereof are given, generates and stores a record having the element data ID of the writing target in the upper element data field, an element data ID representing a weight in the link attribute element data field and an element data ID representing the degree of weight in the attribute value data field when writing the upper element ID in the upper element data field, the link attribute element data in the link attribute element data field and the attribute value thereof in the attribute value data field.

22. The database management system according to Claim 21,
wherein, when the lower record has nothing in the attribute value data field, the weight assigning means generates and stores a record having the element data ID of the specified record in the upper element data field, an element data ID representing a weight in the link attribute element data field and an element data ID representing the degree of weight in the attribute value data field.

23. A database management system comprising:
A) storage means including a table which comprises at least the following five fields a1) to a5) and in which each piece of element data comprises one record:
a1) an element data ID field in which an element data ID of given element data is stored,
a2) an upper element data field in which an upper element data ID which is an ID of upper element data located superior to the given element data is stored,
a3) a link attribute element data field in which a link attribute element data ID which is an ID of link attribute element data representing a link attribute between the given element data and the upper element data is stored,
a4) an attribute value data field in which an attribute value specifying ID specifying an attribute value representing a value of the link attribute is stored, and
a5) a referential element data field in which represented data represented by the attribute value specifying ID in the attribute value data field or an element data ID of a referential destination are/is stored, and
B) writing means which, when an upper element ID of a writing target element, and link attribute element data in a link attribute with the upper element and an attribute value thereof are given, writes the upper element ID in the upper element data field, the link attribute element data in the link attribute element data field and the attribute value thereof in the attribute value data field,
wherein
C) when an upper element ID of a writing target element, and link attribute element data in a link attribute with the upper element and an element data ID of a referential destination are given, the writing means writes the upper element ID in the upper element data field, the link attribute element data in the link attribute element data field, and the element data ID of the referential destination in the referential element data field.

24. A database management system comprising:
A) storage means including a table which comprises at least the following five fields a1) to a5) and in which each piece of element data comprises one record:
a1) an element data specifying information field in which element data specifying information of given element data is stored,
a2) an upper element data field in which an upper element data specifying information specifying upper element data located superior to the given element data is stored,
a3) a link attribute element data field in which link attribute element data specifying information which is an specifying information specifying link attribute element data representing a link attribute between the given element data and the upper element data is stored, and
a4) an attribute value data field in which attribute value specifying information specifying an attribute value representing a value of the link attribute is stored, and
a5) a referential element data field in which represented data represented by the attribute value specifying information in the attribute value data field or element data specifying information of a referential destination is stored, and
B) writing means which, when upper element specifying information of a writing target element, and link attribute element data in a link attribute with the upper element and an attribute value thereof are given, writes the upper element specifying information in the upper element data field, the link attribute element data in the link attribute element data field and the attribute value thereof in the attribute value data field,
wherein
C) when upper element specifying information of a writing target element, and link attribute element data in a link attribute with the upper element and element data specifying information of a referential destination are given, the writing means writes the upper element specifying information in the upper element data field, the link attribute element data in the link attribute element data field, and the element data specifying information of the referential destination in the referential element data field.

25. The database management system according to Claim 23,
wherein, when narrative clause data comprising inverse predication relationship information which is predication relationship information of the lower individual element data to the upper individual element data are given, the narrative clause data are divided into a plurality of records which are associated, before being stored, by defining the lower individual element data, the upper individual element data and data representing the inverse predication relationship as source case individual element data, goal case individual element data and path case individual element data, respectively, and defining individual element data that connect these individual element data as narrative clause top individual element data and linking the narrative clause top individual element data to the lower individual element data by narrative clause link individual element data.

26. The database management system according to Claim 25,
wherein, when element data referenced by the link attribute element data are an element belonging to a label, an upper element ID, link attribute element data in a link attribute with the upper element and an element data ID of a referential destination are given to the writing means.

27. The database management system according to Claim 23,
wherein, when an upper element ID of a writing target element, and link attribute element data in a link attribute with the upper element and an element data ID of a referential destination are given, the writing means further generates and stores a record having the element data ID of the writing target in the upper element data field, an element data ID representing a weight in the attribute value data field, and an element data ID representing the degree of weight in the link attribute element data field when writing the upper element ID in the upper element data field, the link attribute element data in the link attribute element data field, and the element data ID of the referential destination in the referential element data field.

28. The database management system according to Claim 27,
wherein, when the same element-associated data as the generated element-associated data have been already stored in the table, the writing means increases the degree of weight of element data ID in the attribute value data field of element-associated data associated with the stored element-associated data and having element data ID representing a weight in the link attribute element data field.
